# EUROPEAN PATENT APPLICATION

(11) **EP 4 580 102 A1**
(43) Date of publication of application: **02.07.2025**
(21) Application number: 23845555.4
(22) Date of filing: 25.07.2023
(51) Int. Cl.: H04L 5/00

(54) **METHOD AND DEVICE USED IN NODE FOR WIRELESS COMMUNICATION**

(30) Priority: 29.07.2022 CN 202210909559
(71) Applicant: SHANGHAI LANGBO COMMUNICATION TECHNOLOGY COMPANY LIMITED, Shanghai 200240 (CN)
(72) Inventor: HU, Yang, Shanghai 201206 (CN); ZHANG, Xiaobo, Shanghai 201206 (CN)
(74) Representative: Gunzelmann, Rainer
(86) International application number: PCT/CN2023/109141
(87) International publication number: WO 2024/022346

(57) **Abstract**

The present application discloses a method and device used in a node for wireless communication. A first receiver receives a target RRC signaling set and receives target DCI, and a first transmitter transmits a PUSCH on each cell in a first cell set, wherein the target DCI is used for scheduling the PUSCH that is transmitted on each cell in the first cell set; the target RRC signaling set comprises first RRC signaling, the first RRC signaling is configured for a target cell, and the target cell is one cell in the first cell set; whether the target DCI comprises a target domain set is related to the number of cells comprised in the first cell set; and when the number of cells comprised in the first cell set is 1, whether the target DCI comprises a target domain set depends on the configuration of the first RRC signaling.

## Description

### Technical Field

This application relates to a transmission method and apparatus in a wireless communication system, and in particular, to a radio signal transmission method and apparatus in a wireless communication system supporting a cellular network.

### Related Art

In a 5G NR system, to support eMBB (Enhanced Mobile Broadband, enhanced mobile broadband), a large amount of DCI (Downlink Control Information, downlink control information) signaling needs to be sent to complete scheduling (scheduling) on physical layer channels (for example, a PDSCH (Physical Downlink Shared Channel, physical downlink shared channel) and a PUSCH (Physical Uplink Shared Channel, physical uplink shared channel)). Performing scheduling in a plurality of serving cells (serving cells) by using a single piece of DCI signaling is an effective means to reduce DCI overheads. How to determine a field included in the DCI is an important aspect to be considered.

### SUMMARY

For the foregoing problem, this application discloses a solution. It should be noted that, eMBB is used as an example in the foregoing descriptions, and this application can also be applied to other scenarios such as URLLC (Ultra-Reliable Low-Latency Communications, ultra-reliable low-latency communications), Internet of vehicles, Internet of things, NTN (Non-Terrestrial Networks, non-terrestrial networks), MBS (Multicast Broadcast Services, multicast broadcast services), XR (Extended Reality, extended reality), eMTC (enhanced Machine-Type Communication, enhanced machine-type communication), and full-duplex communication, and achieve similar technical effects. In addition, using a unified solution in different scenarios (including but not limited to eMBB, URLLC, Internet of vehicles, Internet of things, NTN, MBS, XR, and eMTC) further helps to reduce hardware complexity and costs or improve performance. In the absence of conflict, an embodiment in any node of this application and a feature in the embodiment may be applied to any other node. In the absence of conflict, embodiments of this application and features in the embodiments may be combined with each other arbitrarily.

In an embodiment, for explanations of terminology (Terminology) in this application, refer to definitions of the 3GPP technical specification TS36 series.

In an embodiment, for explanations of terminology in this application, refer to definitions of the 3GPP technical specification TS38 series.

In an embodiment, for explanations of terminology in this application, refer to definitions of the 3GPP technical specification TS37 series.

In an embodiment, for explanations of terminology in this application, refer to definitions of standards of the IEEE (Institute of Electrical and Electronics Engineers, Institute of Electrical and Electronics Engineers).

This application discloses a method for a first node used in wireless communication, including:
receiving a target RRC signaling set, and receiving target DCI; and
sending a PUSCH in each cell of a first cell set.

The target DCI is used to schedule the PUSCH sent in each cell of the first cell set. The target RRC signaling set includes first RRC signaling, the first RRC signaling is configured for a target cell, and the target cell is a cell of the first cell set. Whether the target DCI includes a target field set is related to the number of cells included in the first cell set. When the number of cells included in the first cell set is 1, whether the target DCI includes the target field set depends on the configuration of the first RRC signaling. When the number of cells included in the first cell set is greater than 1, whether the target DCI includes the target field set does not depend on the configuration of the first RRC signaling.

In an embodiment, benefits of the method include improving flexibility of configuration or scheduling.

In an embodiment, the benefits of the method include improving uplink transmission performance.

In an embodiment, the benefits of the method include reducing signaling overheads.

In an embodiment, the benefits of the method include good compatibility.

In an embodiment, the benefits of the method include little modification to existing 3GPP specifications.

According to an aspect of this application, in the method,
the first RRC signaling is PUSCH-Config.

According to an aspect of this application, in the method,
the first RRC signaling is PUSCH-ConfigCommon.

According to an aspect of this application, in the method,
the first RRC signaling is PUSCH-ServingCellConfig.

According to an aspect of this application, in the method,
the number of cells included in the first cell set is greater than 1. The target DCI does not include the target field set.

According to an aspect of this application, in the method,
the number of cells included in the first cell set is greater than 1. The target DCI includes the target field set.

According to an aspect of this application, in the method,
the number of cells included in the first cell set is greater than 1. The target RRC signaling set includes second RRC signaling. The second RRC signaling is not configured for the target cell. Whether the target DCI includes the target field set depends on configuration of the second RRC signaling.

According to an aspect of this application, in the method,
the second RRC signaling is configured for a first reference cell, the first reference cell is a cell of the first cell set other than the target cell, and a second field in the target DCI is used to determine the first reference cell.

According to an aspect of this application, in the method,
the number of cells included in the first cell set is greater than 1. The target RRC signaling set includes a target RRC signaling subset, all signaling in the target RRC signaling subset is configured for the target cell, and the first RRC signaling is signaling of the target RRC signaling subset. Whether the target DCI includes the target field set depends on configuration of a piece of RRC signaling in the target RRC signaling subset other than the first RRC signaling.

According to an aspect of this application, in the method,
when the number of cells included in the first cell set is equal to 1 or greater than 1, whether the target DCI includes a second target field set depends on the configuration of the first RRC signaling.

According to an aspect of this application, in the method,
when the number of cells included in the first cell set is 1 or greater than 1, indication of a third target field set in the target DCI depends on a first parameter set, and the configuration of the first RRC signaling is applied to the first parameter set.

According to an aspect of this application, in the method,
the number of cells included in the first cell set is greater than 1. The target RRC signaling set includes a target RRC signaling subset, all signaling in the target RRC signaling subset is configured for the target cell, and the first RRC signaling is signaling of the target RRC signaling subset. Whether the target DCI includes the target field set depends on configuration of a piece of RRC signaling in the target RRC signaling subset other than the first RRC signaling.

According to an aspect of this application, in the method,
the number of cells included in the first cell set is greater than 1. The indication of the third target field set in the target DCI depends on the first parameter set. The target RRC signaling set includes a plurality of pieces of RRC signaling, and the first RRC signaling is one of the plurality of pieces of RRC signaling. The plurality of pieces of RRC signaling are respectively configured for a plurality of cells in the first cell set. Configuration of at least one of the plurality of pieces of RRC signaling is applied to the first parameter set, and the configuration of the plurality of pieces of RRC signaling for the first parameter set is expected to be the same.

This application discloses a method for a second node used in wireless communication, including:
sending a target RRC signaling set, and sending target DCI; and
receiving a PUSCH in each cell of a first cell set.

The target DCI is used to schedule the PUSCH in each cell of the first cell set. The target RRC signaling set includes first RRC signaling, the first RRC signaling is configured for a target cell, and the target cell is a cell of the first cell set. Whether the target DCI includes a target field set is related to the number of cells included in the first cell set. When the number of cells included in the first cell set is 1, whether the target DCI includes the target field set depends on the configuration of the first RRC signaling. When the number of cells included in the first cell set is greater than 1, whether the target DCI includes the target field set does not depend on the configuration of the first RRC signaling.

According to an aspect of this application, in the method,
the first RRC signaling is PUSCH-Config.

According to an aspect of this application, in the method,
the first RRC signaling is PUSCH-ConfigCommon.

According to an aspect of this application, in the method,
the first RRC signaling is PUSCH-ServingCellConfig.

According to an aspect of this application, in the method,
the number of cells included in the first cell set is greater than 1. The target DCI does not include the target field set.

According to an aspect of this application, in the method,
the number of cells included in the first cell set is greater than 1. The target DCI includes the target field set.

According to an aspect of this application, in the method,
the number of cells included in the first cell set is greater than 1. The target RRC signaling set includes second RRC signaling. The second RRC signaling is not configured for the target cell. Whether the target DCI includes the target field set depends on configuration of the second RRC signaling.

According to an aspect of this application, in the method,
the second RRC signaling is configured for a first reference cell, the first reference cell is a cell of the first cell set other than the target cell, and a second field in the target DCI is used to determine the first reference cell.

According to an aspect of this application, in the method,
the number of cells included in the first cell set is greater than 1. The target RRC signaling set includes a target RRC signaling subset, all signaling in the target RRC signaling subset is configured for the target cell, and the first RRC signaling is signaling of the target RRC signaling subset. Whether the target DCI includes the target field set depends on configuration of a piece of RRC signaling in the target RRC signaling subset other than the first RRC signaling.

According to an aspect of this application, in the method,
when the number of cells included in the first cell set is equal to 1 or greater than 1, whether the target DCI includes a second target field set depends on the configuration of the first RRC signaling.

According to an aspect of this application, in the method,
when the number of cells included in the first cell set is 1 or greater than 1, indication of a third target field set in the target DCI depends on a first parameter set, and the configuration of the first RRC signaling is applied to the first parameter set.

According to an aspect of this application, in the method,
the number of cells included in the first cell set is greater than 1. The target RRC signaling set includes a target RRC signaling subset, all signaling in the target RRC signaling subset is configured for the target cell, and the first RRC signaling is signaling of the target RRC signaling subset. Whether the target DCI includes the target field set depends on configuration of a piece of RRC signaling in the target RRC signaling subset other than the first RRC signaling.

According to an aspect of this application, in the method,
the number of cells included in the first cell set is greater than 1. The indication of the third target field set in the target DCI depends on the first parameter set. The target RRC signaling set includes a plurality of pieces of RRC signaling, and the first RRC signaling is one of the plurality of pieces of RRC signaling. The plurality of pieces of RRC signaling are respectively configured for a plurality of cells in the first cell set. Configuration of at least one of the plurality of pieces of RRC signaling is applied to the first parameter set, and the configuration of the plurality of pieces of RRC signaling for the first parameter set is expected to be the same.

This application discloses a first node used in wireless communication, including:
a first receiver, configured to receive a target RRC signaling set, and receive target DCI; and
a first transmitter, configured to send a PUSCH in each cell of a first cell set.

The target DCI is used to schedule the PUSCH sent in each cell of the first cell set. The target RRC signaling set includes first RRC signaling, the first RRC signaling is configured for a target cell, and the target cell is a cell of the first cell set. Whether the target DCI includes a target field set is related to the number of cells included in the first cell set. When the number of cells included in the first cell set is 1, whether the target DCI includes the target field set depends on the configuration of the first RRC signaling. When the number of cells included in the first cell set is greater than 1, whether the target DCI includes the target field set does not depend on the configuration of the first RRC signaling.

This application discloses a second node used in wireless communication, including:
a second transmitter, configured to send a target RRC signaling set, and send target DCI; and
a second receiver, configured to receive a PUSCH in each cell of a first cell set.

The target DCI is used to schedule the PUSCH in each cell of the first cell set. The target RRC signaling set includes first RRC signaling, the first RRC signaling is configured for a target cell, and the target cell is a cell of the first cell set. Whether the target DCI includes a target field set is related to the number of cells included in the first cell set. When the number of cells included in the first cell set is 1, whether the target DCI includes the target field set depends on the configuration of the first RRC signaling. When the number of cells included in the first cell set is greater than 1, whether the target DCI includes the target field set does not depend on the configuration of the first RRC signaling.

### BRIEF DESCRIPTION OF THE DRAWINGS

Other features, objectives, and advantages of this application will become clearer by reading detailed descriptions of non-restrictive embodiments set forth with reference to the following accompanying drawings.
FIG. 1 is a processing flowchart of a first node according to an embodiment of this application;
FIG. 2 is a diagram of a network architecture according to an embodiment of this application;
FIG. 3 is a diagram of radio protocol architectures of a user plane and a control plane according to an embodiment of this application;
FIG. 4 is a diagram of a first communication device and a second communication device according to an embodiment of this application;
FIG. 5 is a signal transmission flowchart according to an embodiment of this application;
FIG. 6 is a diagram of relationships between a target RRC signaling set, a target RRC signaling subset, first RRC signaling, a target cell, target DCI, and a target field set according to an embodiment of this application;
FIG. 7 is a diagram of relationships between a first cell set, target DCI, a second target field set, and first RRC signaling according to an embodiment of this application;
FIG. 8 is a diagram of relationships between a target RRC signaling set, second RRC signaling, a target cell, target DCI, and a target field set according to an embodiment of this application;
FIG. 9 is a diagram of relationships between a target RRC signaling set, second RRC signaling, a first reference cell, and a target cell according to an embodiment of this application;
FIG. 10 is a diagram of relationships between a target RRC signaling set, a plurality of pieces of RRC signaling, first RRC signaling, a first cell set, indication of a third target field set in target DCI, and a first parameter set according to an embodiment of this application;
FIG. 11 is a structural block diagram of a processing apparatus in a first node device according to an embodiment of this application; and
FIG. 12 is a structural block diagram of a processing apparatus in a second node device according to an embodiment of this application.

### DETAILED DESCRIPTION

The following further describes technical solutions of this application in detail with reference to the accompanying drawings. It should be noted that, in the absence of conflict, embodiments of this application and features in the embodiments may be combined with each other arbitrarily.

### Embodiment 1

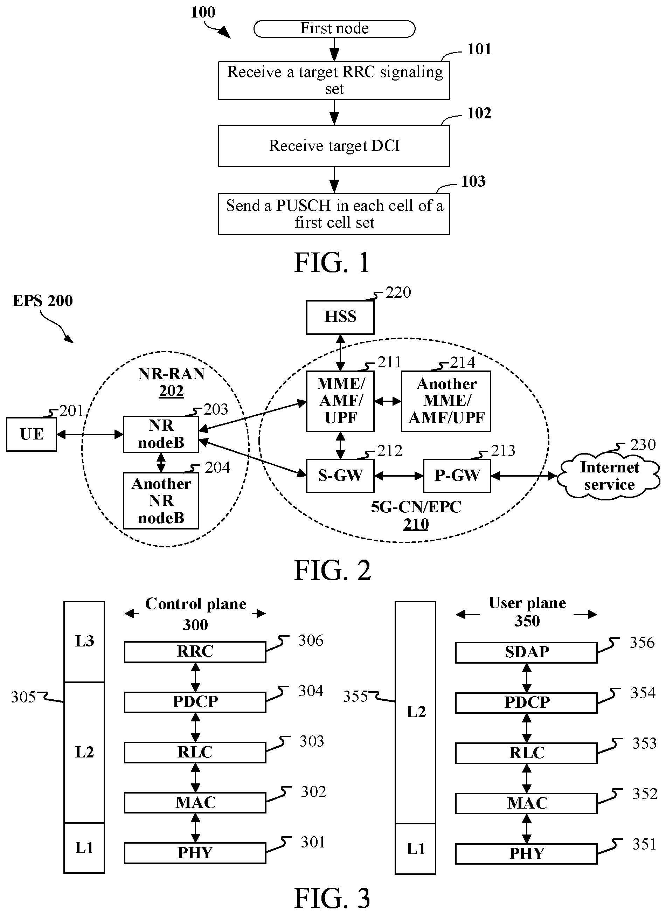

Embodiment 1 illustrates a processing flowchart of a first node according to an embodiment of this application, as shown in FIG. 1.

In Embodiment 1, the first node in this application receives a target RRC signaling set in step 101; receives target DCI in step 102; and sends a PUSCH in each cell of a first cell set in step 103.

In Embodiment 1, the target DCI is used to schedule the PUSCH sent in each cell of the first cell set. The target RRC signaling set includes first RRC signaling, the first RRC signaling is configured for a target cell, and the target cell is a cell of the first cell set. Whether the target DCI includes a target field set is related to the number of cells included in the first cell set. When the number of cells included in the first cell set is 1, whether the target DCI includes the target field set depends on the configuration of the first RRC signaling. When the number of cells included in the first cell set is greater than 1, whether the target DCI includes the target field set does not depend on the configuration of the first RRC signaling.

In an embodiment, the target RRC signaling set includes at least one piece of RRC signaling.

In an embodiment, the target RRC signaling set includes at least one IE (Information element, information element).

In an embodiment, the target RRC signaling set includes at least one field (field) in at least one IE (Information element, information element).

In an embodiment, a piece of RRC signaling in the target RRC signaling set includes at least a part of ServingCellConfig.

In an embodiment, a piece of RRC signaling in the target RRC signaling set includes at least a part of BWP-Uplink.

In an embodiment, a piece of RRC signaling in the target RRC signaling set includes at least a part of BWP-UplinkCommon.

In an embodiment, a piece of RRC signaling in the target RRC signaling set includes at least a part of BWP-UplinkDedicated.

In an embodiment, a piece of RRC signaling in the target RRC signaling set includes at least a part of PUSCH-Config.

In an embodiment, a piece of RRC signaling in the target RRC signaling set includes at least a part of PUSCH-ConfigCommon.

In an embodiment, a piece of RRC signaling in the target RRC signaling set includes at least a part of PUSCH-ServingCellConfig.

In an embodiment, the first RRC signaling includes at least one IE (Information element, information element).

In an embodiment, the first RRC signaling includes at least one field (field) in at least one IE (Information element, information element).

In an embodiment, the first RRC signaling includes at least a part of ServingCellConfig.

In an embodiment, the first RRC signaling includes at least a part of BWP-Uplink.

In an embodiment, the first RRC signaling includes at least a part of BWP-UplinkCommon.

In an embodiment, the first RRC signaling includes at least a part of BWP-UplinkDedicated.

In an embodiment, the first RRC signaling includes at least a part of PUSCH-Config.

In an embodiment, the first RRC signaling includes at least a part of PUSCH-ConfigCommon.

In an embodiment, the first RRC signaling includes at least a part of PUSCH-ServingCellConfig.

In an embodiment, when a piece of RRC signaling belongs to a ServingCellConfig IE for configuring a cell, the piece of RRC signaling is configured for the cell.

In an embodiment, when a piece of RRC signaling belongs to a BWP-Uplink IE for configuring a cell, the piece of RRC signaling is configured for the cell.

In an embodiment, when a piece of RRC signaling belongs to a BWP-UplinkCommon IE for configuring a cell, the piece of RRC signaling is configured for the cell.

In an embodiment, when a piece of RRC signaling belongs to a BWP-UplinkDedicated IE for configuring a cell, the piece of RRC signaling is configured for the cell.

In an embodiment, when a piece of RRC signaling is configured for a BWP (Bandwidth part, bandwidth part) of a cell, the piece of RRC signaling is configured for the cell.

In an embodiment, in this application, that a piece of RRC signaling is configured for a cell includes the following meaning: the piece of RRC signaling is configured for PUSCH sending in the cell.

In an embodiment, the target DCI includes physical layer signaling.

In an embodiment, the target DCI includes a piece of DCI (Downlink control information, downlink control information) signaling.

In an embodiment, the target DCI is a DCI format (format).

In an embodiment, the target DCI includes at least one field (field) in a DCI format (format).

In an embodiment, the first cell set includes at least one cell.

In an embodiment, the expression of sending the PUSCH in each cell of the first cell set includes: sending a signal on at least one PUSCH in each cell of the first cell set.

In an embodiment, the target DCI indicates at least one of a time domain resource occupied by, a frequency domain resource occupied by, an MCS (Modulation and coding scheme, modulation and coding scheme) used for, or precoding used for the PUSCH (Physical uplink shared channel, physical uplink shared channel) in each cell of the first cell set.

In an embodiment, based on scheduling of the target DCI, the first node sends at least one PUSCH in each cell of the first cell set.

In a sub-embodiment of the foregoing embodiment, the first cell set includes a cell in which the first node sends a plurality of PUSCHs scheduled by using the target DCI.

In an embodiment, based on scheduling of the target DCI, the first node sends a signal on at least one PUSCH in each cell of the first cell set.

In an embodiment, based on scheduling of the target DCI, the first node sends at least one of a transport block (Transport Block(s), TB(s)) or a CSI (Channel state information, channel state information) report (report) on a PUSCH in each cell of the first cell set.

In an embodiment, before a bit block including a transport block or a CSI report bit is sent on the PUSCH, the bit block sequentially undergoes at least some of CRC attachment (CRC attachment), code block segmentation (Code block segmentation), code block CRC attachment, channel coding (Channel coding), rate matching (Rate matching), code block concatenation (Code block concatenation), scrambling (Scrambling), modulation (Modulation), layer mapping (Layer mapping), transform precoding (Transform precoding), precoding (Precoding), mapping to virtual resource blocks (Mapping to virtual resource blocks), mapping from virtual to physical resource blocks (Mapping from virtual to physical resource blocks), multi-carrier symbol generation, or modulation and up-conversion.

In an embodiment, before a bit block including a transport block or a CSI report bit is sent on the PUSCH, the bit block sequentially undergoes at least some of CRC attachment (CRC attachment), Code block segmentation (code block segmentation), code block CRC attachment, Channel coding (channel coding), rate matching (Rate matching), code block concatenation (Code block concatenation), scrambling (Scrambling), modulation (Modulation), layer mapping (Layer mapping), transform precoding (Transform precoding), precoding (Precoding), mapping to virtual resource blocks (Mapping to virtual resource blocks), or mapping from virtual to physical resource blocks (Mapping from virtual to physical resource blocks).

In an embodiment, the target field set includes only one field.

In an embodiment, the target field set includes a plurality of fields.

In an embodiment, a field in the target field set includes at least one bit.

In an embodiment, a field in the target field set includes a non-negative integer number of bits.

In an embodiment, the target field set includes a frequency domain resource assignment (frequency domain resource assignment) field.

In an embodiment, the target field set includes a time domain resource assignment (time domain resource assignment) field.

In an embodiment, the target field set includes a frequency hopping flag (frequency hopping flag) field.

In an embodiment, the target field set includes a modulation and coding scheme (modulation and coding scheme) field.

In an embodiment, the target field set includes a HARQ process number (HARQ process number) field.

In an embodiment, the target field set includes a second TPC command for scheduled PUSCH (Second TPC command for scheduled PUSCH) field.

In an embodiment, the target field set includes an SRS resource indicator (SRS resource indicator) field.

In an embodiment, the target field set includes an SRS resource set indicator (SRS resource set indicator) field.

In an embodiment, the target field set includes a second SRS resource indicator (Second SRS resource indicator) field.

In an embodiment, the target field set includes a precoding information and number of layers (Precoding information and number of layers) field.

In an embodiment, the target field set includes a second precoding information (Second Precoding information) field.

In an embodiment, the target field set includes an antenna port (Antenna ports) field.

In an embodiment, the target field set includes a CSI request (CSI request) field.

In an embodiment, the target field set includes an SRS request (SRS request) field.

In an embodiment, the target field set includes an SRS offset indicator (SRS offset indicator) field.

In an embodiment, the first RRC signaling includes SRS-Config.

In an embodiment, the first RRC signaling is SRS-Config.

In an embodiment, a name of the first RRC signaling includes SRS-Config.

In an embodiment, the first RRC signaling includes AvailableSlotOffset.

In an embodiment, the first RRC signaling is AvailableSlotOffset.

In an embodiment, the name of the first RRC signaling includes AvailableSlotOffset.

In an embodiment, the target field set includes a CBG transmission information (CBG transmission information (CBGTI)) field.

In an embodiment, the target field set includes a PTRS-DMRS association (PTRS-DMRS association) field.

In an embodiment, the target field set includes a second PTRS-DMRS association (Second PTRS-DMRS association) field.

In an embodiment, the target field set includes a beta offset indicator (beta_offset indicator) field.

In an embodiment, the target field set includes a DMRS sequence initialization (DMRS sequence initialization) field.

In an embodiment, the target field set includes a UL-SCH indicator (UL-SCH indicator) field.

In an embodiment, the target field set includes a ChannelAccess-CPext-CAPC field.

In an embodiment, the target field set includes an open-loop power control parameter set indication (Open-loop power control parameter set indication) field.

In an embodiment, the target field set includes an SCell dormancy indication (SCell dormancy indication) field.

In an embodiment, the target field set includes a priority indicator (Priority indicator) field.

In an embodiment, the target field set includes an invalid symbol pattern indicator (Invalid symbol pattern indicator) field.

In an embodiment, the target field set includes a minimum applicable scheduling offset indicator (Minimum applicable scheduling offset indicator) field.

In an embodiment, the target field set includes a PDCCH monitoring adaptation indication (PDCCH monitoring adaptation indication) field.

In an embodiment, a field in the target field set indicates frequency domain resource assignment.

In an embodiment, a field in the target field set indicates time domain resource assignment.

In an embodiment, a field in the target field set indicates whether frequency hopping is performed.

In an embodiment, a field in the target field set indicates an MCS (Modulation and coding scheme, modulation and coding scheme).

In an embodiment, a field in the target field set indicates a HARQ (Hybrid automatic repeat request, hybrid automatic repeat request) process number.

In an embodiment, a field in the target field set is used to determine transmit power of the PUSCH.

In an embodiment, a field in the target field set indicates an SRS (Sounding reference signal, sounding reference signal) resource.

In an embodiment, a field in the target field set indicates an SRS resource set.

In an embodiment, a field in the target field set indicates at least one of precoding information or the number of transport layers.

In an embodiment, a field in the target field set indicates an antenna port (Antenna ports).

In an embodiment, a field in the target field set indicates related information of a CSI report.

In an embodiment, a field in the target field set indicates CBG (Code block group, code block group) transmission information.

In an embodiment, a field in the target field set indicates an association between a PTRS and a DMRS.

In an embodiment, a field in the target field set indicates a beta offset (beta_offset) value.

In an embodiment, a value of a field in the target field set is used to generate a DMRS (Demodulation reference signal, demodulation reference signal) sequence.

In an embodiment, a field in the target field set indicates information about SCell dormancy.

In an embodiment, a field in the target field set indicates a transmit waveform of the PUSCH.

In an embodiment, a field in the target field set indicates whether to enable transform precoding (Transform precoding).

In an embodiment, a field in the target field set is used to trigger an aperiodic (aperiodic) SRS resource set.

In an embodiment, a field in the target field set indicates an available slot offset (available slot offset).

In an embodiment, a field in the target field set indicates whether a UL-SCH is transmitted on the PUSCH.

In an embodiment, a field in the target field set indicates an open-loop power control parameter set.

In an embodiment, a field in the target field set indicates a priority.

In an embodiment, a field in the target field set indicates an invalid symbol pattern. In an embodiment, a field in the target field set indicates a minimum applicable scheduling offset.

In an embodiment, a field in the target field set indicates skipping (skipping) of PDCCH monitoring.

In an embodiment, the cell in this application is a serving cell (serving cell).

In an embodiment, the cell in this application is a configurable cell.

In an embodiment, when the target DCI includes the target field set, the target field set in the target DCI is applied to the first cell set.

In an embodiment, when the target DCI includes the target field set, the target field set in the target DCI is applied to each cell of the first cell set.

In an embodiment, when the target DCI includes the target field set, the target field set in the target DCI is applied to PUSCH sending in each cell of the first cell set.

In an embodiment, when the target DCI includes the target field set, the target field set in the target DCI is applied to sending of a reference signal (Reference signal(s)) corresponding to the PUSCH in each cell of the first cell set.

In an embodiment, the expression that the target field set in the target DCI is applied to the first cell set includes: the target field set in the target DCI is used for PUSCH transmission in each cell of the first cell set.

In an embodiment, the expression that the target field set in the target DCI is applied to the first cell set includes: the target field set in the target DCI includes scheduling information for the PUSCH sent in the first cell set.

In an embodiment, the expression that the target field set in the target DCI is applied to the first cell set includes: the target field set in the target DCI includes related indication information of PUSCHs sent in all the cells of the first cell set.

In an embodiment, the expression that the target field set in the target DCI is applied to the first cell set includes: the target field set in the target DCI includes scheduling information for PUSCHs sent in all the cells of the first cell set.

In an embodiment, the expression that the target field set in the target DCI is applied to the first cell set includes: the target field set in the target DCI includes indication information for all the cells of the first cell set.

In an embodiment, the expression that the target field set in the target DCI is applied to the first cell set includes: the target field set in the target DCI includes indication information used to send the PUSCH in the first cell set.

In an embodiment, the expression that the target field set in the target DCI is applied to the first cell set includes: each field of the target field set in the target DCI includes indication information for all the cells of the first cell set.

In an embodiment, the expression that the target field set in the target DCI is applied to the first cell set includes: each field of the target field set in the target DCI includes indication information for PUSCHs sent in all the cells of the first cell set.

In an embodiment, the first RRC signaling is used to determine the number of repetitions for data (Number of repetitions for data).

In an embodiment, the first RRC signaling is used to determine a transmission scheme (Transmission scheme) of the PUSCH.

In an embodiment, the transmission scheme is one of codebook (codebook)-based transmission, non-codebook (non-codebook)-based transmission, or single-antenna port transmission.

In an embodiment, the transmission scheme is one of codebook (codebook)-based transmission or non-codebook (non-codebook)-based transmission.

In an embodiment, the first RRC signaling is used to determine DMRS configuration for PUSCH transmission using a PUSCH mapping type A.

In an embodiment, the first RRC signaling is used to determine DMRS configuration for PUSCH transmission using a PUSCH mapping type B.

In an embodiment, the first RRC signaling is used to determine power control of the PUSCH.

In an embodiment, the first RRC signaling is used to determine a frequency hopping pattern.

In an embodiment, the first RRC signaling is used to determine a frequency hopping offset (frequency hopping offset(s)) set.

In an embodiment, the first RRC signaling is used to determine a resource allocation type.

In an embodiment, the first RRC signaling is used to determine a frequency domain resource allocation type.

In an embodiment, the first RRC signaling is used to determine a list of time domain allocations for timing of UL assignment to UL data (List of time domain allocations for timing of UL assignment to UL data).

In an embodiment, the first RRC signaling is used to determine an MCS table that is used for the PUSCH without a transformer precoder.

In an embodiment, the first RRC signaling is used to determine an MCS table that is used for the PUSCH with a transformer precoder.

In an embodiment, the first RRC signaling is used to determine whether transform precoding is enabled.

In an embodiment, the first RRC signaling is used to determine a specific choice for a transformer precoder (transformer precoder) of the PUSCH.

In an embodiment, the first RRC signaling is used to determine a subset of PMIs addressed by TPMI (Subset of PMIs addressed by TPMI).

In an embodiment, the first RRC signaling is used to determine a subset of PMIs addressed by TRIs (Subset of PMIs Addressed by TRIs).

In an embodiment, the first RRC signaling is used to determine a size of an RBG that is selected between configuration 1 and configuration 2 for the PUSCH.

In an embodiment, the first RRC signaling is used to determine a beta offset set.

In an embodiment, the first RRC signaling is used to determine whether pi/2-BPSK modulation with transform precoding is enabled.

In an embodiment, the first RRC signaling indicates the number of repetitions for data (Number of repetitions for data).

In an embodiment, the first RRC signaling indicates a transmission scheme (Transmission scheme) of the PUSCH.

In an embodiment, the transmission scheme is one of codebook (codebook)-based transmission, non-codebook (non-codebook)-based transmission, or single-antenna port transmission.

In an embodiment, the transmission scheme is one of codebook (codebook)-based transmission or non-codebook (non-codebook)-based transmission.

In an embodiment, the first RRC signaling indicates DMRS configuration for PUSCH transmission using a PUSCH mapping type A.

In an embodiment, the first RRC signaling indicates DMRS configuration for PUSCH transmission using a PUSCH mapping type B.

In an embodiment, the first RRC signaling indicates power control of the PUSCH.

In an embodiment, the first RRC signaling indicates a frequency hopping pattern.

In an embodiment, the name of the first RRC signaling includes txConfig, and the target field set includes a precoding information and number of layers field.

In an embodiment, the first RRC signaling is txConfig, and the target field set includes a precoding information and number of layers field.

In an embodiment, the first RRC signaling indicates a transmission scheme of the PUSCH, and the target field set includes a precoding information and number of layers field.

In an embodiment, the first RRC signaling is txConfig, and the target field set includes a precoding information and number of layers field.

In an embodiment, the name of the first RRC signaling includes transformPrecoder, and the target field set includes a PTRS-DMRS association field.

In an embodiment, the first RRC signaling is transformPrecoder, and the target field set includes a PTRS-DMRS association field.

In an embodiment, the first RRC signaling indicates whether transform precoding is enabled, and the target field set includes a PTRS-DMRS association field.

In an embodiment, the name of the first RRC signaling includes transformPrecoder, and the target field set includes a DMRS sequence initialization field.

In an embodiment, the first RRC signaling is transformPrecoder, and the target field set includes a DMRS sequence initialization field.

In an embodiment, the first RRC signaling indicates whether transform precoding is enabled, and the target field set includes a DMRS sequence initialization field.

In an embodiment, the first RRC signaling indicates a frequency hopping offset (frequency hopping offset(s)) set.

In an embodiment, the first RRC signaling indicates a resource allocation type.

In an embodiment, the first RRC signaling indicates a frequency domain resource allocation type.

In an embodiment, the first RRC signaling indicates a list of time domain allocations for timing of UL assignment to UL data (List of time domain allocations for timing of UL assignment to UL data).

In an embodiment, the first RRC signaling indicates an MCS table that is used for the PUSCH without a transformer precoder.

In an embodiment, the first RRC signaling indicates an MCS table that is used for the PUSCH with a transformer precoder.

In an embodiment, the first RRC signaling indicates whether transform precoding is enabled.

In an embodiment, the first RRC signaling indicates a specific choice for a transformer precoder (transformer precoder) of the PUSCH.

In an embodiment, the first RRC signaling indicates a subset of PMIs addressed by TPMI (Subset of PMIs addressed by TPMI).

In an embodiment, the first RRC signaling indicates a subset of PMIs addressed by TRIs (Subset of PMIs Addressed by TRIs).

In an embodiment, the first RRC signaling indicates a size of an RBG that is selected between configuration 1 and configuration 2 for the PUSCH.

In an embodiment, the first RRC signaling indicates a beta offset set.

In an embodiment, the first RRC signaling indicates whether pi/2-BPSK modulation with transform precoding is enabled.

In an embodiment, the first RRC signaling indicates whether there is an antenna port (Antenna ports) field.

In an embodiment, the first RRC signaling indicates whether to enable PUSCH repetitions counted based on an available slot.

In an embodiment, the first RRC signaling indicates a set of beta offsets configured for HARQ-ACK multiplexing onto PUSCHs with different priorities.

In an embodiment, the first RRC signaling indicates information about DMRS bundling (bundling) for the PUSCH.

In an embodiment, the first RRC signaling indicates whether there is a DMRS sequence initialization (DMRS Sequence Initialization) field.

In an embodiment, the first RRC signaling indicates a size of a HARQ process number (HARQ process number) field.

In an embodiment, the first RRC signaling indicates an invalid symbol pattern (pattern) for a PUSCH transmission type B.

In an embodiment, the first RRC signaling indicates whether to follow a cyclic mapping pattern (Cyclic mapping pattern) or a sequential mapping pattern (Sequential mapping pattern) when two SRS resource sets are configured for PUSCH transmission and a PUSCH transmission occasion (PUSCH transmission occasions) is associated with the two SRS resource sets.

In an embodiment, the first RRC signaling indicates a list of minimum K2 values.

In an embodiment, the first RRC signaling indicates a size of a redundancy version (Redundancy version) field.

In an embodiment, the first RRC signaling indicates the number of symbols invalid to a PUSCH repetition type B after the last semi-static (semi-static) DL (Downlink, downlink) symbol.

In an embodiment, the first RRC signaling indicates whether there is a priority indicator (priority indicator) field.

In an embodiment, the first RRC signaling indicates whether to follow behavior of a PUSCH repetition type (repetition type) A or behavior of a PUSCH repetition type B.

In an embodiment, the first RRC signaling indicates whether there is a second TPC field (second TPC field).

In an embodiment, the first RRC signaling indicates an RV offset configured for a start RV (Redundancy version, redundancy version) of the first repetition (the first actual repetition (actual repetition) in the PUSCH repetition type B) corresponding to a second SRS resource set for the PUSCH.

In an embodiment, the first RRC signaling indicates a combined list of a cyclic prefix extension, a channel access priority class (channel access priority class, CAPC), and a UL (Uplink, uplink) channel access type.

In an embodiment, the first RRC signaling indicates a UL full power transmission mode (UL full power transmission mode).

In an embodiment, the first RRC signaling indicates a scheduling granularity indicated by a start point and a length applicable to a resource allocation type 1.

In an embodiment, the first RRC signaling is used to determine whether there is an antenna port (Antenna ports) field.

In an embodiment, the first RRC signaling is used to determine whether to enable PUSCH repetitions counted based on an available slot.

In an embodiment, the first RRC signaling is used to determine a set of beta offsets configured for HARQ-ACK multiplexing onto PUSCHs with different priorities.

In an embodiment, the first RRC signaling is used to determine information about DMRS bundling (bundling) for the PUSCH.

In an embodiment, the first RRC signaling is used to determine whether there is a DMRS sequence initialization (DMRS Sequence Initialization) field.

In an embodiment, the first RRC signaling is used to determine a size of a HARQ process number (HARQ process number) field.

In an embodiment, the first RRC signaling is used to determine an invalid symbol pattern (pattern) for a PUSCH transmission type B.

In an embodiment, the first RRC signaling is used to determine whether to follow a cyclic mapping pattern (Cyclic mapping pattern) or a sequential mapping pattern (Sequential mapping pattern) when two SRS resource sets are configured for PUSCH transmission and a PUSCH transmission occasion (PUSCH transmission occasions) is associated with the two SRS resource sets.

In an embodiment, the first RRC signaling is used to determine a list of minimum K2 values.

In an embodiment, the first RRC signaling is used to determine a size of a redundancy version (Redundancy version) field.

In an embodiment, the first RRC signaling is used to determine the number of symbols invalid to a PUSCH repetition type B after the last semi-static (semi-static) DL (Downlink, downlink) symbol.

In an embodiment, the first RRC signaling is used to determine whether there is a priority indicator (priority indicator) field.

In an embodiment, the first RRC signaling is used to determine whether to follow behavior of a PUSCH repetition type (repetition type) A or behavior of a PUSCH repetition type B.

In an embodiment, the first RRC signaling is used to determine whether there is a second TPC field (second TPC field).

In an embodiment, the first RRC signaling is used to determine an RV offset configured for a start RV (Redundancy version, redundancy version) of the first repetition (the first actual repetition (actual repetition) in the PUSCH repetition type B) corresponding to a second SRS resource set for the PUSCH.

In an embodiment, the first RRC signaling is used to determine a combined list of a cyclic prefix extension, a channel access priority class (channel access priority class, CAPC), and a UL (Uplink, uplink) channel access type.

In an embodiment, the first RRC signaling is used to determine a UL full power transmission mode (UL full power transmission mode).

In an embodiment, the first RRC signaling is used to determine a scheduling granularity indicated by a start point and a length applicable to a resource allocation type 1.

In an embodiment, the first RRC signaling includes pusch-AggregationFactor.

In an embodiment, the first RRC signaling includes txConfig.

In an embodiment, the first RRC signaling includes dmrs-UplinkForPUSCH-MappingTypeA.

In an embodiment, the first RRC signaling includes dmrs-UplinkForPUSCH-MappingTypeB.

In an embodiment, the first RRC signaling includes pusch-PowerControl.

In an embodiment, the first RRC signaling includes frequencyHopping.

In an embodiment, the first RRC signaling includes frequencyHoppingOffsetLists.

In an embodiment, the first RRC signaling includes resourceAllocation.

In an embodiment, the first RRC signaling includes pusch-TimeDomainAllocationList.

In an embodiment, the first RRC signaling includes mcs-Table.

In an embodiment, the first RRC signaling includes mcs-TableTransformPrecoder.

In an embodiment, the first RRC signaling includes transformPrecoder.

In an embodiment, the first RRC signaling includes codebookSubset.

In an embodiment, the first RRC signaling includes maxRank.

In an embodiment, the first RRC signaling includes rbg-Size.

In an embodiment, the first RRC signaling includes uci-OnPUSCH.

In an embodiment, the first RRC signaling includes tp-pi2BPSK.

In an embodiment, the first RRC signaling is pusch-AggregationFactor.

In an embodiment, the first RRC signaling is txConfig.

In an embodiment, the first RRC signaling is dmrs-UplinkForPUSCH-MappingTypeA.

In an embodiment, the first RRC signaling is dmrs-UplinkForPUSCH-MappingTypeB.

In an embodiment, the first RRC signaling is pusch-PowerControl.

In an embodiment, the first RRC signaling is frequencyHopping.

In an embodiment, the first RRC signaling is frequencyHoppingOffsetLists.

In an embodiment, the first RRC signaling is resourceAllocation.

In an embodiment, the first RRC signaling is pusch-TimeDomainAllocationList.

In an embodiment, the first RRC signaling is mcs-Table.

In an embodiment, the first RRC signaling is mcs-TableTransformPrecoder.

In an embodiment, the first RRC signaling is transformPrecoder.

In an embodiment, the first RRC signaling is codebookSubset.

In an embodiment, the first RRC signaling is maxRank.

In an embodiment, the first RRC signaling is rbg-Size.

In an embodiment, the first RRC signaling is uci-OnPUSCH.

In an embodiment, the first RRC signaling is tp-pi2BPSK.

In an embodiment, the name of the first RRC signaling includes pusch-AggregationFactor.

In an embodiment, the name of the first RRC signaling includes txConfig.

In an embodiment, the name of the first RRC signaling includes dmrs-UplinkForPUSCH-MappingTypeA.

In an embodiment, the name of the first RRC signaling includes dmrs-UplinkForPUSCH-MappingTypeB.

In an embodiment, the name of the first RRC signaling includes pusch-PowerControl.

In an embodiment, the name of the first RRC signaling includes frequencyHopping.

In an embodiment, the name of the first RRC signaling includes frequencyHoppingOffsetLists.

In an embodiment, the name of the first RRC signaling includes resourceAllocation.

In an embodiment, the name of the first RRC signaling includes pusch-TimeDomainAllocationList.

In an embodiment, the name of the first RRC signaling includes mcs-Table.

In an embodiment, the name of the first RRC signaling includes mcs-TableTransformPrecoder.

In an embodiment, the name of the first RRC signaling includes transformPrecoder.

In an embodiment, the name of the first RRC signaling includes codebookSubset.

In an embodiment, the name of the first RRC signaling includes maxRank.

In an embodiment, the name of the first RRC signaling includes rbg-Size.

In an embodiment, the name of the first RRC signaling includes uci-OnPUSCH.

In an embodiment, the name of the first RRC signaling includes tp-pi2BPSK.

In an embodiment, the name of the first RRC signaling includes minimumSchedulingOffsetK2.

In an embodiment, the name of the first RRC signaling includes ul-AccessConfigList.

In an embodiment, the name of the first RRC signaling includes harq-ProcessNumberSize.

In an embodiment, the name of the first RRC signaling includes dmrs-SequenceInitialization.

In an embodiment, the name of the first RRC signaling includes numberOfBitsForRV.

In an embodiment, the name of the first RRC signaling includes antennaPortsFieldPresence.

In an embodiment, the name of the first RRC signaling includes invalidSymbolPatternIndicator.

In an embodiment, the name of the first RRC signaling includes priorityIndicator.

In an embodiment, the name of the first RRC signaling includes pusch-RepTypeIndicator.

In an embodiment, the name of the first RRC signaling includes resourceAllocationType1Granularity.

In an embodiment, the name of the first RRC signaling includes ul-FullPowerTransmission.

In an embodiment, the name of the first RRC signaling includes numberOfInvalidSymbolsForDL-UL-Switching.

In an embodiment, the name of the first RRC signaling includes betaOffsetsCrossPri0.

In an embodiment, the name of the first RRC signaling includes betaOffsetsCrossPri1.

In an embodiment, the name of the first RRC signaling includes mappingPattern.

In an embodiment, the name of the first RRC signaling includes secondTPCField.

In an embodiment, the name of the first RRC signaling includes sequenceOffsetForRV.

In an embodiment, the name of the first RRC signaling includes availableSlotCounting.

In an embodiment, the name of the first RRC signaling includes dmrs-BundlingPUSCH-Config.

In an embodiment, the name of the first RRC signaling includes -r17.

In an embodiment, the name of the first RRC signaling includes -r16.

In an embodiment, the first RRC signaling is used to determine a maximum number of CBGs of each TB.

In an embodiment, the first RRC signaling is used to determine whether to enable CBG-based transmission.

In an embodiment, the first RRC signaling is used to determine a maximum MIMO (Multiple-Input Multiple-Output, multiple-input multiple-output) layer for the PUSCH in all UL BWPs (Bandwidth part, bandwidth part) corresponding to the cell.

In an embodiment, the first RRC signaling is used to determine the number of HARQ processes used on the PUSCH of the cell.

In an embodiment, the first RRC signaling is used to determine whether to enable configuration of an advanced processing time capability 2 (advanced processing time capability 2) for the PUSCH.

In an embodiment, the first RRC signaling is used to determine whether to enable limited buffer rate-matching (Limited buffer rate-matching, LBRM).

In an embodiment, the first RRC signaling is used to determine a HARQ mode for a HARQ process ID.

In an embodiment, the first RRC signaling is used to determine whether to enable group hopping (group hopping) for RMRS transmission with transform precoding.

In an embodiment, the first RRC signaling is used to determine a power offset (offset) between msg3 and RACH (Random Access Channel(s), random access channel) preamble (preamble) transmission.

In an embodiment, the first RRC signaling is used to determine a P0 value for a PUSCH (other than msg3) with grant (grant).

In an embodiment, the first RRC signaling indicates a maximum number of CBGs of each TB.

In an embodiment, the first RRC signaling indicates whether to enable CBG-based transmission.

In an embodiment, the first RRC signaling indicates a maximum MIMO (Multiple-Input Multiple-Output, multiple-input multiple-output) layer for the PUSCH in all UL BWPs (Bandwidth part, bandwidth part) corresponding to the cell.

In an embodiment, the first RRC signaling indicates the number of HARQ processes used on the PUSCH of the cell.

In an embodiment, the first RRC signaling indicates whether to enable configuration of an advanced processing time capability 2 (advanced processing time capability 2) for the PUSCH.

In an embodiment, the first RRC signaling indicates whether to enable limited buffer rate-matching (Limited buffer rate-matching, LBRM).

In an embodiment, the first RRC signaling indicates a HARQ mode for a HARQ process ID.

In an embodiment, the first RRC signaling indicates whether to enable group hopping (group hopping) for RMRS transmission with transform precoding.

In an embodiment, the first RRC signaling indicates a power offset (offset) between msg3 and RACH (Random Access Channel(s), random access channel) preamble (preamble) transmission.

In an embodiment, the first RRC signaling indicates a P0 value for a PUSCH (other than msg3) with grant (grant).

In an embodiment, the first RRC signaling is codeBlockGroupTransmission.

In an embodiment, the first RRC signaling is rateMatching.

In an embodiment, the first RRC signaling is xOverhead.

In an embodiment, the first RRC signaling is maxMIMO-Layers.

In an embodiment, the first RRC signaling is processingType2Enabled.

In an embodiment, the first RRC signaling is nrofHARQ-ProcessesForPUSCH-r17.

In an embodiment, the first RRC signaling is uplinkHARQ-mode-r17.

In an embodiment, the first RRC signaling is groupHoppingEnabledTransformPrecoding.

In an embodiment, the first RRC signaling is msg3-DeltaPreamble.

In an embodiment, the first RRC signaling is p0-NominalWithGrant.

In an embodiment, the name of the first RRC signaling includes codeBlockGroupTransmission.

In an embodiment, the name of the first RRC signaling includes rateMatching.

In an embodiment, the name of the first RRC signaling includes xOverhead.

In an embodiment, the name of the first RRC signaling includes maxMIMO-Layers.

In an embodiment, the name of the first RRC signaling includes processingType2Enabled.

In an embodiment, the name of the first RRC signaling includes nrofHARQ-ProcessesForPUSCH.

In an embodiment, the name of the first RRC signaling includes uplinkHARQ-mode.

In an embodiment, the name of the first RRC signaling includes groupHoppingEnabledTransformPrecoding.

In an embodiment, the name of the first RRC signaling includes msg3-DeltaPreamble.

In an embodiment, the name of the first RRC signaling includes p0-NominalWithGrant.

In an embodiment, a size of a field is the number of bits included in this field.

In an embodiment, when the target DCI includes the target field set, the target field set in the target DCI includes all fields in the target DCI.

In an embodiment, when the target DCI includes the target field set, the target field set in the target DCI includes only a part of fields in the target DCI.

In an embodiment, the expression that whether the target DCI includes the target field set is related to the number of cells included in the first cell set includes:
When the number of cells included in the first cell set is 1, whether the target DCI includes the target field set depends on the configuration of the first RRC signaling. When the number of cells included in the first cell set is greater than 1, whether the target DCI includes the target field set does not depend on the configuration of the first RRC signaling.

In an embodiment, the expression that whether the target DCI includes the target field set is related to the number of cells included in the first cell set includes: the number of cells included in the first cell set is used to determine whether the target DCI includes the target field set.

In an embodiment, the expression that whether the target DCI includes the target field set is related to the number of cells included in the first cell set includes: whether the configuration of the first RRC signaling is used to determine whether the target DCI includes the target field set is related to the number of cells included in the first cell set.

In an embodiment, the expression of depending on the configuration of the first RRC signaling includes: being determined based on the configuration of the first RRC signaling.

In an embodiment, the expression of depending on the configuration of the first RRC signaling includes: being determined based on indication of the configuration of the first RRC signaling.

In an embodiment, the expression that whether the target DCI includes the target field set depends on the configuration of the first RRC signaling includes: whether the target DCI includes each field of the target field set depends on the configuration of the first RRC signaling.

In an embodiment, the expression that whether the target DCI includes the target field set depends on the configuration of the first RRC signaling includes: the first RRC signaling is used to determine whether the target DCI includes the target field set.

In an embodiment, the expression that whether the target DCI includes the target field set depends on the configuration of the first RRC signaling includes: the first RRC signaling indicates whether the target DCI includes the target field set.

In an embodiment, the expression that whether the target DCI includes the target field set depends on the configuration of the first RRC signaling includes: the first RRC signaling is used to determine whether the target DCI includes each field of the target field set.

In an embodiment, the expression that whether the target DCI includes the target field set depends on the configuration of the first RRC signaling includes: the first RRC signaling indicates whether the target DCI includes each field of the target field set.

In an embodiment, the expression that whether the target DCI includes the target field set depends on the configuration of the first RRC signaling includes: for a field in the target field set, at least one field in the first RRC signaling is used to determine whether the target DCI includes this field in the target field set, or whether there is a field in the first RRC signaling is used to determine whether the target DCI includes this field in the target field set.

In an embodiment, the expression that whether the target DCI includes the target field set depends on the configuration of the first RRC signaling includes: for a field in the target field set, at least one field in the first RRC signaling indicates whether the target DCI includes this field in the target field set, or whether there is a field in the first RRC signaling indicates whether the target DCI includes this field in the target field set.

In an embodiment, when whether there is a third field in the first RRC signaling is used to determine whether the target DCI includes a field in the target field set, {when the third field is present in the first RRC signaling, the target DCI includes this field in the target field set; or when the third field is absent in the first RRC signaling, the target DCI does not include this field in the target field set}.

In an embodiment, when whether there is a third field in the first RRC signaling is used to determine whether the target DCI includes a field in the target field set, {when the third field is present in the first RRC signaling, the target DCI does not include this field in the target field set; when the third field is absent in the first RRC signaling, the target DCI includes this field in the target field set}.

In an embodiment, the third field is used to determine the number of repetitions for data (Number of repetitions for data).

In an embodiment, the third field is used to determine a transmission scheme (Transmission scheme) of the PUSCH.

In an embodiment, the transmission scheme is one of codebook (codebook)-based transmission, non-codebook (non-codebook)-based transmission, or single-antenna port transmission.

In an embodiment, the transmission scheme is one of codebook (codebook)-based transmission or non-codebook (non-codebook)-based transmission.

In an embodiment, the third field is used to determine DMRS configuration for PUSCH transmission using a PUSCH mapping type A.

In an embodiment, the third field is used to determine DMRS configuration for PUSCH transmission using a PUSCH mapping type B.

In an embodiment, the third field is used to determine power control of the PUSCH.

In an embodiment, the third field is used to determine a frequency hopping pattern.

In an embodiment, the third field is used to determine a frequency hopping offset (frequency hopping offset(s)) set.

In an embodiment, the third field is used to determine a resource allocation type.

In an embodiment, the third field is used to determine a frequency domain resource allocation type.

In an embodiment, the third field is used to determine a list of time domain allocations for timing of UL assignment to UL data (List of time domain allocations for timing of UL assignment to UL data).

In an embodiment, the third field is used to determine an MCS table that is used for the PUSCH without a transformer precoder.

In an embodiment, the third field is used to determine an MCS table that is used for the PUSCH with a transformer precoder.

In an embodiment, the third field is used to determine whether transform precoding is enabled.

In an embodiment, the third field is used to determine a specific choice for a transformer precoder (transformer precoder) of the PUSCH.

In an embodiment, the third field is used to determine a subset of PMIs addressed by TPMI (Subset of PMIs addressed by TPMI).

In an embodiment, the third field is used to determine a subset of PMIs addressed by TRIs (Subset of PMIs Addressed by TRIs).

In an embodiment, the third field is used to determine a size of an RBG that is selected between configuration 1 and configuration 2 for the PUSCH.

In an embodiment, the third field is used to determine a beta offset set.

In an embodiment, the third field is used to determine whether pi/2-BPSK modulation with transform precoding is enabled.

In an embodiment, the third field indicates the number of repetitions for data (Number of repetitions for data).

In an embodiment, the third field indicates a transmission scheme (Transmission scheme) of the PUSCH.

In an embodiment, the transmission scheme is one of codebook (codebook)-based transmission, non-codebook (non-codebook)-based transmission, or single-antenna port transmission.

In an embodiment, the transmission scheme is one of codebook (codebook)-based transmission or non-codebook (non-codebook)-based transmission.

In an embodiment, the third field indicates DMRS configuration for PUSCH transmission using a PUSCH mapping type A.

In an embodiment, the third field indicates DMRS configuration for PUSCH transmission using a PUSCH mapping type B.

In an embodiment, the third field indicates power control of the PUSCH.

In an embodiment, the third field indicates a frequency hopping pattern.

In an embodiment, the third field indicates a frequency hopping offset (frequency hopping offset(s)) set.

In an embodiment, the third field indicates a resource allocation type.

In an embodiment, the third field indicates a frequency domain resource allocation type.

In an embodiment, the third field indicates a list of time domain allocations for timing of UL assignment to UL data (List of time domain allocations for timing of UL assignment to UL data).

In an embodiment, the third field indicates an MCS table that is used for the PUSCH without a transformer precoder.

In an embodiment, the third field indicates an MCS table that is used for the PUSCH with a transformer precoder.

In an embodiment, the third field indicates whether transform precoding is enabled.

In an embodiment, the third field indicates a specific choice for a transformer precoder (transformer precoder) of the PUSCH.

In an embodiment, the third field indicates a subset of PMIs addressed by TPMI (Subset of PMIs addressed by TPMI).

In an embodiment, the third field indicates a subset of PMIs addressed by TRIs (Subset of PMIs Addressed by TRIs).

In an embodiment, the third field indicates a size of an RBG that is selected between configuration 1 and configuration 2 for the PUSCH.

In an embodiment, the third field indicates a beta offset set.

In an embodiment, the third field indicates whether pi/2-BPSK modulation with transform precoding is enabled.

In an embodiment, the third field indicates whether there is an antenna port (Antenna ports) field.

In an embodiment, the third field indicates whether to enable PUSCH repetitions counted based on an available slot.

In an embodiment, the third field indicates a set of beta offsets configured for HARQ-ACK multiplexing onto PUSCHs with different priorities.

In an embodiment, the third field indicates information about DMRS bundling (bundling) for the PUSCH.

In an embodiment, the third field indicates whether there is a DMRS sequence initialization (DMRS Sequence Initialization) field.

In an embodiment, the third field indicates a size of a HARQ process number (HARQ process number) field.

In an embodiment, the third field indicates an invalid symbol pattern (pattern) for a PUSCH transmission type B.

In an embodiment, the third field indicates whether to follow a cyclic mapping pattern (Cyclic mapping pattern) or a sequential mapping pattern (Sequential mapping pattern) when two SRS resource sets are configured for PUSCH transmission and a PUSCH transmission occasion (PUSCH transmission occasions) is associated with the two SRS resource sets.

In an embodiment, the third field indicates a list of minimum K2 values.

In an embodiment, the third field indicates a size of a redundancy version (Redundancy version) field.

In an embodiment, the third field indicates the number of symbols invalid to a PUSCH repetition type B after the last semi-static (semi-static) DL (Downlink, downlink) symbol.

In an embodiment, the third field indicates whether there is a priority indicator (priority indicator) field.

In an embodiment, the third field indicates whether to follow behavior of a PUSCH repetition type (repetition type) A or behavior of a PUSCH repetition type B.

In an embodiment, the third field indicates whether there is a second TPC field (second TPC field).

In an embodiment, the third field indicates an RV offset configured for a start RV (Redundancy version, redundancy version) of the first repetition (the first actual repetition (actual repetition) in the PUSCH repetition type B) corresponding to a second SRS resource set for the PUSCH.

In an embodiment, the third field indicates a combined list of a cyclic prefix extension, a channel access priority class (channel access priority class, CAPC), and a UL (Uplink, uplink) channel access type.

In an embodiment, the third field indicates a UL full power transmission mode (UL full power transmission mode).

In an embodiment, the third field indicates a scheduling granularity indicated by a start point and a length applicable to a resource allocation type 1.

In an embodiment, the third field indicates whether there is an antenna port (Antenna ports) field.

In an embodiment, the third field is used to determine whether to enable PUSCH repetitions counted based on an available slot.

In an embodiment, the third field is used to determine a set of beta offsets configured for HARQ-ACK multiplexing onto PUSCHs with different priorities.

In an embodiment, the third field is used to determine information about DMRS bundling (bundling) for the PUSCH.

In an embodiment, the third field is used to determine whether there is a DMRS sequence initialization (DMRS Sequence Initialization) field.

In an embodiment, the third field is used to determine a size of a HARQ process number (HARQ process number) field.

In an embodiment, the third field is used to determine an invalid symbol pattern (pattern) for a PUSCH transmission type B.

In an embodiment, the third field is used to determine whether to follow a cyclic mapping pattern (Cyclic mapping pattern) or a sequential mapping pattern (Sequential mapping pattern) when two SRS resource sets are configured for PUSCH transmission and a PUSCH transmission occasion (PUSCH transmission occasions) is associated with the two SRS resource sets.

In an embodiment, the third field is used to determine a list of minimum K2 values.

In an embodiment, the third field is used to determine a size of a redundancy version (Redundancy version) field.

In an embodiment, the third field is used to determine the number of symbols invalid to a PUSCH repetition type B after the last semi-static (semi-static) DL (Downlink, downlink) symbol.

In an embodiment, the third field is used to determine whether there is a priority indicator (priority indicator) field.

In an embodiment, the third field is used to determine whether to follow behavior of a PUSCH repetition type (repetition type) A or behavior of a PUSCH repetition type B.

In an embodiment, the third field is used to determine whether there is a second TPC field (second TPC field).

In an embodiment, the third field is used to determine an RV offset configured for a start RV (Redundancy version, redundancy version) of the first repetition (the first actual repetition (actual repetition) in the PUSCH repetition type B) corresponding to a second SRS resource set for the PUSCH.

In an embodiment, the third field is used to determine a combined list of a cyclic prefix extension, a channel access priority class (channel access priority class, CAPC), and a UL (Uplink, uplink) channel access type.

In an embodiment, the third field is used to determine a UL full power transmission mode (UL full power transmission mode).

In an embodiment, the third field is used to determine a scheduling granularity indicated by a start point and a length applicable to a resource allocation type 1.

In an embodiment, the third field includes pusch-AggregationFactor.

In an embodiment, the third field includes txConfig.

In an embodiment, the third field includes dmrs-UplinkForPUSCH-MappingTypeA.

In an embodiment, the third field includes dmrs-UplinkForPUSCH-MappingTypeB.

In an embodiment, the third field includes pusch-PowerControl.

In an embodiment, the third field includes frequencyHopping.

In an embodiment, the third field includes frequencyHoppingOffsetLists.

In an embodiment, the third field includes resourceAllocation.

In an embodiment, the third field includes pusch-TimeDomainAllocationList.

In an embodiment, the third field includes mcs-Table.

In an embodiment, the third field includes mcs-TableTransformPrecoder.

In an embodiment, the third field includes transformPrecoder.

In an embodiment, the third field includes codebookSubset.

In an embodiment, the third field includes maxRank.

In an embodiment, the third field includes rbg-Size.

In an embodiment, the third field includes uci-OnPUSCH.

In an embodiment, the third field includes tp-pi2BPSK.

In an embodiment, the third field is pusch-AggregationFactor.

In an embodiment, the third field is txConfig.

In an embodiment, the third field is dmrs-UplinkForPUSCH-MappingTypeA.

In an embodiment, the third field is dmrs-UplinkForPUSCH-MappingTypeB.

In an embodiment, the third field is pusch-PowerControl.

In an embodiment, the third field is frequencyHopping.

In an embodiment, the third field is frequencyHoppingOffsetLists.

In an embodiment, the third field is resourceAllocation.

In an embodiment, the third field is pusch-TimeDomainAllocationList.

In an embodiment, the third field is mcs-Table.

In an embodiment, the third field is mcs-TableTransformPrecoder.

In an embodiment, the third field is transformPrecoder.

In an embodiment, the third field is codebookSubset.

In an embodiment, the third field is maxRank.

In an embodiment, the third field is rbg-Size.

In an embodiment, the third field is uci-OnPUSCH.

In an embodiment, the third field is tp-pi2BPSK.

In an embodiment, a name of the third field includes pusch-AggregationFactor.

In an embodiment, the name of the third field includes txConfig.

In an embodiment, the name of the third field includes dmrs-UplinkForPUSCH-MappingTypeA.

In an embodiment, the name of the third field includes dmrs-UplinkForPUSCH-MappingTypeB.

In an embodiment, the name of the third field includes pusch-PowerControl.

In an embodiment, the name of the third field includes frequencyHopping.

In an embodiment, the name of the third field includes frequencyHoppingOffsetLists.

In an embodiment, the name of the third field includes resourceAllocation.

In an embodiment, the name of the third field includes pusch-TimeDomainAllocationList.

In an embodiment, the name of the third field includes mcs-Table.

In an embodiment, the name of the third field includes mcs-TableTransformPrecoder.

In an embodiment, the name of the third field includes transformPrecoder.

In an embodiment, the name of the third field includes codebookSubset.

In an embodiment, the name of the third field includes maxRank.

In an embodiment, the name of the third field includes rbg-Size.

In an embodiment, the name of the third field includes uci-OnPUSCH.

In an embodiment, the name of the third field includes tp-pi2BPSK.

In an embodiment, the name of the third field includes minimumSchedulingOffsetK2.

In an embodiment, the name of the third field includes ul-AccessConfigList.

In an embodiment, the name of the third field includes harq-ProcessNumberSize.

In an embodiment, the name of the third field includes dmrs-SequenceInitialization.

In an embodiment, the name of the third field includes numberOfBitsForRV.

In an embodiment, the name of the third field includes antennaPortsFieldPresence.

In an embodiment, the name of the third field includes invalidSymbolPatternIndicator.

In an embodiment, the name of the third field includes priorityIndicator.

In an embodiment, the name of the third field includes pusch-RepTypeIndicator.

In an embodiment, the name of the third field includes resourceAllocationType1Granularity.

In an embodiment, the name of the third field includes ul-FullPowerTransmission.

In an embodiment, the name of the third field includes numberOfInvalidSymbolsForDL-UL-Switching.

In an embodiment, the name of the third field includes betaOffsetsCrossPri0.

In an embodiment, the name of the third field includes betaOffsetsCrossPri1.

In an embodiment, the name of the third field includes mappingPattern.

In an embodiment, the name of the third field includes secondTPCField.

In an embodiment, the name of the third field includes sequenceOffsetForRV.

In an embodiment, the name of the third field includes availableSlotCounting.

In an embodiment, the name of the third field includes dmrs-BundlingPUSCH-Config.

In an embodiment, the name of the third field includes -r16.

In an embodiment, the name of the third field includes -r17.

In an embodiment, a size of a field is the number of bits included in this field.

In an embodiment, the third field is used to determine a maximum number of CBGs of each TB.

In an embodiment, the third field is used to determine whether to enable CBG-based transmission.

In an embodiment, the third field is used to determine a maximum MIMO (Multiple-Input Multiple-Output, multiple-input multiple-output) layer for the PUSCH in all UL BWPs (Bandwidth part, bandwidth part) corresponding to the cell.

In an embodiment, the third field is used to determine the number of HARQ processes used on the PUSCH of the cell.

In an embodiment, the third field is used to determine whether to enable configuration of an advanced processing time capability 2 (advanced processing time capability 2) for the PUSCH.

In an embodiment, the third field is used to determine whether to enable limited buffer rate-matching (Limited buffer rate-matching, LBRM).

In an embodiment, the third field is used to determine a HARQ mode for a HARQ process ID.

In an embodiment, the third field is used to determine whether to enable group hopping (group hopping) for RMRS transmission with transform precoding.

In an embodiment, the third field is used to determine a power offset (offset) between msg3 and RACH (Random Access Channel(s), random access channel) preamble (preamble) transmission.

In an embodiment, the third field is used to determine a P0 value for a PUSCH (other than msg3) with grant (grant).

In an embodiment, the third field indicates a maximum number of CBGs of each TB.

In an embodiment, the third field indicates whether to enable CBG-based transmission.

In an embodiment, the third field indicates a maximum MIMO (Multiple-Input Multiple-Output, multiple-input multiple-output) layer for the PUSCH in all UL BWPs (Bandwidth part, bandwidth part) corresponding to the cell.

In an embodiment, the third field indicates the number of HARQ processes used on the PUSCH of the cell.

In an embodiment, the third field indicates whether to enable configuration of an advanced processing time capability 2 (advanced processing time capability 2) for the PUSCH.

In an embodiment, the third field indicates whether to enable limited buffer rate-matching (Limited buffer rate-matching, LBRM).

In an embodiment, the third field indicates a HARQ mode for a HARQ process ID.

In an embodiment, the third field indicates whether to enable group hopping (group hopping) for RMRS transmission with transform precoding.

In an embodiment, the third field indicates a power offset (offset) between msg3 and RACH (Random Access Channel(s), random access channel) preamble (preamble) transmission.

In an embodiment, the third field indicates a P0 value for a PUSCH (other than msg3) with grant (grant).

In an embodiment, the third field is codeBlockGroupTransmission.

In an embodiment, the third field is rateMatching.

In an embodiment, the third field is xOverhead.

In an embodiment, the third field is maxMIMO-Layers.

In an embodiment, the third field is processingType2Enabled.

In an embodiment, the third field is nrofHARQ-ProcessesForPUSCH-r17.

In an embodiment, the third field is uplinkHARQ-mode-r17.

In an embodiment, the third field is groupHoppingEnabledTransformPrecoding.

In an embodiment, the third field is msg3-DeltaPreamble.

In an embodiment, the third field is p0-NominalWithGrant.

In an embodiment, the name of the third field includes codeBlockGroupTransmission.

In an embodiment, the name of the third field includes rateMatching.

In an embodiment, the name of the third field includes xOverhead.

In an embodiment, the name of the third field includes maxMIMO-Layers.

In an embodiment, the name of the third field includes processingType2Enabled.

In an embodiment, the name of the third field includes nrofHARQ-ProcessesForPUSCH.

In an embodiment, the name of the third field includes uplinkHARQ-mode.

In an embodiment, the name of the third field includes groupHoppingEnabledTransformPrecoding.

In an embodiment, the name of the third field includes msg3-DeltaPreamble.

In an embodiment, the name of the third field includes p0-NominalWithGrant.

In an embodiment, the third field includes AvailableSlotOffset.

In an embodiment, the third field is AvailableSlotOffset.

In an embodiment, the name of the third field includes AvailableSlotOffset.

In an embodiment, the expression that whether the target DCI includes the target field set does not depend on the configuration of the first RRC signaling includes: whether the target DCI includes the target field set does not change with a change of the configuration of the first RRC signaling.

In an embodiment, the expression that whether the target DCI includes the target field set does not depend on the configuration of the first RRC signaling includes: whether the target DCI includes any field of the target field set does not depend on the configuration of the first RRC signaling.

In an embodiment, the expression that whether the target DCI includes the target field set does not depend on the configuration of the first RRC signaling includes: whether the target DCI includes the target field set is defaulted.

In an embodiment, the expression that whether the target DCI includes the target field set does not depend on the configuration of the first RRC signaling includes: the target DCI does not include the target field set.

In an embodiment, the expression that whether the target DCI includes the target field set does not depend on the configuration of the first RRC signaling includes: the target DCI includes the target field set.

In an embodiment, the expression that whether the target DCI includes the target field set does not depend on the configuration of the first RRC signaling includes: whether the target DCI includes the target field set depends on configuration of a piece of RRC signaling other than the first RRC signaling.

In an embodiment, the expression that whether the target DCI includes the target field set does not depend on the configuration of the first RRC signaling includes:
The target RRC signaling set includes second RRC signaling. The second RRC signaling is not configured for the target cell. Whether the target DCI includes the target field set depends on configuration of the second RRC signaling.

In an embodiment, the expression that whether the target DCI includes the target field set does not depend on the configuration of the first RRC signaling includes:
The target RRC signaling set includes a target RRC signaling subset, all signaling in the target RRC signaling subset is configured for the target cell, and the first RRC signaling is signaling of the target RRC signaling subset. Whether the target DCI includes the target field set depends on configuration of a piece of RRC signaling in the target RRC signaling subset other than the first RRC signaling.

In an embodiment, the expression that whether the target DCI includes the target field set does not depend on the configuration of the first RRC signaling includes:
for the target DCI, one of the following two is satisfied: {the target RRC signaling set includes a target RRC signaling subset, all signaling in the target RRC signaling subset is configured for the target cell, the first RRC signaling is signaling of the target RRC signaling subset, and whether the target DCI includes the target field set depends on configuration of a piece of RRC signaling in the target RRC signaling subset other than the first RRC signaling; or the target DCI does not include the target field set}.

In an embodiment, the expression that when the number of cells included in the first cell set is greater than 1, whether the target DCI includes the target field set does not depend on the configuration of the first RRC signaling includes:
when the number of cells included in the first cell set is greater than 1, whether the target DCI includes the target field set does not depend on the configuration of the first RRC signaling only when the target cell is not a first reference cell. The first reference cell is a cell of the first cell set other than the target cell, and the target DCI is used to determine the first reference cell, or the first reference cell is configured by using higher-layer signaling, or the first reference cell is defaulted.

In an embodiment, when the number of cells included in the first cell set is greater than 1, whether the target DCI includes the target field set does not depend on the configuration of the first RRC signaling only when the target cell is not a first reference cell. The first reference cell is a cell of the first cell set other than the target cell, and the target DCI is used to determine the first reference cell, or the first reference cell is configured by using higher-layer signaling, or the first reference cell is defaulted.

In an embodiment, when the number of cells included in the first cell set is greater than 1, whether the target DCI includes the target field set depends on the configuration of the first RRC signaling when the target cell is the first reference cell.

In an embodiment, the higher-layer signaling includes RRC signaling.

In an embodiment, the higher-layer signaling includes MAC CE (Medium Access Control Control Element, medium access control control element) signaling.

In an embodiment, the first RRC signaling is PUSCH-Config.

In an embodiment, the first RRC signaling includes PUSCH-Config.

In an embodiment, the first RRC signaling includes configuration information of the PUSCH.

In an embodiment, the first RRC signaling is one of PUSCH-ConfigCommon or PUSCH-ServingCellConfig.

In an embodiment, the first RRC signaling is PUSCH-ConfigCommon.

In an embodiment, the first RRC signaling is PUSCH-ServingCellConfig.

In an embodiment, the first RRC signaling includes at least one of PUSCH-ConfigCommon or PUSCH-ServingCellConfig.

In an embodiment, the first RRC signaling belongs to PUSCH-Config.

In an embodiment, the first RRC signaling belongs to PUSCH-ConfigCommon.

In an embodiment, the first RRC signaling belongs to PUSCH-ServingCellConfig.

In an embodiment, the target cell is a cell with a maximum cell index in the first cell set.

In an embodiment, the target cell is a cell with a minimum cell index in the first cell set.

In an embodiment, the target cell is a cell with a maximum cell identifier (ID) in the first cell set.

In an embodiment, the target cell is a cell with a minimum cell identifier (ID) in the first cell set.

In an embodiment, when the number of cells included in the first cell set is 1, the target DCI is in a format of a first DC format set. When the number of cells included in the first cell set is greater than 1, the target DCI is in a format of a second DCI format set. There is no intersection set between the first DCI format set and the second DCI format set.

In an embodiment, the first DCI format set includes at least one DCI format.

In an embodiment, the first DCI format set includes at least one of a DCI format 0_0, a DCI format 0_1, or a DCI format 0_2.

In an embodiment, the second DCI format set includes at least one DCI format.

In an embodiment, the second DCI format set includes at least one DCI format that does not belong to the first DCI format set and that is used for unicast.

In an embodiment, the second DCI format set includes at least a DCI formats 0_3.

In an embodiment, the second DCI format set includes at least a DCI format 0_4.

In an embodiment, the second DCI format set includes at least a DCI format 5_0.

In an embodiment, the second DCI format set includes at least a DCI format 5_1.

In an embodiment, the second DCI format set includes at least a DCI format 5_2.

### Embodiment 2

Embodiment 2 illustrates a diagram of a network architecture according to this application, as shown in FIG. 2.

FIG. 2 is a diagram of a network architecture 200 of a 5G NR, LTE (Long-Term Evolution, long-term evolution), or LTE-A (Long-Term Evolution Advanced, long-term evolution advanced) system. The 5G NR or LTE network architecture 200 may be referred to as an EPS (Evolved Packet System, evolved packet system) 200 or some other proper terms. The EPS 200 may include one or more UEs (User Equipment, user equipment) 201, an NG-RAN (next generation radio access network) 202, an EPC (Evolved Packet Core, evolved packet core)/5G-CN (5G-Core Network, 5G-core network) 210, an HSS (Home Subscriber Server, home subscriber server) 220, and an Internet service 230. The EPS may be interconnected with other access networks, but for simplicity, these entities/interfaces are not shown. As shown in the figure, the EPS provides a packet-switched service. However, a person skilled in the art will easily understand that various concepts presented throughout this application may be extended to a network that provides a circuit-switched service or another cellular network. The NG-RAN includes an NR nodeB (gNB) 203 and another gNB204. The gNB203 provides user and control plane protocol termination towards the UE201. The gNB203 may be connected to the another gNB204 through an Xn interface (for example, backhaul). The gNB203 may also be referred to as a base station, a base transceiver station, a radio base station, a radio transceiver, a transceiver function, a basic service set (BSS), an extended service set (ESS), a TRP (transmission reception point), or some other proper terms. The gNB203 provides an access point to the EPC/5G-CN 210 for the UE201. An example of the UE201 includes a cellular phone, a smartphone, a session initiation protocol (SIP) phone, a laptop computer, a personal digital assistant (PDA), a satellite radio, a base station for non-terrestrial communication, a satellite for mobile communication, a global positioning system, a multimedia apparatus, a video apparatus, a digital audio player (for example, an MP3 player), a camera, a game console, an uncrewed aerial vehicle, an aircraft, a narrowband Internet-of-things device, a machine type communication device, a land transportation means, an automobile, a wearable device, or any other similar functional apparatus. A person skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a mobile phone, a user agent, a mobile client, a client, or some other proper terms. The gNB203 is connected to the EPC/5G-CN 210 through an S1/NG interface. The EPC/5G-CN 210 includes an MME (Mobility Management Entity, mobility management entity)/AMF (Authentication Management function, authentication management function)/UPF (User Plane Function, user plane function) 211, another MM/AMF/UPF214, an S-GW (Serving Gateway, serving gateway) 212, and a P-GW (Packet Data Network Gateway, packet data network gateway) 213. The MME/AMF/UPF211 is a control node that processes signaling between the UE201 and the EPC/5G-CN 210. Generally, the MME/AMF/UPF211 provides bearer and connection management. All user IP (Internet Protocol, Internet protocol) packets are delivered via the S-GW212, and the S-GW212 is connected to the P-GW213. The P-GW213 provides UE IP address assignment and other functions. The P-GW213 is connected to the Internet service 230. The Internet service 230 includes an Internet protocol service corresponding to an operator, and may specifically include the Internet, an intranet, an IMS (IP Multimedia Subsystem, IP multimedia subsystem), and a packet-switched streaming service.

In an embodiment, the UE201 corresponds to the first node in this application.

In an embodiment, the UE201 is a device supporting scheduling of PUSCHs in a plurality of cells by one piece of DCI.

In an embodiment, the UE201 corresponds to the second node in this application.

In an embodiment, the gNB203 corresponds to the first node in this application.

In an embodiment, the gNB203 corresponds to the second node in this application.

In an embodiment, the UE201 corresponds to the first node in this application, and the gNB 203 corresponds to the second node in this application.

In an embodiment, the gNB203 is a macrocellular (MarcoCellular) base station.

In an embodiment, the gNB203 is a microcell (Micro Cell) base station.

In an embodiment, the gNB203 is a picocell (PicoCell) base station.

In an embodiment, the gNB203 is a home base station (Femtocell).

In an embodiment, the gNB203 is a base station device supporting a large delay difference.

In an embodiment, the gNB203 is a flight platform device.

In an embodiment, the gNB203 is a satellite device.

In an embodiment, the first node and the second node in this application both correspond to the UE201. For example, the first node and the second node perform V2X communication with each other.

### Embodiment 3

Embodiment 3 illustrates a diagram of an embodiment of radio protocol architectures of a user plane and a control plane according to this application, as shown in FIG. 3. FIG. 3 is a diagram of an embodiment of radio protocol architectures for a user plane 350 and a control plane 300. FIG. 3 shows a radio protocol architecture of a control plane 300 for a first communication node device (a UE, a gNB, or an RSU in V2X) and a second communication node device (a gNB, a UE, or an RSU in V2X) or between two UEs by using three layers: a layer 1, a layer 2, and a layer 3. The layer 1 (L1 layer) is the lowest layer and implements various PHY (physical layer) signal processing functions. The L1 layer is referred to as a PHY301 in this specification. The layer 2 (L2 layer) 305 is above the PHY301, and is responsible for links between the first communication node device and the second communication node device, and between two UEs via the PHY301. The L2 layer 305 includes a MAC (Medium Access Control, medium access control) sublayer 302, an RLC (Radio Link Control, radio link control) sublayer 303, and a PDCP (Packet Data Convergence Protocol, packet data convergence protocol) sublayer 304, and these sublayers terminate at the second communication node device. The PDCP sublayer 304 provides multiplexing between different radio bearers and logical channels. The PDCP sublayer 304 further provides security through data packet encryption, and provides inter-cell mobility support for the first communication node device between second communication node devices. The RLC sublayer 303 provides segmentation and reassembly of an upper-layer data packet, retransmission of a lost data packet, and reordering of data packets to compensate for unordered reception caused by HARQ. The MAC sublayer 302 provides multiplexing between logical and transport channels. The MAC sublayer 302 is further responsible for allocating various radio resources (for example, resource blocks) in a cell between first communication node devices. The MAC sublayer 302 is further responsible for a HARQ operation. An RRC (Radio Resource Control, radio resource control) sublayer 306 in the layer 3 (L3 layer) in the control plane 300 is responsible for obtaining a radio resource (that is, a radio bearer) and configuring a lower layer by using RRC signaling between the second communication node device and the first communication node device. The radio protocol architecture of the user plane 350 includes a layer 1 (L1 layer) and a layer 2 (L2 layer). In the radio protocol architecture for the first communication node device and the second communication node device in the user plane 350, a physical layer 351, a PDCP sublayer 354 in the L2 layer 355, an RLC sublayer 353 in the L2 layer 355, and a MAC sublayer 352 in the L2 layer 355 are substantially the same as corresponding layers and sublayers in the control plane 300, but a PDCP sublayer 354 further provides header compression for upper-layer data packets to reduce radio transmission overheads. The L2 layer 355 in the user plane 350 further includes an SDAP (Service Data Adaptation Protocol, service data adaptation protocol) sublayer 356. The SDAP sublayer 356 is responsible for mapping between QoS flows and data radio bearers (DRB, Data Radio Bearer), to support diversified services. Although not shown in the figure, the first communication node device may have several upper layers above the L2 layer 355, including a network layer (for example, an IP layer) terminated at a P-GW on a network side and an application layer terminated at the other end (for example, a remote UE or a server) of a connection.

In an embodiment, the radio protocol architectures in FIG. 3 are applicable to the first node in this application.

In an embodiment, the radio protocol architectures in FIG. 3 are applicable to the second node in this application.

In an embodiment, the RRC signaling in the target RRC signaling set in this application is generated at the RRC sublayer 306.

In an embodiment, the target DCI in this application is generated at the PHY 301.

In an embodiment, the PUSCH in this application is generated at the PHY 301.

In an embodiment, the PUSCH in this application is generated at the PHY 351.

### Embodiment 4

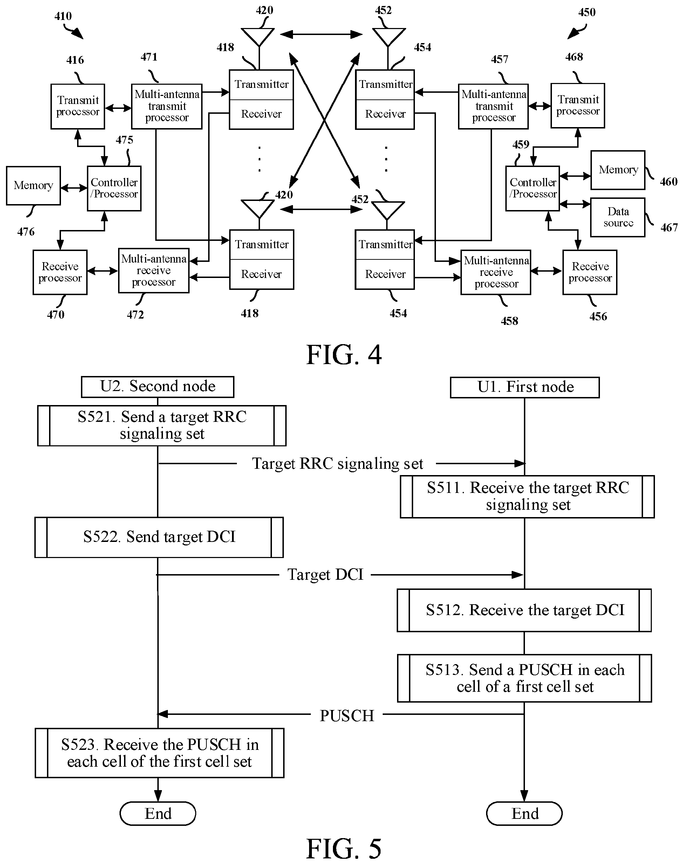

Embodiment 4 illustrates a diagram of a first communication device and a second communication device according to this application, as shown in FIG. 4. FIG. 4 is a block diagram of a first communication device 410 and a second communication device 450 communicating with each other in an access network.

The first communication device 410 includes a controller/processor 475, a memory 476, a receive processor 470, a transmit processor 416, a multi-antenna receive processor 472, a multi-antenna transmit processor 471, a transmitter/receiver 418, and an antenna 420.

The second communication device 450 includes a controller/processor 459, a memory 460, a data source 467, a transmit processor 468, a receive processor 456, a multi-antenna transmit processor 457, a multi-antenna receive processor 458, a transmitter/receiver 454, and an antenna 452.

During transmission from the first communication device 410 to the second communication device 450, at the first communication device 410, an upper-layer data packet from a core network is provided to the controller/processor 475. The controller/processor 475 implements functionality of the L2 layer. During transmission from the first communication device 410 to the first communication device 450, the controller/processor 475 provides header compression, encryption, packet segmentation and reordering, multiplexing between logical and transport channels, and radio resource allocation to the second communication device 450 based on various priority measures. The controller/processor 475 is further responsible for retransmission of a lost packet and signaling to the second communication device 450. The transmit processor 416 and the multi-antenna transmit processor 471 implement various signal processing functions for the L1 layer (that is, the physical layer). The transmit processor 416 implements coding and interleaving to facilitate forward error correction (FEC) at the second communication device 450, and mapping of signal clusters based on various modulation schemes (for example, binary phase shift keying (BPSK), quadrature phase shift keying (QPSK), M-phase shift keying (M-PSK), and M-quadrature amplitude modulation (M-QAM)). The multi-antenna transmit processor 471 performs digital spatial precoding on coded and modulated symbols, including codebook-based precoding and non-codebook-based precoding, and beamforming processing, to generate one or more spatial streams. Then, the transmit processor 416 maps each spatial stream to a subcarrier for multiplexing with a reference signal (for example, a pilot) in time domain and/or frequency domain, and then performs inverse fast Fourier transform (IFFT) to generate a physical channel carrying a time-domain multi-carrier symbol stream. Subsequently, the multi-antenna transmit processor 471 performs a transmit analog precoding/beamforming operation on the time-domain multi-carrier symbol stream. Each transmitter 418 converts a baseband multi-carrier symbol stream provided by the multi-antenna transmit processor 471 into a radio frequency stream, and then provides the radio frequency stream to different antennas 420.

During transmission from the first communication device 410 to the second communication device 450, at the second communication device 450, each receiver 454 receives a signal via its corresponding antenna 452. Each receiver 454 restores information modulated onto a radio frequency carrier, converts a radio frequency stream into a baseband multi-carrier symbol stream, and provides the baseband multi-carrier symbol stream to the receive processor 456. The receive processor 456 and the multi-antenna receive processor 458 implement various signal processing functions of the L1 layer. The multi-antenna receive processor 458 performs a receive analog precoding/beamforming operation on the baseband multi-carrier symbol stream from the receiver 454. The receive processor 456 performs fast Fourier transform (FFT) to convert, from time domain to frequency domain, the baseband multi-carrier symbol stream on which the receive analog precoding/beamforming operation is performed. In frequency domain, the physical layer data signal and the reference signal are demultiplexed by the receive processor 456, the reference signal is used for channel estimation, and multi-antenna detection is performed on the data signal in the multi-antenna receive processor 458 to restore any spatial stream destined for the second communication device 450. A symbol in each spatial stream is demodulated and restored in the receive processor 456, and a soft decision is generated. Subsequently, the receive processor 456 decodes and de-interleaves the soft decision to restore upper-layer data and a control signal that are transmitted by the first communication device 410 on the physical channel. Subsequently, the upper-layer data and the control signal are provided to the controller/processor 459. The controller/processor 459 implements a function of the L2 layer. The controller/processor 459 may be associated with the memory 460 that stores program code and data. The memory 460 may be referred to as a computer-readable medium. During transmission from the first communication device 410 to the second communication device 450, the controller/processor 459 provides demultiplexing between the transport and logical channels, packet reassembly, decryption, header decompression, and control signal processing to restore the upper-layer data packet from the core network. Subsequently, the upper-layer data packet is provided to all protocol layers above the L2 layer. Various control signals may be provided to L3 for processing by L3.

During transmission from the second communication device 450 to the first communication device 410, at the second communication device 450, the data source 467 is used to provide an upper-layer data packet to the controller/processor 459. The data source 467 represents all protocol layers above the L2 layer. Similar to the sending functions at the first communication device 410 that are described during transmission from the first communication device 410 to the second communication device 450, the controller/processor 459 implements header compression, encryption, packet segmentation and reordering, multiplexing between logical and transport channels based on radio resource allocation, to implements functions of the L2 layer for the user plane and the control plane. The controller/processor 459 is further responsible for retransmission of a lost packet and signaling to the first communication device 410. The transmit processor 468 performs modulation mapping and channel coding processing. The multi-antenna transmit processor 457 performs digital multi-antenna spatial precoding, including codebook-based precoding and non-codebook-based precoding, and beamforming processing. Subsequently, the transmit processor 468 modulates a generated spatial stream into a multi-carrier/single-carrier symbol stream. After an analog precoding/beamforming operation is performed on the multi-carrier/single-carrier symbol stream in the multi-antenna transmit processor 457, the multi-carrier/single-carrier symbol stream is provided to different antennas 452 via the transmitter 454. Each transmitter 454 first converts a baseband symbol stream provided by the multi-antenna transmit processor 457 into a radio frequency symbol stream, and then provides the radio frequency symbol stream to the antenna 452.

During transmission from the second communication device 450 to the first communication device 410, functions at the first communication device 410 are similar to the receiving functions at the second communication device 450 that are described during transmission from the first communication device 410 to the second communication device 450. Each receiver 418 receives a radio frequency signal via its corresponding antenna 420, converts the received radio frequency signal into a baseband signal, and provides the baseband signal to the multi-antenna receive processor 472 and the receive processor 470. The receive processor 470 and the multi-antenna receive processor 472 jointly implement a function of the L1 layer. The controller/processor 475 implements a function of the L2 layer. The controller/processor 475 may be associated with the memory 476 that stores program code and data. The memory 476 may be referred to as a computer-readable medium. During transmission from the second communication device 450 to the first communication device 410, the controller/processor 475 provides demultiplexing between the transport and logical channels, packet reassembly, decryption, header decompression, and control signal processing to restore the upper-layer data packet from the UE 450. The upper-layer data packet from the controller/processor 475 can be provided to the core network.

In an embodiment, the first node in this application includes the second communication device 450, and the second node in this application includes the first communication device 410.

In a sub-embodiment of the foregoing embodiment, the first node is a user equipment, and the second node is a user equipment.

In a sub-embodiment of the foregoing embodiment, the first node is a user equipment, and the second node is a relay node.

In a sub-embodiment of the foregoing embodiment, the first node is a relay node, and the second node is a user equipment.

In a sub-embodiment of the foregoing embodiment, the first node is a user equipment, and the second node is a base station device.

In a sub-embodiment of the foregoing embodiment, the first node is a relay node, and the second node is a base station device.

In a sub-embodiment of the foregoing embodiment, the second node is a user equipment, and the first node is a base station device.

In a sub-embodiment of the foregoing embodiment, the second node is a relay node, and the first node is a base station device.

In a sub-embodiment of the foregoing embodiment, the second communication device 450 includes at least one controller/processor. The at least one controller/processor is responsible for a HARQ operation.

In a sub-embodiment of the foregoing embodiment, the first communication device 410 includes at least one controller/processor. The at least one controller/processor is responsible for a HARQ operation.

In a sub-embodiment of the foregoing embodiment, the first communication device 410 includes at least one controller/processor. The at least one controller/processor is responsible for performing error detection by using an acknowledgment (ACK) and/or negative acknowledgment (NACK) protocol, to support a HARQ operation.

In an embodiment, the second communication device 450 includes at least one processor and at least one memory. The at least one memory includes computer program code. The at least one memory and the computer program code are configured to be used together with the at least one processor. The second communication device 450 performs at least the following: receiving a target RRC signaling set, and receiving target DCI; and sending a PUSCH in each cell of a first cell set. The target DCI is used to schedule the PUSCH sent in each cell of the first cell set. The target RRC signaling set includes first RRC signaling, the first RRC signaling is configured for a target cell, and the target cell is a cell of the first cell set. Whether the target DCI includes a target field set is related to the number of cells included in the first cell set. When the number of cells included in the first cell set is 1, whether the target DCI includes the target field set depends on the configuration of the first RRC signaling. When the number of cells included in the first cell set is greater than 1, whether the target DCI includes the target field set does not depend on the configuration of the first RRC signaling.

In a sub-embodiment of the foregoing embodiment, the second communication device 450 corresponds to the first node in this application.

In an embodiment, the second communication device 450 includes a memory storing a computer-readable instruction program. The computer-readable instruction program generates actions when being executed by at least one processor, and the actions include: receiving a target RRC signaling set, and receiving target DCI; and sending a PUSCH in each cell of a first cell set. The target DCI is used to schedule the PUSCH sent in each cell of the first cell set. The target RRC signaling set includes first RRC signaling, the first RRC signaling is configured for a target cell, and the target cell is a cell of the first cell set. Whether the target DCI includes a target field set is related to the number of cells included in the first cell set. When the number of cells included in the first cell set is 1, whether the target DCI includes the target field set depends on the configuration of the first RRC signaling. When the number of cells included in the first cell set is greater than 1, whether the target DCI includes the target field set does not depend on the configuration of the first RRC signaling.

In a sub-embodiment of the foregoing embodiment, the second communication device 450 corresponds to the first node in this application.

In an embodiment, the first communication device 410 includes at least one processor and at least one memory. The at least one memory includes computer program code. The at least one memory and the computer program code are configured to be used together with the at least one processor. The first communication device 410 performs at least the following: sending a target RRC signaling set, and sending target DCI; and receiving a PUSCH in each cell of a first cell set. The target DCI is used to schedule the PUSCH in each cell of the first cell set. The target RRC signaling set includes first RRC signaling, the first RRC signaling is configured for a target cell, and the target cell is a cell of the first cell set. Whether the target DCI includes a target field set is related to the number of cells included in the first cell set. When the number of cells included in the first cell set is 1, whether the target DCI includes the target field set depends on the configuration of the first RRC signaling. When the number of cells included in the first cell set is greater than 1, whether the target DCI includes the target field set does not depend on the configuration of the first RRC signaling.

In a sub-embodiment of the foregoing embodiment, the first communication device 410 corresponds to the second node in this application.

In an embodiment, the first communication device 410 includes a memory storing a computer-readable instruction program. The computer-readable instruction program generates actions when being executed by at least one processor, and the actions include: sending a target RRC signaling set, and sending target DCI; and receiving a PUSCH in each cell of a first cell set. The target DCI is used to schedule the PUSCH in each cell of the first cell set. The target RRC signaling set includes first RRC signaling, the first RRC signaling is configured for a target cell, and the target cell is a cell of the first cell set. Whether the target DCI includes a target field set is related to the number of cells included in the first cell set. When the number of cells included in the first cell set is 1, whether the target DCI includes the target field set depends on the configuration of the first RRC signaling. When the number of cells included in the first cell set is greater than 1, whether the target DCI includes the target field set does not depend on the configuration of the first RRC signaling.

In a sub-embodiment of the foregoing embodiment, the first communication device 410 corresponds to the second node in this application.

In an embodiment, at least one of {the antenna 452, the receiver 454, the multi-antenna receive processor 458, the receive processor 456, the controller/processor 459, the memory 460, and the data source 467} is configured to receive the target RRC signaling set in this application.

In an embodiment, at least one of {the antenna 420, the transmitter 418, the multi-antenna transmit processor 471, the transmit processor 416, the controller/processor 475, and the memory 476} is configured to send the target RRC signaling set in this application.

In an embodiment, at least one of {the antenna 452, the receiver 454, the multi-antenna receive processor 458, the receive processor 456, the controller/processor 459, the memory 460, and the data source 467} is configured to receive the target DCI in this application.

In an embodiment, at least one of {the antenna 420, the transmitter 418, the multi-antenna transmit processor 471, the transmit processor 416, the controller/processor 475, and the memory 476} is configured to send the target DCI in this application.

In an embodiment, at least one of {the antenna 452, the transmitter 454, the multi-antenna transmit processor 458, the transmit processor 468, the controller/processor 459, the memory 460, and the data source 467} is configured to send the PUSCH in each cell of the first cell set in this application.

In an embodiment, at least one of {the antenna 420, the receiver 418, the multi-antenna receive processor 472, the receive processor 470, the controller/processor 475, and the memory 476} is configured to receive the PUSCH in each cell of the first cell set in this application.

### Embodiment 5

Embodiment 5 illustrates a flowchart of signal transmission according to an embodiment of this application, as shown in FIG. 5. In FIG. 5, a first node U1 and a second node U2 communicate with each other through an air interface.

The first node U1 receives a target RRC signaling set in step S511; receives target DCI in step S512; and sends a PUSCH in each cell of a first cell set in step S513.

The second node U2 sends the target RRC signaling set in step S521; sends the target DCI in step S522; and receives the PUSCH in each cell of the first cell set in step S523.

In Embodiment 5, the target DCI is used to schedule the PUSCH sent in each cell of the first cell set. The target RRC signaling set includes first RRC signaling, the first RRC signaling is configured for a target cell, and the target cell is a cell of the first cell set. Whether the target DCI includes a target field set is related to the number of cells included in the first cell set. When the number of cells included in the first cell set is 1, whether the target DCI includes the target field set depends on the configuration of the first RRC signaling. When the number of cells included in the first cell set is greater than 1, whether the target DCI includes the target field set does not depend on the configuration of the first RRC signaling. The first RRC signaling is PUSCH-Config, PUSCH-ConfigCommon, or PUSCH-ServingCellConfig.

In a sub-embodiment of Embodiment 5, when the number of cells included in the first cell set is greater than 1, the target DCI does not include the target field set.

In a sub-embodiment of Embodiment 5, when the number of cells included in the first cell set is greater than 1, the target DCI includes the target field set.

In a sub-embodiment of Embodiment 5, when the number of cells included in the first cell set is greater than 1, the target RRC signaling set includes second RRC signaling, the second RRC signaling is configured for a first reference cell, the first reference cell is a cell other than the target cell, and whether the target DCI includes the target field set depends on configuration of the second RRC signaling.

In a sub-embodiment of Embodiment 5, when the number of cells included in the first cell set is greater than 1, the target RRC signaling set includes a target RRC signaling subset, all signaling in the target RRC signaling subset is configured for the target cell, the first RRC signaling is signaling of the target RRC signaling subset, and whether the target DCI includes the target field set depends on configuration of a piece of RRC signaling in the target RRC signaling subset other than the first RRC signaling.

In a sub-embodiment of Embodiment 5, when the number of cells included in the first cell set is 1, the target DCI is in a format of a first DC format set. When the number of cells included in the first cell set is greater than 1, the target DCI is in a format of a second DCI format set. There is no intersection set between the first DCI format set and the second DCI format set.

In an embodiment, the first node U1 is the first node in this application.

In an embodiment, the second node U2 is the second node in this application.

In an embodiment, the first node U1 is a UE.

In an embodiment, the first node U1 is a base station.

In an embodiment, the second node U2 is a base station.

In an embodiment, the second node U2 is a UE.

In an embodiment, the air interface between the second node U2 and the first node U1 is a Uu interface.

In an embodiment, the air interface between the second node U2 and the first node U1 includes a cellular link.

In an embodiment, the air interface between the second node U2 and the first node U1 is a PC5 interface.

In an embodiment, the air interface between the second node U2 and the first node U1 includes a sidelink.

In an embodiment, the air interface between the second node U2 and the first node U1 includes a radio interface between a base station device and a user equipment.

In an embodiment, the air interface between the second node U2 and the first node U1 includes a radio interface between a satellite device and a user equipment.

In an embodiment, the air interface between the second node U2 and the first node U1 includes a radio interface between user equipment devices.

In an embodiment, a problem to be resolved by this application includes how to determine whether the target DCI includes the target field set.

In an embodiment, the problem to be resolved by this application includes how to determine RRC signaling on which whether the target DCI includes the target field set depends.

In an embodiment, the problem to be resolved by this application includes how to determine, based on the number of cells included in the first cell set, whether the target DCI includes the target field set.

In an embodiment, the problem to be resolved by this application includes how to determine, based on configuration of RRC signaling, a field included in DCI for scheduling a plurality of cells.

In an embodiment, the problem to be resolved by this application includes How to enhance PUSCH scheduling in a plurality of cells.

In an embodiment, the problem to be resolved by this application includes how to improve scheduling flexibility when a plurality of types of DCI that can be used to schedule different numbers of cells are configured.

In an embodiment, the problem to be resolved by this application includes how to reduce signaling overheads of DCI.

In an embodiment, the problem to be resolved by this application includes how to improve performance of eMBB

In an embodiment, the problem to be resolved by this application includes how to improve performance of URLLC.

In an embodiment, the problem to be resolved by this application includes how to improve performance of the Internet of vehicles.

In an embodiment, the problem to be resolved by this application includes how to improve performance of MBS.

In an embodiment, the problem to be resolved by this application includes how to improve performance of XR.

In an embodiment, the problem to be resolved by this application includes how to improve performance of NTN.

In an embodiment, the problem to be resolved by this application includes how to improve flexibility of base station configuration.

### Embodiment 6

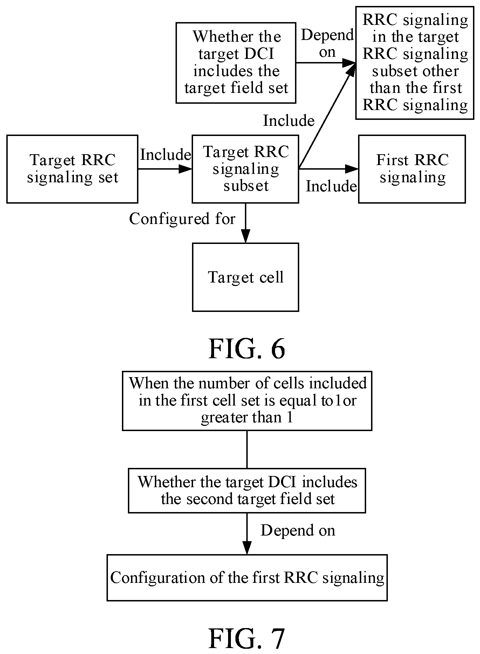

Embodiment 6 illustrates a diagram of relationships between the target RRC signaling set, the target RRC signaling subset, the first RRC signaling, the target cell, the target DCI, and the target field set according to an embodiment of this application, as shown in FIG. 6.

In Embodiment 6, the number of cells included in the first cell set is greater than 1. The target RRC signaling set includes the target RRC signaling subset, all the signaling in the target RRC signaling subset is configured for the target cell, and the first RRC signaling is signaling of the target RRC signaling subset. Whether the target DCI includes the target field set depends on configuration of a piece of RRC signaling in the target RRC signaling subset other than the first RRC signaling.

In an embodiment, the number of pieces of RRC signaling in the target RRC signaling subset is equal to 2.

In an embodiment, the number of pieces of RRC signaling in the target RRC signaling subset is greater than 2.

In an embodiment, the target RRC signaling subset is the target RRC signaling set.

In an embodiment, the target RRC signaling subset is a proper subset of the target RRC signaling set.

In an embodiment, the number of cells included in the first cell set is greater than 1. For the target DCI, one of the following two is satisfied: {the target RRC signaling set includes the target RRC signaling subset, all the signaling in the target RRC signaling subset is configured for the target cell, the first RRC signaling is signaling of the target RRC signaling subset, and whether the target DCI includes the target field set depends on configuration of a piece of RRC signaling in the target RRC signaling subset other than the first RRC signaling; or whether the target DCI includes the target field set is defaulted}.

In an embodiment, the expression that whether the target DCI includes the target field set is defaulted includes: the target DCI does not include the target field set.

In an embodiment, the expression that whether the target DCI includes the target field set is defaulted includes: the target DCI includes the target field set.

In an embodiment, each piece of RRC signaling in the target RRC signaling subset is used to determine the number of repetitions for data (Number of repetitions for data).

In an embodiment, each piece of RRC signaling in the target RRC signaling subset is used to determine a transmission scheme (Transmission scheme) of the PUSCH.

In an embodiment, the transmission scheme is one of codebook (codebook)-based transmission, non-codebook (non-codebook)-based transmission, or single-antenna port transmission.

In an embodiment, the transmission scheme is one of codebook (codebook)-based transmission or non-codebook (non-codebook)-based transmission.

In an embodiment, each piece of RRC signaling in the target RRC signaling subset is used to determine DMRS configuration for PUSCH transmission using a PUSCH mapping type A.

In an embodiment, each piece of RRC signaling in the target RRC signaling subset is used to determine DMRS configuration for PUSCH transmission using a PUSCH mapping type B.

In an embodiment, each piece of RRC signaling in the target RRC signaling subset is used to determine power control of the PUSCH.

In an embodiment, each piece of RRC signaling in the target RRC signaling subset is used to determine a frequency hopping pattern.

In an embodiment, each piece of RRC signaling in the target RRC signaling subset is used to determine a frequency hopping offset (frequency hopping offset(s)) set.

In an embodiment, each piece of RRC signaling in the target RRC signaling subset is used to determine a resource allocation type.

In an embodiment, each piece of RRC signaling in the target RRC signaling subset is used to determine a frequency domain resource allocation type.

In an embodiment, each piece of RRC signaling in the target RRC signaling subset is used to determine a list of time domain allocations for timing of UL assignment to UL data (List of time domain allocations for timing of UL assignment to UL data).

In an embodiment, each piece of RRC signaling in the target RRC signaling subset is used to determine an MCS table that is used for the PUSCH without a transformer precoder.

In an embodiment, each piece of RRC signaling in the target RRC signaling subset is used to determine an MCS table that is used for the PUSCH with a transformer precoder.

In an embodiment, each piece of RRC signaling in the target RRC signaling subset is used to determine whether transform precoding is enabled.

In an embodiment, each piece of RRC signaling in the target RRC signaling subset is used to determine a specific choice for a transformer precoder (transformer precoder) of the PUSCH.

In an embodiment, each piece of RRC signaling in the target RRC signaling subset is used to determine a subset of PMIs addressed by TPMI (Subset of PMIs addressed by TPMI).

In an embodiment, each piece of RRC signaling in the target RRC signaling subset is used to determine a subset of PMIs addressed by TRIs (Subset of PMIs Addressed by TRIs).

In an embodiment, each piece of RRC signaling in the target RRC signaling subset is used to determine a size of an RBG that is selected between configuration 1 and configuration 2 for the PUSCH.

In an embodiment, each piece of RRC signaling in the target RRC signaling subset is used to determine a beta offset set.

In an embodiment, each piece of RRC signaling in the target RRC signaling subset is used to determine whether pi/2-BPSK modulation with transform precoding is enabled.

In an embodiment, each piece of RRC signaling in the target RRC signaling subset indicates the number of repetitions for data (Number of repetitions for data).

In an embodiment, each piece of RRC signaling in the target RRC signaling subset indicates a transmission scheme (Transmission scheme) of the PUSCH.

In an embodiment, the transmission scheme is one of codebook (codebook)-based transmission, non-codebook (non-codebook)-based transmission, or single-antenna port transmission.

In an embodiment, the transmission scheme is one of codebook (codebook)-based transmission or non-codebook (non-codebook)-based transmission.

In an embodiment, each piece of RRC signaling in the target RRC signaling subset indicates DMRS configuration for PUSCH transmission using a PUSCH mapping type A.

In an embodiment, each piece of RRC signaling in the target RRC signaling subset indicates DMRS configuration for PUSCH transmission using a PUSCH mapping type B.

In an embodiment, each piece of RRC signaling in the target RRC signaling subset indicates power control of the PUSCH.

In an embodiment, each piece of RRC signaling in the target RRC signaling subset indicates a frequency hopping pattern.

In an embodiment, each piece of RRC signaling in the target RRC signaling subset indicates a frequency hopping offset (frequency hopping offset(s)) set.

In an embodiment, each piece of RRC signaling in the target RRC signaling subset indicates a resource allocation type.

In an embodiment, each piece of RRC signaling in the target RRC signaling subset indicates a frequency domain resource allocation type.

In an embodiment, each piece of RRC signaling in the target RRC signaling subset indicates a list of time domain allocations for timing of UL assignment to UL data (List of time domain allocations for timing of UL assignment to UL data).

In an embodiment, each piece of RRC signaling in the target RRC signaling subset indicates an MCS table that is used for the PUSCH without a transformer precoder.

In an embodiment, each piece of RRC signaling in the target RRC signaling subset indicates an MCS table that is used for the PUSCH with a transformer precoder.

In an embodiment, each piece of RRC signaling in the target RRC signaling subset indicates whether transform precoding is enabled.

In an embodiment, each piece of RRC signaling in the target RRC signaling subset indicates a specific choice for a transformer precoder (transformer precoder) of the PUSCH.

In an embodiment, each piece of RRC signaling in the target RRC signaling subset indicates a subset of PMIs addressed by TPMI (Subset of PMIs addressed by TPMI).

In an embodiment, each piece of RRC signaling in the target RRC signaling subset indicates a subset of PMIs addressed by TRIs (Subset of PMIs Addressed by TRIs).

In an embodiment, each piece of RRC signaling in the target RRC signaling subset indicates a size of an RBG that is selected between configuration 1 and configuration 2 for the PUSCH.

In an embodiment, each piece of RRC signaling in the target RRC signaling subset indicates a beta offset set.

In an embodiment, each piece of RRC signaling in the target RRC signaling subset indicates whether pi/2-BPSK modulation with transform precoding is enabled.

In an embodiment, each piece of RRC signaling in the target RRC signaling subset indicates whether there is an antenna port (Antenna ports) field.

In an embodiment, each piece of RRC signaling in the target RRC signaling subset indicates whether to enable PUSCH repetitions counted based on an available slot.

In an embodiment, each piece of RRC signaling in the target RRC signaling subset indicates a set of beta offsets configured for HARQ-ACK multiplexing onto PUSCHs with different priorities.

In an embodiment, each piece of RRC signaling in the target RRC signaling subset indicates information about DMRS bundling (bundling) for the PUSCH.

In an embodiment, each piece of RRC signaling in the target RRC signaling subset indicates whether there is a DMRS sequence initialization (DMRS Sequence Initialization) field.

In an embodiment, each piece of RRC signaling in the target RRC signaling subset indicates a size of a HARQ process number (HARQ process number) field.

In an embodiment, each piece of RRC signaling in the target RRC signaling subset indicates an invalid symbol pattern (pattern) for a PUSCH transmission type B.

In an embodiment, each piece of RRC signaling in the target RRC signaling subset indicates whether to follow a cyclic mapping pattern (Cyclic mapping pattern) or a sequential mapping pattern (Sequential mapping pattern) when two SRS resource sets are configured for PUSCH transmission and a PUSCH transmission occasion (PUSCH transmission occasions) is associated with the two SRS resource sets.

In an embodiment, each piece of RRC signaling in the target RRC signaling subset indicates a list of minimum K2 values.

In an embodiment, each piece of RRC signaling in the target RRC signaling subset indicates a size of a redundancy version (Redundancy version) field.

In an embodiment, each piece of RRC signaling in the target RRC signaling subset indicates the number of symbols invalid to a PUSCH repetition type B after the last semi-static (semi-static) DL (Downlink, downlink) symbol.

In an embodiment, each piece of RRC signaling in the target RRC signaling subset indicates whether there is a priority indicator (priority indicator) field.

In an embodiment, each piece of RRC signaling in the target RRC signaling subset indicates whether to follow behavior of a PUSCH repetition type (repetition type) A or behavior of a PUSCH repetition type B.

In an embodiment, each piece of RRC signaling in the target RRC signaling subset indicates whether there is a second TPC field (second TPC field).

In an embodiment, each piece of RRC signaling in the target RRC signaling subset indicates an RV offset configured for a start RV (Redundancy version, redundancy version) of the first repetition (the first actual repetition (actual repetition) in the PUSCH repetition type B) corresponding to a second SRS resource set for the PUSCH.

In an embodiment, each piece of RRC signaling in the target RRC signaling subset indicates a combined list of a cyclic prefix extension, a channel access priority class (channel access priority class, CAPC), and a UL (Uplink, uplink) channel access type.

In an embodiment, each piece of RRC signaling in the target RRC signaling subset indicates a UL full power transmission mode (UL full power transmission mode).

In an embodiment, each piece of RRC signaling in the target RRC signaling subset indicates a scheduling granularity indicated by a start point and a length applicable to a resource allocation type 1.

In an embodiment, each piece of RRC signaling in the target RRC signaling subset is used to determine whether there is an antenna port (Antenna ports) field.

In an embodiment, each piece of RRC signaling in the target RRC signaling subset is used to determine whether to enable PUSCH repetitions counted based on an available slot.

In an embodiment, each piece of RRC signaling in the target RRC signaling subset is used to determine a set of beta offsets configured for HARQ-ACK multiplexing onto PUSCHs with different priorities.

In an embodiment, each piece of RRC signaling in the target RRC signaling subset is used to determine information about DMRS bundling (bundling) for the PUSCH.

In an embodiment, each piece of RRC signaling in the target RRC signaling subset is used to determine whether there is a DMRS sequence initialization (DMRS Sequence Initialization) field.

In an embodiment, each piece of RRC signaling in the target RRC signaling subset is used to determine a size of a HARQ process number (HARQ process number) field.

In an embodiment, each piece of RRC signaling in the target RRC signaling subset is used to determine an invalid symbol pattern (pattern) for a PUSCH transmission type B.

In an embodiment, each piece of RRC signaling in the target RRC signaling subset is used to determine whether to follow a cyclic mapping pattern (Cyclic mapping pattern) or a sequential mapping pattern (Sequential mapping pattern) when two SRS resource sets are configured for PUSCH transmission and a PUSCH transmission occasion (PUSCH transmission occasions) is associated with the two SRS resource sets.

In an embodiment, each piece of RRC signaling in the target RRC signaling subset is used to determine a list of minimum K2 values.

In an embodiment, each piece of RRC signaling in the target RRC signaling subset is used to determine a size of a redundancy version (Redundancy version) field.

In an embodiment, each piece of RRC signaling in the target RRC signaling subset is used to determine the number of symbols invalid to a PUSCH repetition type B after the last semi-static (semi-static) DL (Downlink, downlink) symbol.

In an embodiment, each piece of RRC signaling in the target RRC signaling subset is used to determine whether there is a priority indicator (priority indicator) field.

In an embodiment, each piece of RRC signaling in the target RRC signaling subset is used to determine whether to follow behavior of a PUSCH repetition type (repetition type) A or behavior of a PUSCH repetition type B.

In an embodiment, each piece of RRC signaling in the target RRC signaling subset is used to determine whether there is a second TPC field (second TPC field).

In an embodiment, each piece of RRC signaling in the target RRC signaling subset is used to determine an RV offset configured for a start RV (Redundancy version, redundancy version) of the first repetition (the first actual repetition (actual repetition) in the PUSCH repetition type B) corresponding to a second SRS resource set for the PUSCH.

In an embodiment, each piece of RRC signaling in the target RRC signaling subset is used to determine a combined list of a cyclic prefix extension, a channel access priority class (channel access priority class, CAPC), and a UL (Uplink, uplink) channel access type.

In an embodiment, each piece of RRC signaling in the target RRC signaling subset is used to determine a UL full power transmission mode (UL full power transmission mode).

In an embodiment, each piece of RRC signaling in the target RRC signaling subset is used to determine a scheduling granularity indicated by a start point and a length applicable to a resource allocation type 1.

In an embodiment, each piece of RRC signaling in the target RRC signaling subset includes pusch-AggregationFactor.

In an embodiment, each piece of RRC signaling in the target RRC signaling subset includes txConfig.

In an embodiment, each piece of RRC signaling in the target RRC signaling subset includes dmrs-UplinkForPUSCH-MappingTypeA.

In an embodiment, each piece of RRC signaling in the target RRC signaling subset includes dmrs-UplinkForPUSCH-MappingTypeB.

In an embodiment, each piece of RRC signaling in the target RRC signaling subset includes pusch-PowerControl.

In an embodiment, each piece of RRC signaling in the target RRC signaling subset includes frequencyHopping.

In an embodiment, each piece of RRC signaling in the target RRC signaling subset includes frequencyHoppingOffsetLists.

In an embodiment, each piece of RRC signaling in the target RRC signaling subset includes resourceAllocation.

In an embodiment, each piece of RRC signaling in the target RRC signaling subset includes pusch-TimeDomainAllocationList.

In an embodiment, each piece of RRC signaling in the target RRC signaling subset includes mcs-Table.

In an embodiment, each piece of RRC signaling in the target RRC signaling subset includes mcs-TableTransformPrecoder.

In an embodiment, each piece of RRC signaling in the target RRC signaling subset includes transformPrecoder.

In an embodiment, each piece of RRC signaling in the target RRC signaling subset includes codebookSubset.

In an embodiment, each piece of RRC signaling in the target RRC signaling subset includes maxRank.

In an embodiment, each piece of RRC signaling in the target RRC signaling subset includes rbg-Size.

In an embodiment, each piece of RRC signaling in the target RRC signaling subset includes uci-OnPUSCH.

In an embodiment, each piece of RRC signaling in the target RRC signaling subset includes tp-pi2BPSK.

In an embodiment, each piece of RRC signaling in the target RRC signaling subset is pusch-AggregationFactor.

In an embodiment, each piece of RRC signaling in the target RRC signaling subset is txConfig.

In an embodiment, each piece of RRC signaling in the target RRC signaling subset is dmrs-UplinkForPUSCH-MappingTypeA.

In an embodiment, each piece of RRC signaling in the target RRC signaling subset is dmrs-UplinkForPUSCH-MappingTypeB.

In an embodiment, each piece of RRC signaling in the target RRC signaling subset is pusch-PowerControl.

In an embodiment, each piece of RRC signaling in the target RRC signaling subset is frequencyHopping.

In an embodiment, each piece of RRC signaling in the target RRC signaling subset is frequencyHoppingOffsetLists.

In an embodiment, each piece of RRC signaling in the target RRC signaling subset is resourceAllocation.

In an embodiment, each piece of RRC signaling in the target RRC signaling subset is pusch-TimeDomainAllocationList.

In an embodiment, each piece of RRC signaling in the target RRC signaling subset is mcs-Table.

In an embodiment, each piece of RRC signaling in the target RRC signaling subset is mcs-TableTransformPrecoder.

In an embodiment, each piece of RRC signaling in the target RRC signaling subset is transformPrecoder.

In an embodiment, each piece of RRC signaling in the target RRC signaling subset is codebookSubset.

In an embodiment, each piece of RRC signaling in the target RRC signaling subset is maxRank.

In an embodiment, each piece of RRC signaling in the target RRC signaling subset is rbg-Size.

In an embodiment, each piece of RRC signaling in the target RRC signaling subset is uci-OnPUSCH.

In an embodiment, each piece of RRC signaling in the target RRC signaling subset is tp-pi2BPSK.

In an embodiment, a name of each piece of RRC signaling in the target RRC signaling subset includes pusch-AggregationFactor.

In an embodiment, the name of each piece of RRC signaling in the target RRC signaling subset includes txConfig.

In an embodiment, the name of each piece of RRC signaling in the target RRC signaling subset includes dmrs-UplinkForPUSCH-MappingTypeA.

In an embodiment, the name of each piece of RRC signaling in the target RRC signaling subset includes dmrs-UplinkForPUSCH-MappingTypeB.

In an embodiment, the name of each piece of RRC signaling in the target RRC signaling subset includes pusch-PowerControl.

In an embodiment, the name of each piece of RRC signaling in the target RRC signaling subset includes frequencyHopping.

In an embodiment, the name of each piece of RRC signaling in the target RRC signaling subset includes frequencyHoppingOffsetLists.

In an embodiment, the name of each piece of RRC signaling in the target RRC signaling subset includes resourceAllocation.

In an embodiment, the name of each piece of RRC signaling in the target RRC signaling subset includes pusch-TimeDomainAllocationList.

In an embodiment, the name of each piece of RRC signaling in the target RRC signaling subset includes mcs-Table.

In an embodiment, the name of each piece of RRC signaling in the target RRC signaling subset includes mcs-TableTransformPrecoder.

In an embodiment, the name of each piece of RRC signaling in the target RRC signaling subset includes transformPrecoder.

In an embodiment, the name of each piece of RRC signaling in the target RRC signaling subset includes codebookSubset.

In an embodiment, the name of each piece of RRC signaling in the target RRC signaling subset includes maxRank.

In an embodiment, the name of each piece of RRC signaling in the target RRC signaling subset includes rbg-Size.

In an embodiment, the name of each piece of RRC signaling in the target RRC signaling subset includes uci-OnPUSCH.

In an embodiment, the name of each piece of RRC signaling in the target RRC signaling subset includes tp-pi2BPSK.

In an embodiment, the name of each piece of RRC signaling in the target RRC signaling subset includes minimumSchedulingOffsetK2.

In an embodiment, the name of each piece of RRC signaling in the target RRC signaling subset includes ul-AccessConfigList.

In an embodiment, the name of each piece of RRC signaling in the target RRC signaling subset includes harq-ProcessNumberSize.

In an embodiment, the name of each piece of RRC signaling in the target RRC signaling subset includes dmrs-SequenceInitialization.

In an embodiment, the name of each piece of RRC signaling in the target RRC signaling subset includes numberOfBitsForRV.

In an embodiment, the name of each piece of RRC signaling in the target RRC signaling subset includes antennaPortsFieldPresence.

In an embodiment, the name of each piece of RRC signaling in the target RRC signaling subset includes invalidSymbolPatternIndicator.

In an embodiment, the name of each piece of RRC signaling in the target RRC signaling subset includes priorityIndicator.

In an embodiment, the name of each piece of RRC signaling in the target RRC signaling subset includes pusch-RepTypeIndicator.

In an embodiment, the name of each piece of RRC signaling in the target RRC signaling subset includes resourceAllocationType1Granularity.

In an embodiment, the name of each piece of RRC signaling in the target RRC signaling subset includes ul-FullPowerTransmission.

In an embodiment, the name of each piece of RRC signaling in the target RRC signaling subset includes numberOfInvalidSymbolsForDL-UL-Switching.

In an embodiment, the name of each piece of RRC signaling in the target RRC signaling subset includes betaOffsetsCrossPri0.

In an embodiment, the name of each piece of RRC signaling in the target RRC signaling subset includes betaOffsetsCrossPri1.

In an embodiment, the name of each piece of RRC signaling in the target RRC signaling subset includes mappingPattern.

In an embodiment, the name of each piece of RRC signaling in the target RRC signaling subset includes secondTPCField.

In an embodiment, the name of each piece of RRC signaling in the target RRC signaling subset includes sequenceOffsetForRV.

In an embodiment, the name of each piece of RRC signaling in the target RRC signaling subset includes availableSlotCounting.

In an embodiment, the name of each piece of RRC signaling in the target RRC signaling subset includes dmrs-BundlingPUSCH-Config.

In an embodiment, a name of the piece of RRC signaling in the target RRC signaling subset other than the first RRC signaling includes -r18.

In an embodiment, the name of the piece of RRC signaling in the target RRC signaling subset other than the first RRC signaling includes -r19.

In an embodiment, the name of the piece of RRC signaling in the target RRC signaling subset other than the first RRC signaling includes -r20.

In an embodiment, a size of a field is the number of bits included in this field.

In an embodiment, each piece of RRC signaling in the target RRC signaling subset is used to determine a maximum number of CBGs of each TB.

In an embodiment, each piece of RRC signaling in the target RRC signaling subset is used to determine whether to enable CBG-based transmission.

In an embodiment, each piece of RRC signaling in the target RRC signaling subset is used to determine a maximum MIMO (Multiple-Input Multiple-Output, multiple-input multiple-output) layer for the PUSCH in all UL BWPs (Bandwidth part, bandwidth part) corresponding to the cell.

In an embodiment, each piece of RRC signaling in the target RRC signaling subset is used to determine the number of HARQ processes used on the PUSCH of the cell.

In an embodiment, each piece of RRC signaling in the target RRC signaling subset is used to determine whether to enable configuration of an advanced processing time capability 2 (advanced processing time capability 2) for the PUSCH.

In an embodiment, each piece of RRC signaling in the target RRC signaling subset is used to determine whether to enable limited buffer rate-matching (Limited buffer rate-matching, LBRM).

In an embodiment, each piece of RRC signaling in the target RRC signaling subset is used to determine a HARQ mode for a HARQ process ID.

In an embodiment, each piece of RRC signaling in the target RRC signaling subset is used to determine whether to enable group hopping (group hopping) for RMRS transmission with transform precoding.

In an embodiment, each piece of RRC signaling in the target RRC signaling subset is used to determine a power offset (offset) between msg3 and RACH (Random Access Channel(s), random access channel) preamble (preamble) transmission.

In an embodiment, each piece of RRC signaling in the target RRC signaling subset is used to determine a P0 value for a PUSCH (other than msg3) with grant (grant).

In an embodiment, each piece of RRC signaling in the target RRC signaling subset indicates a maximum number of CBGs of each TB.

In an embodiment, each piece of RRC signaling in the target RRC signaling subset indicates whether to enable CBG-based transmission.

In an embodiment, each piece of RRC signaling in the target RRC signaling subset indicates a maximum MIMO (Multiple-Input Multiple-Output, multiple-input multiple-output) layer for the PUSCH in all UL BWPs (Bandwidth part, bandwidth part) corresponding to the cell.

In an embodiment, each piece of RRC signaling in the target RRC signaling subset indicates the number of HARQ processes used on the PUSCH of the cell.

In an embodiment, each piece of RRC signaling in the target RRC signaling subset indicates whether to enable configuration of an advanced processing time capability 2 (advanced processing time capability 2) for the PUSCH.

In an embodiment, each piece of RRC signaling in the target RRC signaling subset indicates whether to enable limited buffer rate-matching (Limited buffer rate-matching, LBRM).

In an embodiment, each piece of RRC signaling in the target RRC signaling subset indicates a HARQ mode for a HARQ process ID.

In an embodiment, each piece of RRC signaling in the target RRC signaling subset indicates whether to enable group hopping (group hopping) for RMRS transmission with transform precoding.

In an embodiment, each piece of RRC signaling in the target RRC signaling subset indicates a power offset (offset) between msg3 and RACH (Random Access Channel(s), random access channel) preamble (preamble) transmission.

In an embodiment, each piece of RRC signaling in the target RRC signaling subset indicates a P0 value for a PUSCH (other than msg3) with grant (grant).

In an embodiment, each piece of RRC signaling in the target RRC signaling subset is codeBlockGroupTransmission.

In an embodiment, each piece of RRC signaling in the target RRC signaling subset is rateMatching.

In an embodiment, each piece of RRC signaling in the target RRC signaling subset is xOverhead.

In an embodiment, each piece of RRC signaling in the target RRC signaling subset is maxMIMO-Layers.

In an embodiment, each piece of RRC signaling in the target RRC signaling subset is processingType2Enabled.

In an embodiment, each piece of RRC signaling in the target RRC signaling subset is nrofHARQ-ProcessesForPUSCH-r17.

In an embodiment, each piece of RRC signaling in the target RRC signaling subset is uplinkHARQ-mode-r17.

In an embodiment, each piece of RRC signaling in the target RRC signaling subset is groupHoppingEnabledTransformPrecoding.

In an embodiment, each piece of RRC signaling in the target RRC signaling subset is msg3-DeltaPreamble.

In an embodiment, each piece of RRC signaling in the target RRC signaling subset is p0-NominalWithGrant.

In an embodiment, the name of each piece of RRC signaling in the target RRC signaling subset includes codeBlockGroupTransmission.

In an embodiment, the name of each piece of RRC signaling in the target RRC signaling subset includes rateMatching.

In an embodiment, the name of each piece of RRC signaling in the target RRC signaling subset includes xOverhead.

In an embodiment, the name of each piece of RRC signaling in the target RRC signaling subset includes maxMIMO-Layers.

In an embodiment, the name of each piece of RRC signaling in the target RRC signaling subset includes processingType2Enabled.

In an embodiment, the name of each piece of RRC signaling in the target RRC signaling subset includes nrofHARQ-ProcessesForPUSCH.

In an embodiment, the name of each piece of RRC signaling in the target RRC signaling subset includes uplinkHARQ-mode.

In an embodiment, the name of each piece of RRC signaling in the target RRC signaling subset includes groupHoppingEnabledTransformPrecoding.

In an embodiment, the name of each piece of RRC signaling in the target RRC signaling subset includes msg3-DeltaPreamble.

In an embodiment, the name of each piece of RRC signaling in the target RRC signaling subset includes p0-NominalWithGrant.

In an embodiment, each piece of RRC signaling in the target RRC signaling subset includes SRS-Config.

In an embodiment, each piece of RRC signaling in the target RRC signaling subset is SRS-Config.

In an embodiment, the name of each piece of RRC signaling in the target RRC signaling subset includes SRS-Config.

In an embodiment, each piece of RRC signaling in the target RRC signaling subset includes AvailableSlotOffset.

In an embodiment, each piece of RRC signaling in the target RRC signaling subset is AvailableSlotOffset.

In an embodiment, the name of each piece of RRC signaling in the target RRC signaling subset includes AvailableSlotOffset.

In an embodiment, when whether there is a fifth field in the piece of RRC signaling in the target RRC signaling subset other than the first RRC signaling is used to determine whether the target DCI includes a field in the target field set, {when the fifth field is present in the piece of RRC signaling in the target RRC signaling subset other than the first RRC signaling, the target DCI includes this field in the target field set; or when the fifth field is absent in the piece of RRC signaling in the target RRC signaling subset other than the first RRC signaling, the target DCI does not include this field in the target field set}.

In an embodiment, when whether there is a fifth field in the piece of RRC signaling in the target RRC signaling subset other than the first RRC signaling is used to determine whether the target DCI includes a field in the target field set, {when the fifth field is present in the piece of RRC signaling in the target RRC signaling subset other than the first RRC signaling, the target DCI does not include this field in the target field set; or when the fifth field is absent in the piece of RRC signaling in the target RRC signaling subset other than the first RRC signaling, the target DCI includes this field in the target field set}.

In an embodiment, the fifth field is used to determine the number of repetitions for data (Number of repetitions for data).

In an embodiment, the fifth field is used to determine a transmission scheme (Transmission scheme) of the PUSCH.

In an embodiment, the transmission scheme is one of codebook (codebook)-based transmission, non-codebook (non-codebook)-based transmission, or single-antenna port transmission.

In an embodiment, the transmission scheme is one of codebook (codebook)-based transmission or non-codebook (non-codebook)-based transmission.

In an embodiment, the fifth field is used to determine DMRS configuration for PUSCH transmission using a PUSCH mapping type A.

In an embodiment, the fifth field is used to determine DMRS configuration for PUSCH transmission using a PUSCH mapping type B.

In an embodiment, the fifth field is used to determine power control of the PUSCH.

In an embodiment, the fifth field is used to determine a frequency hopping pattern.

In an embodiment, the fifth field is used to determine a frequency hopping offset (frequency hopping offset(s)) set.

In an embodiment, the fifth field is used to determine a resource allocation type.

In an embodiment, the fifth field is used to determine a frequency domain resource allocation type.

In an embodiment, the fifth field is used to determine a list of time domain allocations for timing of UL assignment to UL data (List of time domain allocations for timing of UL assignment to UL data).

In an embodiment, the fifth field is used to determine an MCS table that is used for the PUSCH without a transformer precoder.

In an embodiment, the fifth field is used to determine an MCS table that is used for the PUSCH with a transformer precoder.

In an embodiment, the fifth field is used to determine whether transform precoding is enabled.

In an embodiment, the fifth field is used to determine a specific choice for a transformer precoder (transformer precoder) of the PUSCH.

In an embodiment, the fifth field is used to determine a subset of PMIs addressed by TPMI (Subset of PMIs addressed by TPMI).

In an embodiment, the fifth field is used to determine a subset of PMIs addressed by TRIs (Subset of PMIs Addressed by TRIs).

In an embodiment, the fifth field is used to determine a size of an RBG that is selected between configuration 1 and configuration 2 for the PUSCH.

In an embodiment, the fifth field is used to determine a beta offset set.

In an embodiment, the fifth field is used to determine whether pi/2-BPSK modulation with transform precoding is enabled.

In an embodiment, the fifth field indicates the number of repetitions for data (Number of repetitions for data).

In an embodiment, the fifth field indicates a transmission scheme (Transmission scheme) of the PUSCH.

In an embodiment, the transmission scheme is one of codebook (codebook)-based transmission, non-codebook (non-codebook)-based transmission, or single-antenna port transmission.

In an embodiment, the transmission scheme is one of codebook (codebook)-based transmission or non-codebook (non-codebook)-based transmission.

In an embodiment, the fifth field indicates DMRS configuration for PUSCH transmission using a PUSCH mapping type A.

In an embodiment, the fifth field indicates DMRS configuration for PUSCH transmission using a PUSCH mapping type B.

In an embodiment, the fifth field indicates power control of the PUSCH.

In an embodiment, the fifth field indicates a frequency hopping pattern.

In an embodiment, the fifth field indicates a frequency hopping offset (frequency hopping offset(s)) set.

In an embodiment, the fifth field indicates a resource allocation type.

In an embodiment, the fifth field indicates a frequency domain resource allocation type.

In an embodiment, the fifth field indicates a list of time domain allocations for timing of UL assignment to UL data (List of time domain allocations for timing of UL assignment to UL data).

In an embodiment, the fifth field indicates an MCS table that is used for the PUSCH without a transformer precoder.

In an embodiment, the fifth field indicates an MCS table that is used for the PUSCH with a transformer precoder.

In an embodiment, the fifth field indicates whether transform precoding is enabled.

In an embodiment, the fifth field indicates a specific choice for a transformer precoder (transformer precoder) of the PUSCH.

In an embodiment, the fifth field indicates a subset of PMIs addressed by TPMI (Subset of PMIs addressed by TPMI).

In an embodiment, the fifth field indicates a subset of PMIs addressed by TRIs (Subset of PMIs Addressed by TRIs).

In an embodiment, the fifth field indicates a size of an RBG that is selected between configuration 1 and configuration 2 for the PUSCH.

In an embodiment, the fifth field indicates a beta offset set.

In an embodiment, the fifth field indicates whether pi/2-BPSK modulation with transform precoding is enabled.

In an embodiment, the fifth field indicates whether there is an antenna port (Antenna ports) field.

In an embodiment, the fifth field indicates whether to enable PUSCH repetitions counted based on an available slot.

In an embodiment, the fifth field indicates a set of beta offsets configured for HARQ-ACK multiplexing onto PUSCHs with different priorities.

In an embodiment, the fifth field indicates information about DMRS bundling (bundling) for the PUSCH.

In an embodiment, the fifth field indicates whether there is a DMRS sequence initialization (DMRS Sequence Initialization) field.

In an embodiment, the fifth field indicates a size of a HARQ process number (HARQ process number) field.

In an embodiment, the fifth field indicates an invalid symbol pattern (pattern) for a PUSCH transmission type B.

In an embodiment, the fifth field indicates whether to follow a cyclic mapping pattern (Cyclic mapping pattern) or a sequential mapping pattern (Sequential mapping pattern) when two SRS resource sets are configured for PUSCH transmission and a PUSCH transmission occasion (PUSCH transmission occasions) is associated with the two SRS resource sets.

In an embodiment, the fifth field indicates a list of minimum K2 values.

In an embodiment, the fifth field indicates a size of a redundancy version (Redundancy version) field.

In an embodiment, the fifth field indicates the number of symbols invalid to a PUSCH repetition type B after the last semi-static (semi-static) DL (Downlink, downlink) symbol.

In an embodiment, the fifth field indicates whether there is a priority indicator (priority indicator) field.

In an embodiment, the fifth field indicates whether to follow behavior of a PUSCH repetition type (repetition type) A or behavior of a PUSCH repetition type B.

In an embodiment, the fifth field indicates whether there is a second TPC field (second TPC field).

In an embodiment, the fifth field indicates an RV offset configured for a start RV (Redundancy version, redundancy version) of the first repetition (the first actual repetition (actual repetition) in the PUSCH repetition type B) corresponding to a second SRS resource set for the PUSCH.

In an embodiment, the fifth field indicates a combined list of a cyclic prefix extension, a channel access priority class (channel access priority class, CAPC), and a UL (Uplink, uplink) channel access type.

In an embodiment, the fifth field indicates a UL full power transmission mode (UL full power transmission mode).

In an embodiment, the fifth field indicates a scheduling granularity indicated by a start point and a length applicable to a resource allocation type 1.

In an embodiment, the fifth field indicates whether there is an antenna port (Antenna ports) field.

In an embodiment, the fifth field is used to determine whether to enable PUSCH repetitions counted based on an available slot.

In an embodiment, the fifth field is used to determine a set of beta offsets configured for HARQ-ACK multiplexing onto PUSCHs with different priorities.

In an embodiment, the fifth field is used to determine information about DMRS bundling (bundling) for the PUSCH.

In an embodiment, the fifth field is used to determine whether there is a DMRS sequence initialization (DMRS Sequence Initialization) field.

In an embodiment, the fifth field is used to determine a size of a HARQ process number (HARQ process number) field.

In an embodiment, the fifth field is used to determine an invalid symbol pattern (pattern) for a PUSCH transmission type B.

In an embodiment, the fifth field is used to determine whether to follow a cyclic mapping pattern (Cyclic mapping pattern) or a sequential mapping pattern (Sequential mapping pattern) when two SRS resource sets are configured for PUSCH transmission and a PUSCH transmission occasion (PUSCH transmission occasions) is associated with the two SRS resource sets.

In an embodiment, the fifth field is used to determine a list of minimum K2 values.

In an embodiment, the fifth field is used to determine a size of a redundancy version (Redundancy version) field.

In an embodiment, the fifth field is used to determine the number of symbols invalid to a PUSCH repetition type B after the last semi-static (semi-static) DL (Downlink, downlink) symbol.

In an embodiment, the fifth field is used to determine whether there is a priority indicator (priority indicator) field.

In an embodiment, the fifth field is used to determine whether to follow behavior of a PUSCH repetition type (repetition type) A or behavior of a PUSCH repetition type B.

In an embodiment, the fifth field is used to determine whether there is a second TPC field (second TPC field).

In an embodiment, the fifth field is used to determine an RV offset configured for a start RV (Redundancy version, redundancy version) of the first repetition (the first actual repetition (actual repetition) in the PUSCH repetition type B) corresponding to a second SRS resource set for the PUSCH.

In an embodiment, the fifth field is used to determine a combined list of a cyclic prefix extension, a channel access priority class (channel access priority class, CAPC), and a UL (Uplink, uplink) channel access type.

In an embodiment, the fifth field is used to determine a UL full power transmission mode (UL full power transmission mode).

In an embodiment, the fifth field is used to determine a scheduling granularity indicated by a start point and a length applicable to a resource allocation type 1.

In an embodiment, the fifth field includes pusch-AggregationFactor.

In an embodiment, the fifth field includes txConfig.

In an embodiment, the fifth field includes dmrs-UplinkForPUSCH-MappingTypeA.

In an embodiment, the fifth field includes dmrs-UplinkForPUSCH-MappingTypeB.

In an embodiment, the fifth field includes pusch-PowerControl.

In an embodiment, the fifth field includes frequencyHopping.

In an embodiment, the fifth field includes frequencyHoppingOffsetLists.

In an embodiment, the fifth field includes resourceAllocation.

In an embodiment, the fifth field includes pusch-TimeDomainAllocationList.

In an embodiment, the fifth field includes mcs-Table.

In an embodiment, the fifth field includes mcs-TableTransformPrecoder.

In an embodiment, the fifth field includes a transformPrecoder.

In an embodiment, the fifth field includes codebookSubset.

In an embodiment, the fifth field includes maxRank.

In an embodiment, the fifth field includes rbg-Size.

In an embodiment, the fifth field includes uci-OnPUSCH.

In an embodiment, the fifth field includes tp-pi2BPSK.

In an embodiment, the fifth field is pusch-AggregationFactor.

In an embodiment, the fifth field is txConfig.

In an embodiment, the fifth field is dmrs-UplinkForPUSCH-MappingTypeA.

In an embodiment, the fifth field is dmrs-UplinkForPUSCH-MappingTypeB.

In an embodiment, the fifth field is pusch-PowerControl.

In an embodiment, the fifth field is frequencyHopping.

In an embodiment, the fifth field is frequencyHoppingOffsetLists.

In an embodiment, the fifth field is resourceAllocation.

In an embodiment, the fifth field is pusch-TimeDomainAllocationList.

In an embodiment, the fifth field is mcs-Table.

In an embodiment, the fifth field is mcs-TableTransformPrecoder.

In an embodiment, the fifth field is transformPrecoder.

In an embodiment, the fifth field is codebookSubset.

In an embodiment, the fifth field is maxRank.

In an embodiment, the fifth field is rbg-Size.

In an embodiment, the fifth field is uci-OnPUSCH.

In an embodiment, the fifth field is tp-pi2BPSK.

In an embodiment, a name of the fifth field includes pusch-AggregationFactor.

In an embodiment, the name of the fifth field includes txConfig.

In an embodiment, the name of the fifth field includes dmrs-UplinkForPUSCH-MappingTypeA.

In an embodiment, the name of the fifth field includes dmrs-UplinkForPUSCH-MappingTypeB.

In an embodiment, the name of the fifth field includes pusch-PowerControl.

In an embodiment, the name of the fifth field includes frequencyHopping.

In an embodiment, the name of the fifth field includes frequencyHoppingOffsetLists.

In an embodiment, the name of the fifth field includes resourceAllocation.

In an embodiment, the name of the fifth field includes pusch-TimeDomainAllocationList.

In an embodiment, the name of the fifth field includes mcs-Table.

In an embodiment, the name of the fifth field includes mcs-TableTransformPrecoder.

In an embodiment, the name of the fifth field includes transformPrecoder.

In an embodiment, the name of the fifth field includes codebookSubset.

In an embodiment, the name of the fifth field includes maxRank.

In an embodiment, the name of the fifth field includes rbg-Size.

In an embodiment, the name of the fifth field includes uci-OnPUSCH.

In an embodiment, the name of the fifth field includes tp-pi2BPSK.

In an embodiment, the name of the fifth field includes minimumSchedulingOffsetK2.

In an embodiment, the name of the fifth field includes ul-AccessConfigList.

In an embodiment, the name of the fifth field includes harq-ProcessNumberSize.

In an embodiment, the name of the fifth field includes dmrs-SequenceInitialization.

In an embodiment, the name of the fifth field includes numberOfBitsForRV.

In an embodiment, the name of the fifth field includes antennaPortsFieldPresence.

In an embodiment, the name of the fifth field includes invalidSymbolPatternIndicator.

In an embodiment, the name of the fifth field includes priorityIndicator.

In an embodiment, the name of the fifth field includes pusch-RepTypeIndicator.

In an embodiment, the name of the fifth field includes resourceAllocationType1Granularity.

In an embodiment, the name of the fifth field includes ul-FullPowerTransmission.

In an embodiment, the name of the fifth field includes numberOfInvalidSymbolsForDL-UL-Switching.

In an embodiment, the name of the fifth field includes betaOffsetsCrossPri0.

In an embodiment, the name of the fifth field includes betaOffsetsCrossPri1.

In an embodiment, the name of the fifth field includes mappingPattern.

In an embodiment, the name of the fifth field includes secondTPCField.

In an embodiment, the name of the fifth field includes sequenceOffsetForRV.

In an embodiment, the name of the fifth field includes availableSlotCounting.

In an embodiment, the name of the fifth field includes dmrs-BundlingPUSCH-Config.

In an embodiment, the name of the fifth field includes -r18.

In an embodiment, the name of the fifth field includes -r19.

In an embodiment, the name of the fifth field includes -r20.

In an embodiment, a size of a field is the number of bits included in this field.

In an embodiment, the fifth field is used to determine a maximum number of CBGs of each TB.

In an embodiment, the fifth field is used to determine whether to enable CBG-based transmission.

In an embodiment, the fifth field is used to determine a maximum MIMO (Multiple-Input Multiple-Output, multiple-input multiple-output) layer for the PUSCH in all UL BWPs (Bandwidth part, bandwidth part) corresponding to the cell.

In an embodiment, the fifth field is used to determine the number of HARQ processes used on the PUSCH of the cell.

In an embodiment, the fifth field is used to determine whether to enable configuration of an advanced processing time capability 2 (advanced processing time capability 2) for the PUSCH.

In an embodiment, the fifth field is used to determine whether to enable limited buffer rate-matching (Limited buffer rate-matching, LBRM).

In an embodiment, the fifth field is used to determine a HARQ mode for a HARQ process ID.

In an embodiment, the fifth field is used to determine whether to enable group hopping (group hopping) for RMRS transmission with transform precoding.

In an embodiment, the fifth field is used to determine a power offset (offset) between msg3 and RACH (Random Access Channel(s), random access channel) preamble (preamble) transmission.

In an embodiment, the fifth field is used to determine a P0 value for a PUSCH (other than msg3) with grant (grant).

In an embodiment, the fifth field indicates a maximum number of CBGs of each TB.

In an embodiment, the fifth field indicates whether to enable CBG-based transmission.

In an embodiment, the fifth field indicates a maximum MIMO (Multiple-Input Multiple-Output, multiple-input multiple-output) layer for the PUSCH in all UL BWPs (Bandwidth part, bandwidth part) corresponding to the cell.

In an embodiment, the fifth field indicates the number of HARQ processes used on the PUSCH of the cell.

In an embodiment, the fifth field indicates whether to enable configuration of an advanced processing time capability 2 (advanced processing time capability 2) for the PUSCH.

In an embodiment, the fifth field indicates whether to enable limited buffer rate-matching (Limited buffer rate-matching, LBRM).

In an embodiment, the fifth field indicates a HARQ mode for a HARQ process ID.

In an embodiment, the fifth field indicates whether to enable group hopping (group hopping) for RMRS transmission with transform precoding.

In an embodiment, the fifth field indicates a power offset (offset) between msg3 and RACH (Random Access Channel(s), random access channel) preamble (preamble) transmission.

In an embodiment, the fifth field indicates a P0 value for a PUSCH (other than msg3) with grant (grant).

In an embodiment, the fifth field is codeBlockGroupTransmission.

In an embodiment, the fifth field is rateMatching.

In an embodiment, the fifth field is xOverhead.

In an embodiment, the fifth field is maxMIMO-Layers.

In an embodiment, the fifth field is processingType2Enabled.

In an embodiment, the fifth field is nrofHARQ-ProcessesForPUSCH-r17.

In an embodiment, the fifth field is uplinkHARQ-mode-r17.

In an embodiment, the fifth field is groupHoppingEnabledTransformPrecoding.

In an embodiment, the fifth field is msg3-DeltaPreamble.

In an embodiment, the fifth field is p0-NominalWithGrant.

In an embodiment, the name of the fifth field includes codeBlockGroupTransmission.

In an embodiment, the name of the fifth field includes rateMatching.

In an embodiment, the name of the fifth field includes xOverhead.

In an embodiment, the name of the fifth field includes maxMIMO-Layers.

In an embodiment, the name of the fifth field includes processingType2Enabled.

In an embodiment, the name of the fifth field includes nrofHARQ-ProcessesForPUSCH.

In an embodiment, the name of the fifth field includes uplinkHARQ-mode.

In an embodiment, the name of the fifth field includes groupHoppingEnabledTransformPrecoding.

In an embodiment, the name of the fifth field includes msg3-DeltaPreamble.

In an embodiment, the name of the fifth field includes p0-NominalWithGrant.

In an embodiment, the fifth field includes Available SlotOffset.

In an embodiment, the fifth field is Available SlotOffset.

In an embodiment, the name of the fifth field includes AvailableSlotOffset.

### Embodiment 7

Embodiment 7 illustrates a diagram of relationships between the first cell set, the target DCI, a second target field set, and the first RRC signaling according to an embodiment of this application, as shown in FIG. 7.

In Embodiment 7, when the number of cells included in the first cell set is equal to 1 or greater than 1, whether the target DCI includes the second target field set depends on the configuration of the first RRC signaling.

In an embodiment, the second target field set includes only one field.

In an embodiment, the second target field set includes a plurality of fields.

In an embodiment, there is no intersection set between the second target field set and the target field set.

In an embodiment, a field in the second target field set includes at least one bit.

In an embodiment, a field in the second target field set includes a non-negative integer number of bits.

In an embodiment, the second target field set includes a frequency domain resource assignment (frequency domain resource assignment) field.

In an embodiment, the second target field set includes a time domain resource assignment (time domain resource assignment) field.

In an embodiment, the second target field set includes a frequency hopping flag (frequency hopping flag) field.

In an embodiment, the second target field set includes a modulation and coding scheme (modulation and coding scheme) field.

In an embodiment, the second target field set includes a HARQ process number (HARQ process number) field.

In an embodiment, the second target field set includes a second TPC command for scheduled PUSCH (Second TPC command for scheduled PUSCH) field.

In an embodiment, the second target field set includes an SRS resource indicator (SRS resource indicator) field.

In an embodiment, the second target field set includes an SRS resource set indicator (SRS resource set indicator) field.

In an embodiment, the second target field set includes a second SRS resource indicator (Second SRS resource indicator) field.

In an embodiment, the second target field set includes a precoding information and number of layers (Precoding information and number of layers) field.

In an embodiment, the second target field set includes a second precoding information (Second Precoding information) field.

In an embodiment, the second target field set includes an antenna port (Antenna ports) field.

In an embodiment, the second target field set includes a CSI request (CSI request) field.

In an embodiment, the second target field set includes an SRS request (SRS request) field.

In an embodiment, the second target field set includes an SRS offset indicator (SRS offset indicator) field.

In an embodiment, the second target field set includes a CBG transmission information (CBG transmission information (CBGTI)) field.

In an embodiment, the second target field set includes a PTRS-DMRS association (PTRS-DMRS association) field.

In an embodiment, the second target field set includes a second PTRS-DMRS association (Second PTRS-DMRS association) field.

In an embodiment, the second target field set includes a beta offset indicator (beta_offset indicator) field.

In an embodiment, the second target field set includes a DMRS sequence initialization (DMRS sequence initialization) field.

In an embodiment, the second target field set includes a UL-SCH indicator (UL-SCH indicator) field.

In an embodiment, the second target field set includes a ChannelAccess-CPext-CAPC field.

In an embodiment, the second target field set includes an open-loop power control parameter set indication (Open-loop power control parameter set indication) field.

In an embodiment, the second target field set includes an SCell dormancy indication (SCell dormancy indication) field.

In an embodiment, the second target field set includes a priority indicator (Priority indicator) field. In an embodiment, the second target field set includes an invalid symbol pattern indicator (Invalid symbol pattern indicator) field.

In an embodiment, the second target field set includes a minimum applicable scheduling offset indicator (Minimum applicable scheduling offset indicator) field.

In an embodiment, the second target field set includes a PDCCH monitoring adaptation indication (PDCCH monitoring adaptation indication) field.

In an embodiment, a field in the second target field set indicates frequency domain resource assignment.

In an embodiment, a field in the second target field set indicates time domain resource assignment.

In an embodiment, a field in the second target field set indicates whether frequency hopping is performed.

In an embodiment, a field in the second target field set indicates an MCS (Modulation and coding scheme, modulation and coding scheme).

In an embodiment, a field in the second target field set indicates a HARQ (Hybrid automatic repeat request, hybrid automatic repeat request) process number.

In an embodiment, a field in the second target field set is used to determine transmit power of the PUSCH.

In an embodiment, a field in the second target field set indicates an SRS (Sounding reference signal, sounding reference signal) resource.

In an embodiment, a field in the second target field set indicates an SRS resource set.

In an embodiment, a field in the second target field set indicates at least one of precoding information or the number of transport layers.

In an embodiment, a field in the second target field set indicates an antenna port (Antenna ports).

In an embodiment, a field in the second target field set indicates related information of a CSI report.

In an embodiment, a field in the second target field set indicates CBG (Code block group, code block group) transmission information.

In an embodiment, a field in the second target field set indicates an association between a PTRS and a DMRS.

In an embodiment, a field in the second target field set indicates a beta offset (beta_offset) value. In an embodiment, a value of a field in the second target field set is used to generate a DMRS (Demodulation reference signal, demodulation reference signal) sequence.

In an embodiment, a field in the second target field set indicates information about SCell dormancy.

In an embodiment, a field in the second target field set indicates a transmit waveform of the PUSCH.

In an embodiment, a field in the second target field set indicates whether to enable transform precoding (Transform precoding).

In an embodiment, a field in the second target field set is used to trigger an aperiodic (aperiodic) SRS resource set.

In an embodiment, a field in the second target field set indicates an available slot offset (available slot offset).

In an embodiment, a field in the second target field set indicates whether a UL-SCH is transmitted on the PUSCH.

In an embodiment, a field in the second target field set indicates an open-loop power control parameter set.

In an embodiment, a field in the second target field set indicates a priority.

In an embodiment, a field in the second target field set indicates an invalid symbol pattern. In an embodiment, a field in the second target field set indicates a minimum applicable scheduling offset.

In an embodiment, a field in the second target field set indicates skipping (skipping) of PDCCH monitoring.

In an embodiment, when the target DCI includes the second target field set, the second target field set in the target DCI is applied to the first cell set.

In an embodiment, when the target DCI includes the second target field set, the second target field set in the target DCI is applied to each cell of the first cell set.

In an embodiment, when the target DCI includes the second target field set, the second target field set in the target DCI is applied to PUSCH sending in each cell of the first cell set.

In an embodiment, when the target DCI includes the second target field set, the second target field set in the target DCI is applied to sending of a reference signal (Reference signal(s)) corresponding to the PUSCH in each cell of the first cell set.

In an embodiment, the expression that the second target field set in the target DCI is applied to the first cell set includes: the second target field set in the target DCI is used for PUSCH transmission in each cell of the first cell set.

In an embodiment, the expression that the second target field set in the target DCI is applied to the first cell set includes: the second target field set in the target DCI includes scheduling information for the PUSCH sent in the first cell set.

In an embodiment, the expression that the second target field set in the target DCI is applied to the first cell set includes: the second target field set in the target DCI includes related indication information of PUSCHs sent in all the cells of the first cell set.

In an embodiment, the expression that the second target field set in the target DCI is applied to the first cell set includes: the second target field set in the target DCI includes scheduling information for PUSCHs sent in all the cells of the first cell set.

In an embodiment, the expression that the second target field set in the target DCI is applied to the first cell set includes: the second target field set in the target DCI includes indication information for all the cells of the first cell set.

In an embodiment, the expression that the second target field set in the target DCI is applied to the first cell set includes: the second target field set in the target DCI includes indication information used to send the PUSCH in the first cell set.

In an embodiment, the expression that the second target field set in the target DCI is applied to the first cell set includes: each field of the second target field set in the target DCI includes indication information for all the cells of the first cell set.

In an embodiment, the expression that the second target field set in the target DCI is applied to the first cell set includes: each field of the second target field set in the target DCI includes indication information for PUSCHs sent in all the cells of the first cell set.

### Embodiment 8

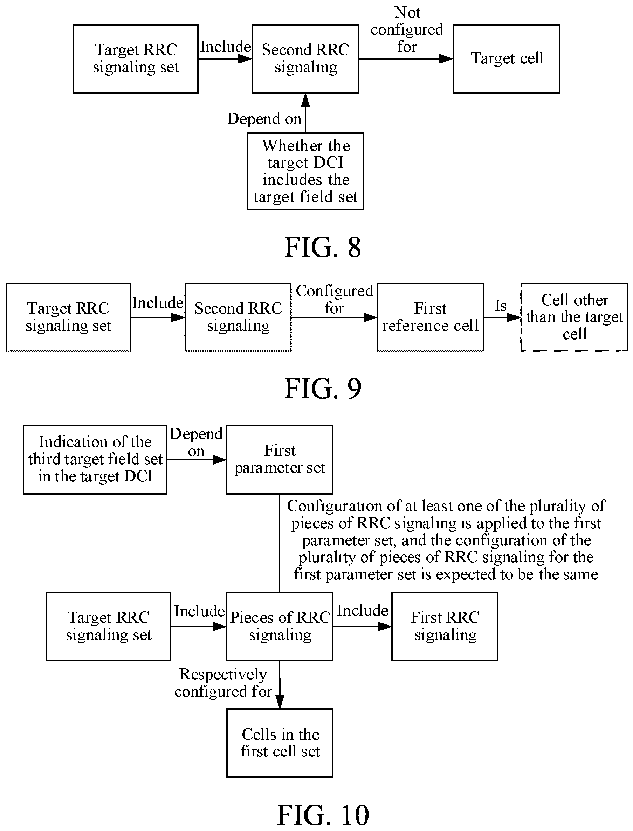

Embodiment 8 illustrates a diagram of relationships between the target RRC signaling set, the second RRC signaling, the target cell, the target DCI, and the target field set according to an embodiment of this application, as shown in FIG. 8.

In Embodiment 8, the number of cells included in the first cell set is greater than 1. The target RRC signaling set includes the second RRC signaling. The second RRC signaling is not configured for the target cell. Whether the target DCI includes the target field set depends on configuration of the second RRC signaling.

In an embodiment, the second RRC signaling is configured for a cell other than the target cell.

In an embodiment, the second RRC signaling includes at least one IE (Information element, information element).

In an embodiment, the second RRC signaling includes at least one field (field) in at least one IE (Information element, information element).

In an embodiment, the second RRC signaling includes at least a part of ServingCellConfig.

In an embodiment, the second RRC signaling includes at least a part of BWP-Uplink.

In an embodiment, the second RRC signaling includes at least a part of BWP-UplinkCommon.

In an embodiment, the second RRC signaling includes at least a part of BWP-UplinkDedicated.

In an embodiment, the second RRC signaling includes at least a part of PUSCH-Config.

In an embodiment, the second RRC signaling includes at least a part of PUSCH-ConfigCommon.

In an embodiment, the second RRC signaling includes at least a part of PUSCH-ServingCellConfig.

In an embodiment, the second RRC signaling belongs to PUSCH-Config.

In an embodiment, the second RRC signaling belongs to PUSCH-ConfigCommon.

In an embodiment, the second RRC signaling belongs to PUSCH-ServingCellConfig.

In an embodiment, the second RRC signaling is PUSCH-Config.

In an embodiment, the second RRC signaling is PUSCH-ConfigCommon.

In an embodiment, the second RRC signaling is PUSCH-ServingCellConfig.

In an embodiment, the second RRC signaling includes PUSCH-Config.

In an embodiment, the second RRC signaling includes PUSCH-ConfigCommon.

In an embodiment, the second RRC signaling includes PUSCH-ServingCellConfig.

In an embodiment, the second RRC signaling is used to determine the number of repetitions for data (Number of repetitions for data).

In an embodiment, the second RRC signaling is used to determine a transmission scheme (Transmission scheme) of the PUSCH.

In an embodiment, the transmission scheme is one of codebook (codebook)-based transmission, non-codebook (non-codebook)-based transmission, or single-antenna port transmission.

In an embodiment, the transmission scheme is one of codebook (codebook)-based transmission or non-codebook (non-codebook)-based transmission.

In an embodiment, the second RRC signaling is used to determine DMRS configuration for PUSCH transmission using a PUSCH mapping type A.

In an embodiment, the second RRC signaling is used to determine DMRS configuration for PUSCH transmission using a PUSCH mapping type B.

In an embodiment, the second RRC signaling is used to determine power control of the PUSCH.

In an embodiment, the second RRC signaling is used to determine a frequency hopping pattern.

In an embodiment, the second RRC signaling is used to determine a frequency hopping offset (frequency hopping offset(s)) set.

In an embodiment, the second RRC signaling is used to determine a resource allocation type.

In an embodiment, the second RRC signaling is used to determine a frequency domain resource allocation type.

In an embodiment, the second RRC signaling is used to determine a list of time domain allocations for timing of UL assignment to UL data (List of time domain allocations for timing of UL assignment to UL data).

In an embodiment, the second RRC signaling is used to determine an MCS table that is used for the PUSCH without a transformer precoder.

In an embodiment, the second RRC signaling is used to determine an MCS table that is used for the PUSCH with a transformer precoder.

In an embodiment, the second RRC signaling is used to determine whether transform precoding is enabled.

In an embodiment, the second RRC signaling is used to determine a specific choice for a transformer precoder (transformer precoder) of the PUSCH.

In an embodiment, the second RRC signaling is used to determine a subset of PMIs addressed by TPMI (Subset of PMIs addressed by TPMI).

In an embodiment, the second RRC signaling is used to determine a subset of PMIs addressed by TRIs (Subset of PMIs Addressed by TRIs).

In an embodiment, the second RRC signaling is used to determine a size of an RBG that is selected between configuration 1 and configuration 2 for the PUSCH.

In an embodiment, the second RRC signaling is used to determine a beta offset set.

In an embodiment, the second RRC signaling is used to determine whether pi/2-BPSK modulation with transform precoding is enabled.

In an embodiment, the second RRC signaling indicates the number of repetitions for data (Number of repetitions for data).

In an embodiment, the second RRC signaling indicates a transmission scheme (Transmission scheme) of the PUSCH.

In an embodiment, the transmission scheme is one of codebook (codebook)-based transmission, non-codebook (non-codebook)-based transmission, or single-antenna port transmission.

In an embodiment, the transmission scheme is one of codebook (codebook)-based transmission or non-codebook (non-codebook)-based transmission.

In an embodiment, the second RRC signaling indicates DMRS configuration for PUSCH transmission using a PUSCH mapping type A.

In an embodiment, the second RRC signaling indicates DMRS configuration for PUSCH transmission using a PUSCH mapping type B.

In an embodiment, the second RRC signaling indicates power control of the PUSCH.

In an embodiment, the second RRC signaling indicates a frequency hopping pattern.

In an embodiment, the second RRC signaling indicates a frequency hopping offset (frequency hopping offset(s)) set.

In an embodiment, the second RRC signaling indicates a resource allocation type.

In an embodiment, the second RRC signaling indicates a frequency domain resource allocation type.

In an embodiment, the second RRC signaling indicates a list of time domain allocations for timing of UL assignment to UL data (List of time domain allocations for timing of UL assignment to UL data).

In an embodiment, the second RRC signaling indicates an MCS table that is used for the PUSCH without a transformer precoder.

In an embodiment, the second RRC signaling indicates an MCS table that is used for the PUSCH with a transformer precoder.

In an embodiment, the second RRC signaling indicates whether transform precoding is enabled.

In an embodiment, the second RRC signaling indicates a specific choice for a transformer precoder (transformer precoder) of the PUSCH.

In an embodiment, the second RRC signaling indicates a subset of PMIs addressed by TPMI (Subset of PMIs addressed by TPMI).

In an embodiment, the second RRC signaling indicates a subset of PMIs addressed by TRIs (Subset of PMIs Addressed by TRIs).

In an embodiment, the second RRC signaling indicates a size of an RBG that is selected between configuration 1 and configuration 2 for the PUSCH.

In an embodiment, the second RRC signaling indicates a beta offset set.

In an embodiment, the second RRC signaling indicates whether pi/2-BPSK modulation with transform precoding is enabled.

In an embodiment, the second RRC signaling indicates whether there is an antenna port (Antenna ports) field.

In an embodiment, the second RRC signaling indicates whether to enable PUSCH repetitions counted based on an available slot.

In an embodiment, the second RRC signaling indicates a set of beta offsets configured for HARQ-ACK multiplexing onto PUSCHs with different priorities.

In an embodiment, the second RRC signaling indicates information about DMRS bundling (bundling) for the PUSCH.

In an embodiment, the second RRC signaling indicates whether there is a DMRS sequence initialization (DMRS Sequence Initialization) field.

In an embodiment, the second RRC signaling indicates a size of a HARQ process number (HARQ process number) field.

In an embodiment, the second RRC signaling indicates an invalid symbol pattern (pattern) for a PUSCH transmission type B.

In an embodiment, the second RRC signaling indicates whether to follow a cyclic mapping pattern (Cyclic mapping pattern) or a sequential mapping pattern (Sequential mapping pattern) when two SRS resource sets are configured for PUSCH transmission and a PUSCH transmission occasion (PUSCH transmission occasions) is associated with the two SRS resource sets.

In an embodiment, the second RRC signaling indicates a list of minimum K2 values.

In an embodiment, the second RRC signaling indicates a size of a redundancy version (Redundancy version) field.

In an embodiment, the second RRC signaling indicates the number of symbols invalid to a PUSCH repetition type B after the last semi-static (semi-static) DL (Downlink, downlink) symbol.

In an embodiment, the second RRC signaling indicates whether there is a priority indicator (priority indicator) field.

In an embodiment, the second RRC signaling indicates whether to follow behavior of a PUSCH repetition type (repetition type) A or behavior of a PUSCH repetition type B.

In an embodiment, the second RRC signaling indicates whether there is a second TPC field (second TPC field).

In an embodiment, the second RRC signaling indicates an RV offset configured for a start RV (Redundancy version, redundancy version) of the first repetition (the first actual repetition (actual repetition) in the PUSCH repetition type B) corresponding to a second SRS resource set for the PUSCH.

In an embodiment, the second RRC signaling indicates a combined list of a cyclic prefix extension, a channel access priority class (channel access priority class, CAPC), and a UL (Uplink, uplink) channel access type.

In an embodiment, the second RRC signaling indicates a UL full power transmission mode (UL full power transmission mode).

In an embodiment, the second RRC signaling indicates a scheduling granularity indicated by a start point and a length applicable to a resource allocation type 1.

In an embodiment, the second RRC signaling is used to determine whether there is an antenna port (Antenna ports) field.

In an embodiment, the second RRC signaling is used to determine whether to enable PUSCH repetitions counted based on an available slot.

In an embodiment, the second RRC signaling is used to determine a set of beta offsets configured for HARQ-ACK multiplexing onto PUSCHs with different priorities.

In an embodiment, the second RRC signaling is used to determine information about DMRS bundling (bundling) for the PUSCH.

In an embodiment, the second RRC signaling is used to determine whether there is a DMRS sequence initialization (DMRS Sequence Initialization) field.

In an embodiment, the second RRC signaling is used to determine a size of a HARQ process number (HARQ process number) field.

In an embodiment, the second RRC signaling is used to determine an invalid symbol pattern (pattern) for a PUSCH transmission type B.

In an embodiment, the second RRC signaling is used to determine whether to follow a cyclic mapping pattern (Cyclic mapping pattern) or a sequential mapping pattern (Sequential mapping pattern) when two SRS resource sets are configured for PUSCH transmission and a PUSCH transmission occasion (PUSCH transmission occasions) is associated with the two SRS resource sets.

In an embodiment, the second RRC signaling is used to determine a list of minimum K2 values.

In an embodiment, the second RRC signaling is used to determine a size of a redundancy version (Redundancy version) field.

In an embodiment, the second RRC signaling is used to determine the number of symbols invalid to a PUSCH repetition type B after the last semi-static (semi-static) DL (Downlink, downlink) symbol.

In an embodiment, the second RRC signaling is used to determine whether there is a priority indicator (priority indicator) field.

In an embodiment, the second RRC signaling is used to determine whether to follow behavior of a PUSCH repetition type (repetition type) A or behavior of a PUSCH repetition type B.

In an embodiment, the second RRC signaling is used to determine whether there is a second TPC field (second TPC field).

In an embodiment, the second RRC signaling is used to determine an RV offset configured for a start RV (Redundancy version, redundancy version) of the first repetition (the first actual repetition (actual repetition) in the PUSCH repetition type B) corresponding to a second SRS resource set for the PUSCH.

In an embodiment, the second RRC signaling is used to determine a combined list of a cyclic prefix extension, a channel access priority class (channel access priority class, CAPC), and a UL (Uplink, uplink) channel access type.

In an embodiment, the second RRC signaling is used to determine a UL full power transmission mode (UL full power transmission mode).

In an embodiment, the second RRC signaling is used to determine a scheduling granularity indicated by a start point and a length applicable to a resource allocation type 1.

In an embodiment, the second RRC signaling includes pusch-AggregationFactor.

In an embodiment, the second RRC signaling includes txConfig.

In an embodiment, the second RRC signaling includes dmrs-UplinkForPUSCH-MappingTypeA.

In an embodiment, the second RRC signaling includes dmrs-UplinkForPUSCH-MappingTypeB.

In an embodiment, the second RRC signaling includes pusch-PowerControl.

In an embodiment, the second RRC signaling includes frequencyHopping.

In an embodiment, the second RRC signaling includes frequencyHoppingOffsetLists.

In an embodiment, the second RRC signaling includes resourceAllocation.

In an embodiment, the second RRC signaling includes pusch-TimeDomainAllocationList.

In an embodiment, the second RRC signaling includes mcs-Table.

In an embodiment, the second RRC signaling includes mcs-TableTransformPrecoder.

In an embodiment, the second RRC signaling includes transformPrecoder.

In an embodiment, the second RRC signaling includes codebookSubset.

In an embodiment, the second RRC signaling includes maxRank.

In an embodiment, the second RRC signaling includes rbg-Size.

In an embodiment, the second RRC signaling includes uci-OnPUSCH.

In an embodiment, the second RRC signaling includes tp-pi2BPSK.

In an embodiment, the second RRC signaling is pusch-AggregationFactor.

In an embodiment, the second RRC signaling is txConfig.

In an embodiment, the second RRC signaling is dmrs-UplinkForPUSCH-MappingTypeA.

In an embodiment, the second RRC signaling is dmrs-UplinkForPUSCH-MappingTypeB.

In an embodiment, the second RRC signaling is pusch-PowerControl.

In an embodiment, the second RRC signaling is frequencyHopping.

In an embodiment, the second RRC signaling is frequencyHoppingOffsetLists.

In an embodiment, the second RRC signaling is resourceAllocation.

In an embodiment, the second RRC signaling is pusch-TimeDomainAllocationList.

In an embodiment, the second RRC signaling is mcs-Table.

In an embodiment, the second RRC signaling is mcs-TableTransformPrecoder.

In an embodiment, the second RRC signaling is transformPrecoder.

In an embodiment, the second RRC signaling is codebookSubset.

In an embodiment, the second RRC signaling is maxRank.

In an embodiment, the second RRC signaling is rbg-Size.

In an embodiment, the second RRC signaling is uci-OnPUSCH.

In an embodiment, the second RRC signaling is tp-pi2BPSK.

In an embodiment, a name of the second RRC signaling includes pusch-AggregationFactor.

In an embodiment, the name of the second RRC signaling includes txConfig.

In an embodiment, the name of the second RRC signaling includes dmrs-UplinkForPUSCH-MappingTypeA.

In an embodiment, the name of the second RRC signaling includes dmrs-UplinkForPUSCH-MappingTypeB.

In an embodiment, the name of the second RRC signaling includes pusch-PowerControl.

In an embodiment, the name of the second RRC signaling includes frequencyHopping.

In an embodiment, the name of the second RRC signaling includes frequencyHoppingOffsetLists.

In an embodiment, the name of the second RRC signaling includes resourceAllocation.

In an embodiment, the name of the second RRC signaling includes pusch-TimeDomainAllocationList.

In an embodiment, the name of the second RRC signaling includes mcs-Table.

In an embodiment, the name of the second RRC signaling includes mcs-TableTransformPrecoder.

In an embodiment, the name of the second RRC signaling includes transformPrecoder.

In an embodiment, the name of the second RRC signaling includes codebookSubset.

In an embodiment, the name of the second RRC signaling includes maxRank.

In an embodiment, the name of the second RRC signaling includes rbg-Size.

In an embodiment, the name of the second RRC signaling includes uci-OnPUSCH.

In an embodiment, the name of the second RRC signaling includes tp-pi2BPSK.

In an embodiment, the name of the second RRC signaling includes minimumSchedulingOffsetK2.

In an embodiment, the name of the second RRC signaling includes ul-AccessConfigList.

In an embodiment, the name of the second RRC signaling includes harq-ProcessNumberSize.

In an embodiment, the name of the second RRC signaling includes dmrs-SequenceInitialization.

In an embodiment, the name of the second RRC signaling includes numberOfBitsForRV.

In an embodiment, the name of the second RRC signaling includes antennaPortsFieldPresence.

In an embodiment, the name of the second RRC signaling includes invalidSymbolPatternIndicator.

In an embodiment, the name of the second RRC signaling includes priorityIndicator.

In an embodiment, the name of the second RRC signaling includes pusch-RepTypeIndicator.

In an embodiment, the name of the second RRC signaling includes resourceAllocationType1Granularity.

In an embodiment, the name of the second RRC signaling includes ul-FullPowerTransmission.

In an embodiment, the name of the second RRC signaling includes numberOfInvalidSymbolsForDL-UL-Switching.

In an embodiment, the name of the second RRC signaling includes betaOffsetsCrossPri0.

In an embodiment, the name of the second RRC signaling includes betaOffsetsCrossPri1.

In an embodiment, the name of the second RRC signaling includes mappingPattern.

In an embodiment, the name of the second RRC signaling includes secondTPCField.

In an embodiment, the name of the second RRC signaling includes sequenceOffsetForRV.

In an embodiment, the name of the second RRC signaling includes availableSlotCounting.

In an embodiment, the name of the second RRC signaling includes dmrs-BundlingPUSCH-Config.

In an embodiment, the name of the second RRC signaling includes -r18.

In an embodiment, the name of the second RRC signaling includes -r19.

In an embodiment, the name of the second RRC signaling includes -r20.

In an embodiment, a size of a field is the number of bits included in this field.

In an embodiment, the second RRC signaling is used to determine a maximum number of CBGs of each TB.

In an embodiment, the second RRC signaling is used to determine whether to enable CBG-based transmission.

In an embodiment, the second RRC signaling is used to determine a maximum MIMO (Multiple-Input Multiple-Output, multiple-input multiple-output) layer for the PUSCH in all UL BWPs (Bandwidth part, bandwidth part) corresponding to the cell.

In an embodiment, the second RRC signaling is used to determine the number of HARQ processes used on the PUSCH of the cell.

In an embodiment, the second RRC signaling is used to determine whether to enable configuration of an advanced processing time capability 2 (advanced processing time capability 2) for the PUSCH.

In an embodiment, the second RRC signaling is used to determine whether to enable limited buffer rate-matching (Limited buffer rate-matching, LBRM).

In an embodiment, the second RRC signaling is used to determine a HARQ mode for a HARQ process ID.

In an embodiment, the second RRC signaling is used to determine whether to enable group hopping (group hopping) for RMRS transmission with transform precoding.

In an embodiment, the second RRC signaling is used to determine a power offset (offset) between msg3 and RACH (Random Access Channel(s), random access channel) preamble (preamble) transmission.

In an embodiment, the second RRC signaling is used to determine a P0 value for a PUSCH (other than msg3) with grant (grant).

In an embodiment, the second RRC signaling indicates a maximum number of CBGs of each TB.

In an embodiment, the second RRC signaling indicates whether to enable CBG-based transmission.

In an embodiment, the second RRC signaling indicates a maximum MIMO (Multiple-Input Multiple-Output, multiple-input multiple-output) layer for the PUSCH in all UL BWPs (Bandwidth part, bandwidth part) corresponding to the cell.

In an embodiment, the second RRC signaling indicates the number of HARQ processes used on the PUSCH of the cell.

In an embodiment, the second RRC signaling indicates whether to enable configuration of an advanced processing time capability 2 (advanced processing time capability 2) for the PUSCH.

In an embodiment, the second RRC signaling indicates whether to enable limited buffer rate-matching (Limited buffer rate-matching, LBRM).

In an embodiment, the second RRC signaling indicates a HARQ mode for a HARQ process ID.

In an embodiment, the second RRC signaling indicates whether to enable group hopping (group hopping) for RMRS transmission with transform precoding.

In an embodiment, the second RRC signaling indicates a power offset (offset) between msg3 and RACH (Random Access Channel(s), random access channel) preamble (preamble) transmission.

In an embodiment, the second RRC signaling indicates a P0 value for a PUSCH (other than msg3) with grant (grant).

In an embodiment, the second RRC signaling is codeBlockGroupTransmission.

In an embodiment, the second RRC signaling is rateMatching.

In an embodiment, the second RRC signaling is xOverhead.

In an embodiment, the second RRC signaling is maxMIMO-Layers.

In an embodiment, the second RRC signaling is processingType2Enabled.

In an embodiment, the second RRC signaling is nrofHARQ-ProcessesForPUSCH-r17.

In an embodiment, the second RRC signaling is uplinkHARQ-mode-r17.

In an embodiment, the second RRC signaling is groupHoppingEnabledTransformPrecoding.

In an embodiment, the second RRC signaling is msg3-DeltaPreamble.

In an embodiment, the second RRC signaling is p0-NominalWithGrant.

In an embodiment, the name of the second RRC signaling includes codeBlockGroupTransmission.

In an embodiment, the name of the second RRC signaling includes rateMatching.

In an embodiment, the name of the second RRC signaling includes xOverhead.

In an embodiment, the name of the second RRC signaling includes maxMIMO-Layers.

In an embodiment, the name of the second RRC signaling includes processingType2Enabled.

In an embodiment, the name of the second RRC signaling includes nrofHARQ-ProcessesForPUSCH.

In an embodiment, the name of the second RRC signaling includes uplinkHARQ-mode.

In an embodiment, the name of the second RRC signaling includes groupHoppingEnabledTransformPrecoding.

In an embodiment, the name of the second RRC signaling includes msg3-DeltaPreamble.

In an embodiment, the name of the second RRC signaling includes p0-NominalWithGrant.

In an embodiment, the second RRC signaling includes SRS-Config.

In an embodiment, the second RRC signaling is SRS-Config.

In an embodiment, the name of the second RRC signaling includes SRS-Config.

In an embodiment, the second RRC signaling includes Available SlotOffset.

In an embodiment, the second RRC signaling is AvailableSlotOffset.

In an embodiment, the name of the second RRC signaling includes Available SlotOffset.

In an embodiment, in this application, that whether the target DCI includes a field set depends on configuration of a piece of RRC signaling includes the following meaning: whether the target DCI includes each field of the field set depends on the configuration of the piece of RRC signaling.

In an embodiment, in this application, that whether the target DCI includes a field set depends on configuration of a piece of RRC signaling includes the following meaning: the piece of RRC signaling is used to determine whether the target DCI includes the field set.

In an embodiment, in this application, that whether the target DCI includes a field set depends on configuration of a piece of RRC signaling includes the following meaning: the piece of RRC signaling indicates whether the target DCI includes the field set.

In an embodiment, in this application, that whether the target DCI includes a field set depends on configuration of a piece of RRC signaling includes the following meaning: the piece of RRC signaling is used to determine whether the target DCI includes each field of the field set.

In an embodiment, in this application, that whether the target DCI includes a field set depends on configuration of a piece of RRC signaling includes the following meaning: the piece of RRC signaling indicates whether the target DCI includes each field of the field set.

In an embodiment, in this application, that whether the target DCI includes a field set depends on configuration of a piece of RRC signaling includes the following meaning: for a field in the field set, at least one field in the piece of RRC signaling is used to determine whether the target DCI includes this field in the field set, or whether there is a field in the piece of RRC signaling is used to determine whether the target DCI includes this field in the field set.

In an embodiment, in this application, that whether the target DCI includes a field set depends on configuration of a piece of RRC signaling includes the following meaning: for a field in the field set, at least one field in the piece of RRC signaling indicates whether the target DCI includes this field in the field set, or whether there is a field in the piece of RRC signaling indicates whether the target DCI includes this field in the field set.

In an embodiment, when whether there is a fourth field in the second RRC signaling is used to determine whether the target DCI includes a field in the target field set, {when the fourth field is present in the second RRC signaling, the target DCI includes this field in the target field set; or when the fourth field is absent in the second RRC signaling, the target DCI does not include this field in the target field set}.

In an embodiment, when whether there is a fourth field in the second RRC signaling is used to determine whether the target DCI includes a field in the target field set, {when the fourth field is present in the second RRC signaling, the target DCI does not include this field in the target field set; or when the fourth field is absent in the second RRC signaling, the target DCI includes this field in the target field set}.

In an embodiment, the fourth field is used to determine the number of repetitions for data (Number of repetitions for data).

In an embodiment, the fourth field is used to determine a transmission scheme (Transmission scheme) of the PUSCH.

In an embodiment, the transmission scheme is one of codebook (codebook)-based transmission, non-codebook (non-codebook)-based transmission, or single-antenna port transmission.

In an embodiment, the transmission scheme is one of codebook (codebook)-based transmission or non-codebook (non-codebook)-based transmission.

In an embodiment, the fourth field is used to determine DMRS configuration for PUSCH transmission using a PUSCH mapping type A.

In an embodiment, the fourth field is used to determine DMRS configuration for PUSCH transmission using a PUSCH mapping type B.

In an embodiment, the fourth field is used to determine power control of the PUSCH.

In an embodiment, the fourth field is used to determine a frequency hopping pattern.

In an embodiment, the fourth field is used to determine a frequency hopping offset (frequency hopping offset(s)) set.

In an embodiment, the fourth field is used to determine a resource allocation type.

In an embodiment, the fourth field is used to determine a frequency domain resource allocation type.

In an embodiment, the fourth field is used to determine a list of time domain allocations for timing of UL assignment to UL data (List of time domain allocations for timing of UL assignment to UL data).

In an embodiment, the fourth field is used to determine an MCS table that is used for the PUSCH without a transformer precoder.

In an embodiment, the fourth field is used to determine an MCS table that is used for the PUSCH with a transformer precoder.

In an embodiment, the fourth field is used to determine whether transform precoding is enabled.

In an embodiment, the fourth field is used to determine a specific choice for a transformer precoder (transformer precoder) of the PUSCH.

In an embodiment, the fourth field is used to determine a subset of PMIs addressed by TPMI (Subset of PMIs addressed by TPMI).

In an embodiment, the fourth field is used to determine a subset of PMIs addressed by TRIs (Subset of PMIs Addressed by TRIs).

In an embodiment, the fourth field is used to determine a size of an RBG that is selected between configuration 1 and configuration 2 for the PUSCH.

In an embodiment, the fourth field is used to determine a beta offset set.

In an embodiment, the fourth field is used to determine whether pi/2-BPSK modulation with transform precoding is enabled.

In an embodiment, the fourth field indicates the number of repetitions for data (Number of repetitions for data).

In an embodiment, the fourth field indicates a transmission scheme (Transmission scheme) of the PUSCH.

In an embodiment, the transmission scheme is one of codebook (codebook)-based transmission, non-codebook (non-codebook)-based transmission, or single-antenna port transmission.

In an embodiment, the transmission scheme is one of codebook (codebook)-based transmission or non-codebook (non-codebook)-based transmission.

In an embodiment, the fourth field indicates DMRS configuration for PUSCH transmission using a PUSCH mapping type A.

In an embodiment, the fourth field indicates DMRS configuration for PUSCH transmission using a PUSCH mapping type B.

In an embodiment, the fourth field indicates power control of the PUSCH.

In an embodiment, the fourth field indicates a frequency hopping pattern.

In an embodiment, the fourth field indicates a frequency hopping offset (frequency hopping offset(s)) set.

In an embodiment, the fourth field indicates a resource allocation type.

In an embodiment, the fourth field indicates a frequency domain resource allocation type.

In an embodiment, the fourth field indicates a list of time domain allocations for timing of UL assignment to UL data (List of time domain allocations for timing of UL assignment to UL data).

In an embodiment, the fourth field indicates an MCS table that is used for the PUSCH without a transformer precoder.

In an embodiment, the fourth field indicates an MCS table that is used for the PUSCH with a transformer precoder.

In an embodiment, the fourth field indicates whether transform precoding is enabled.

In an embodiment, the fourth field indicates a specific choice for a transformer precoder (transformer precoder) of the PUSCH.

In an embodiment, the fourth field indicates a subset of PMIs addressed by TPMI (Subset of PMIs addressed by TPMI).

In an embodiment, the fourth field indicates a subset of PMIs addressed by TRIs (Subset of PMIs Addressed by TRIs).

In an embodiment, the fourth field indicates a size of an RBG that is selected between configuration 1 and configuration 2 for the PUSCH.

In an embodiment, the fourth field indicates a beta offset set.

In an embodiment, the fourth field indicates whether pi/2-BPSK modulation with transform precoding is enabled.

In an embodiment, the fourth field indicates whether there is an antenna port (Antenna ports) field.

In an embodiment, the fourth field indicates whether to enable PUSCH repetitions counted based on an available slot.

In an embodiment, the fourth field indicates a set of beta offsets configured for HARQ-ACK multiplexing onto PUSCHs with different priorities.

In an embodiment, the fourth field indicates information about DMRS bundling (bundling) for the PUSCH.

In an embodiment, the fourth field indicates whether there is a DMRS sequence initialization (DMRS Sequence Initialization) field.

In an embodiment, the fourth field indicates a size of a HARQ process number (HARQ process number) field.

In an embodiment, the fourth field indicates an invalid symbol pattern (pattern) for a PUSCH transmission type B.

In an embodiment, the fourth field indicates whether to follow a cyclic mapping pattern (Cyclic mapping pattern) or a sequential mapping pattern (Sequential mapping pattern) when two SRS resource sets are configured for PUSCH transmission and a PUSCH transmission occasion (PUSCH transmission occasions) is associated with the two SRS resource sets.

In an embodiment, the fourth field indicates a list of minimum K2 values.

In an embodiment, the fourth field indicates a size of a redundancy version (Redundancy version) field.

In an embodiment, the fourth field indicates the number of symbols invalid to a PUSCH repetition type B after the last semi-static (semi-static) DL (Downlink, downlink) symbol.

In an embodiment, the fourth field indicates whether there is a priority indicator (priority indicator) field.

In an embodiment, the fourth field indicates whether to follow behavior of a PUSCH repetition type (repetition type) A or behavior of a PUSCH repetition type B.

In an embodiment, the fourth field indicates whether there is a second TPC field (second TPC field).

In an embodiment, the fourth field indicates an RV offset configured for a start RV (Redundancy version, redundancy version) of the first repetition (the first actual repetition (actual repetition) in the PUSCH repetition type B) corresponding to a second SRS resource set for the PUSCH.

In an embodiment, the fourth field indicates a combined list of a cyclic prefix extension, a channel access priority class (channel access priority class, CAPC), and a UL (Uplink, uplink) channel access type.

In an embodiment, the fourth field indicates a UL full power transmission mode (UL full power transmission mode).

In an embodiment, the fourth field indicates a scheduling granularity indicated by a start point and a length applicable to a resource allocation type 1.

In an embodiment, the fourth field indicates whether there is an antenna port (Antenna ports) field.

In an embodiment, the fourth field is used to determine whether to enable PUSCH repetitions counted based on an available slot.

In an embodiment, the fourth field is used to determine a set of beta offsets configured for HARQ-ACK multiplexing onto PUSCHs with different priorities.

In an embodiment, the fourth field is used to determine information about DMRS bundling (bundling) for the PUSCH.

In an embodiment, the fourth field is used to determine whether there is a DMRS sequence initialization (DMRS Sequence Initialization) field.

In an embodiment, the fourth field is used to determine a size of a HARQ process number (HARQ process number) field.

In an embodiment, the fourth field is used to determine an invalid symbol pattern (pattern) for a PUSCH transmission type B.

In an embodiment, the fourth field is used to determine whether to follow a cyclic mapping pattern (Cyclic mapping pattern) or a sequential mapping pattern (Sequential mapping pattern) when two SRS resource sets are configured for PUSCH transmission and a PUSCH transmission occasion (PUSCH transmission occasions) is associated with the two SRS resource sets.

In an embodiment, the fourth field is used to determine a list of minimum K2 values.

In an embodiment, the fourth field is used to determine a size of a redundancy version (Redundancy version) field.

In an embodiment, the fourth field is used to determine the number of symbols invalid to a PUSCH repetition type B after the last semi-static (semi-static) DL (Downlink, downlink) symbol.

In an embodiment, the fourth field is used to determine whether there is a priority indicator (priority indicator) field.

In an embodiment, the fourth field is used to determine whether to follow behavior of a PUSCH repetition type (repetition type) A or behavior of a PUSCH repetition type B.

In an embodiment, the fourth field is used to determine whether there is a second TPC field (second TPC field).

In an embodiment, the fourth field is used to determine an RV offset configured for a start RV (Redundancy version, redundancy version) of the first repetition (the first actual repetition (actual repetition) in the PUSCH repetition type B) corresponding to a second SRS resource set for the PUSCH.

In an embodiment, the fourth field is used to determine a combined list of a cyclic prefix extension, a channel access priority class (channel access priority class, CAPC), and a UL (Uplink, uplink) channel access type.

In an embodiment, the fourth field is used to determine a UL full power transmission mode (UL full power transmission mode).

In an embodiment, the fourth field is used to determine a scheduling granularity indicated by a start point and a length applicable to a resource allocation type 1.

In an embodiment, the fourth field includes pusch-AggregationFactor.

In an embodiment, the fourth field includes txConfig.

In an embodiment, the fourth field includes dmrs-UplinkForPUSCH-MappingTypeA.

In an embodiment, the fourth field includes dmrs-UplinkForPUSCH-MappingTypeB.

In an embodiment, the fourth field includes pusch-PowerControl.

In an embodiment, the fourth field includes frequencyHopping.

In an embodiment, the fourth field includes frequencyHoppingOffsetLists.

In an embodiment, the fourth field includes resourceAllocation.

In an embodiment, the fourth field includes pusch-TimeDomainAllocationList.

In an embodiment, the fourth field includes mcs-Table.

In an embodiment, the fourth field includes mcs-TableTransformPrecoder.

In an embodiment, the fourth field includes transformPrecoder.

In an embodiment, the fourth field includes codebookSubset.

In an embodiment, the fourth field includes maxRank.

In an embodiment, the fourth field includes rbg-Size.

In an embodiment, the fourth field includes uci-OnPUSCH.

In an embodiment, the fourth field includes tp-pi2BPSK.

In an embodiment, the fourth field is pusch-AggregationFactor.

In an embodiment, the fourth field is txConfig.

In an embodiment, the fourth field is dmrs-UplinkForPUSCH-MappingTypeA.

In an embodiment, the fourth field is dmrs-UplinkForPUSCH-MappingTypeB.

In an embodiment, the fourth field is pusch-PowerControl.

In an embodiment, the fourth field is frequencyHopping.

In an embodiment, the fourth field is frequencyHoppingOffsetLists.

In an embodiment, the fourth field is resourceAllocation.

In an embodiment, the fourth field is pusch-TimeDomainAllocationList.

In an embodiment, the fourth field is mcs-Table.

In an embodiment, the fourth field is mcs-TableTransformPrecoder.

In an embodiment, the fourth field is transformPrecoder.

In an embodiment, the fourth field is codebookSubset.

In an embodiment, the fourth field is maxRank.

In an embodiment, the fourth field is rbg-Size.

In an embodiment, the fourth field is uci-OnPUSCH.

In an embodiment, the fourth field is tp-pi2BPSK.

In an embodiment, a name of the fourth field includes pusch-AggregationFactor.

In an embodiment, the name of the fourth field includes txConfig.

In an embodiment, the name of the fourth field includes dmrs-UplinkForPUSCH-MappingTypeA.

In an embodiment, the name of the fourth field includes dmrs-UplinkForPUSCH-MappingTypeB.

In an embodiment, the name of the fourth field includes pusch-PowerControl.

In an embodiment, the name of the fourth field includes frequencyHopping.

In an embodiment, the name of the fourth field includes frequencyHoppingOffsetLists.

In an embodiment, the name of the fourth field includes resourceAllocation.

In an embodiment, the name of the fourth field includes pusch-TimeDomainAllocationList.

In an embodiment, the name of the fourth field includes mes-Table.

In an embodiment, the name of the fourth field includes mcs-TableTransformPrecoder.

In an embodiment, the name of the fourth field includes transformPrecoder.

In an embodiment, the name of the fourth field includes codebookSubset.

In an embodiment, the name of the fourth field includes maxRank.

In an embodiment, the name of the fourth field includes rbg-Size.

In an embodiment, the name of the fourth field includes uci-OnPUSCH.

In an embodiment, the name of the fourth field includes tp-pi2BPSK.

In an embodiment, the name of the fourth field includes minimumSchedulingOffsetK2.

In an embodiment, the name of the fourth field includes ul-AccessConfigList.

In an embodiment, the name of the fourth field includes harq-ProcessNumberSize.

In an embodiment, the name of the fourth field includes dmrs-SequenceInitialization.

In an embodiment, the name of the fourth field includes numberOfBitsForRV.

In an embodiment, the name of the fourth field includes antennaPortsFieldPresence.

In an embodiment, the name of the fourth field includes invalidSymbolPatternIndicator.

In an embodiment, the name of the fourth field includes priorityIndicator.

In an embodiment, the name of the fourth field includes pusch-RepTypeIndicator.

In an embodiment, the name of the fourth field includes resourceAllocationType1Granularity.

In an embodiment, the name of the fourth field includes ul-FullPowerTransmission.

In an embodiment, the name of the fourth field includes numberOfInvalidSymbolsForDL-UL-Switching.

In an embodiment, the name of the fourth field includes betaOffsetsCrossPri0.

In an embodiment, the name of the fourth field includes betaOffsetsCrossPri1.

In an embodiment, the name of the fourth field includes a mappingPattern.

In an embodiment, the name of the fourth field includes secondTPCField.

In an embodiment, the name of the fourth field includes sequenceOffsetForRV.

In an embodiment, the name of the fourth field includes availableSlotCounting.

In an embodiment, the name of the fourth field includes dmrs-BundlingPUSCH-Config.

In an embodiment, the name of the fourth field includes -r18.

In an embodiment, the name of the fourth field includes -r19.

In an embodiment, the name of the fourth field includes -r20.

In an embodiment, a size of a field is the number of bits included in this field.

In an embodiment, the fourth field is used to determine a maximum number of CBGs of each TB.

In an embodiment, the fourth field is used to determine whether to enable CBG-based transmission.

In an embodiment, the fourth field is used to determine a maximum MIMO (Multiple-Input Multiple-Output, multiple-input multiple-output) layer for the PUSCH in all UL BWPs (Bandwidth part, bandwidth part) corresponding to the cell.

In an embodiment, the fourth field is used to determine the number of HARQ processes used on the PUSCH of the cell.

In an embodiment, the fourth field is used to determine whether to enable configuration of an advanced processing time capability 2 (advanced processing time capability 2) for the PUSCH.

In an embodiment, the fourth field is used to determine whether to enable limited buffer rate-matching (Limited buffer rate-matching, LBRM).

In an embodiment, the fourth field is used to determine a HARQ mode for a HARQ process ID.

In an embodiment, the fourth field is used to determine whether to enable group hopping (group hopping) for RMRS transmission with transform precoding.

In an embodiment, the fourth field is used to determine a power offset (offset) between msg3 and RACH (Random Access Channel(s), random access channel) preamble (preamble) transmission.

In an embodiment, the fourth field is used to determine a P0 value for a PUSCH (other than msg3) with grant (grant).

In an embodiment, the fourth field indicates a maximum number of CBGs of each TB.

In an embodiment, the fourth field indicates whether to enable CBG-based transmission.

In an embodiment, the fourth field indicates a maximum MIMO (Multiple-Input Multiple-Output, multiple-input multiple-output) layer for the PUSCH in all UL BWPs (Bandwidth part, bandwidth part) corresponding to the cell.

In an embodiment, the fourth field indicates the number of HARQ processes used on the PUSCH of the cell.

In an embodiment, the fourth field indicates whether to enable configuration of an advanced processing time capability 2 (advanced processing time capability 2) for the PUSCH.

In an embodiment, the fourth field indicates whether to enable limited buffer rate-matching (Limited buffer rate-matching, LBRM).

In an embodiment, the fourth field indicates a HARQ mode for a HARQ process ID.

In an embodiment, the fourth field indicates whether to enable group hopping (group hopping) for RMRS transmission with transform precoding.

In an embodiment, the fourth field indicates a power offset (offset) between msg3 and RACH (Random Access Channel(s), random access channel) preamble (preamble) transmission.

In an embodiment, the fourth field indicates a P0 value for a PUSCH (other than msg3) with grant (grant).

In an embodiment, the fourth field is codeBlockGroupTransmission.

In an embodiment, the fourth field is rateMatching.

In an embodiment, the fourth field is xOverhead.

In an embodiment, the fourth field is maxMIMO-Layers.

In an embodiment, the fourth field is processingType2Enabled.

In an embodiment, the fourth field is nrofHARQ-ProcessesForPUSCH-r17.

In an embodiment, the fourth field is uplinkHARQ-mode-r17.

In an embodiment, the fourth field is groupHoppingEnabledTransformPrecoding.

In an embodiment, the fourth field is msg3-DeltaPreamble.

In an embodiment, the fourth field is p0-NominalWithGrant.

In an embodiment, the name of the fourth field includes codeBlockGroupTransmission.

In an embodiment, the name of the fourth field includes rateMatching.

In an embodiment, the name of the fourth field includes xOverhead.

In an embodiment, the name of the fourth field includes maxMIMO-Layers.

In an embodiment, the name of the fourth field includes processingType2Enabled.

In an embodiment, the name of the fourth field includes nrofHARQ-ProcessesForPUSCH.

In an embodiment, the name of the fourth field includes uplinkHARQ-mode.

In an embodiment, the name of the fourth field includes groupHoppingEnabledTransformPrecoding.

In an embodiment, the name of the fourth field includes msg3-DeltaPreamble.

In an embodiment, the name of the fourth field includes p0-NominalWithGrant.

In an embodiment, the fourth field includes AvailableSlotOffset.

In an embodiment, the fourth field is AvailableSlotOffset.

In an embodiment, the name of the fourth field includes AvailableSlotOffset.

### Embodiment 9

Embodiment 9 illustrates a diagram of relationships between the target RRC signaling set, the second RRC signaling, the first reference cell, and the target cell according to an embodiment of this application, as shown in FIG. 9.

In Embodiment 9, the number of cells included in the first cell set is greater than 1. The target RRC signaling set includes the second RRC signaling, the second RRC signaling is configured for the first reference cell, and the first reference cell is a cell other than the target cell.

In an embodiment, the first reference cell is a cell of the first cell set other than the target cell.

In an embodiment, the target DCI is used to determine the first reference cell.

In an embodiment, the target DCI indicates the first reference cell.

In an embodiment, a second field in the target DCI is used to determine the first reference cell.

In an embodiment, the second field in the target DCI indicates the first reference cell.

In an embodiment, the second field in the target DCI includes at least one bit.

In an embodiment, the second field in the target DCI includes 2 bits.

In an embodiment, the second field in the target DCI includes 3 bits.

In an embodiment, the second field in the target DCI includes 4 bits.

In an embodiment, the second field in the target DCI includes 5 bits.

In an embodiment, a size of the second field in the target DCI is configurable.

In an embodiment, the second field in the target DCI indicates a scheduled cell.

In an embodiment, the second field in the target DCI is used to determine the first cell set, and the first reference cell is a cell of the first cell set.

In an embodiment, the second field in the target DCI indicates the first cell set, and the first reference cell is a cell of the first cell set.

In an embodiment, the second field in the target DCI is a carrier indicator (Carrier indicator) field.

In an embodiment, a name of the second field in the target DCI includes Carrier.

In an embodiment, the name of the second field in the target DCI includes Cell.

In an embodiment, the name of the second field in the target DCI includes ServingCell.

In an embodiment, the first reference cell is configured by using higher-layer signaling.

In an embodiment, the first reference cell is defaulted.

In an embodiment, the first reference cell is a primary cell (Primary cell, PCell).

In an embodiment, the first reference cell is a primary secondary cell (Primary secondary cell, PSCell).

In an embodiment, the first reference cell is a secondary cell (Secondary cell, SCell).

In an embodiment, the first reference cell is a virtual cell.

In an embodiment, the first reference cell is a cell of the first cell set, and in the first cell set, the first reference cell has a minimum cell index.

In an embodiment, the first reference cell is a cell of the first cell set, and in the first cell set, the first reference cell has a maximum cell index.

In an embodiment, the first reference cell is a cell of the first cell set, and in the first cell set, the first reference cell has a minimum cell ID.

In an embodiment, the first reference cell is a cell of the first cell set, and in the first cell set, the first reference cell has a maximum cell ID.

In an embodiment, the first reference cell is a cell of the first cell set, and in the first cell set, the first reference cell has a minimum corresponding short identity (short identity) for identifying a serving cell.

In an embodiment, the first reference cell is a cell of the first cell set, and in the first cell set, the first reference cell has a maximum corresponding short identity (short identity) for identifying a serving cell.

### Embodiment 10

Embodiment 10 illustrates a diagram of relationships between the target RRC signaling set, a plurality of pieces of RRC signaling, the first RRC signaling, the first cell set, indication of a third target field set in the target DCI, and a first parameter set according to an embodiment of this application, as shown in FIG. 10.

In Embodiment 10, the number of cells included in the first cell set is greater than 1. The indication of the third target field set in the target DCI depends on the first parameter set. The target RRC signaling set includes the plurality of pieces of RRC signaling, and the first RRC signaling is one of the plurality of pieces of RRC signaling. The plurality of pieces of RRC signaling are respectively configured for a plurality of cells in the first cell set. Configuration of at least one of the plurality of pieces of RRC signaling is applied to the first parameter set, and the configuration of the plurality of pieces of RRC signaling for the first parameter set is expected to be the same.

In an embodiment, there is no intersection set between the third target field set and the target field set.

In an embodiment, there is no intersection set between the third target field set and the second target field set.

In an embodiment, a field in the third target field set includes at least one bit.

In an embodiment, a field in the third target field set includes a non-negative integer number of bits.

In an embodiment, the third target field set includes a frequency domain resource assignment (frequency domain resource assignment) field.

In an embodiment, the third target field set includes a time domain resource assignment (time domain resource assignment) field.

In an embodiment, the third target field set includes a frequency hopping flag (frequency hopping flag) field.

In an embodiment, the third target field set includes a modulation and coding scheme (modulation and coding scheme) field.

In an embodiment, the third target field set includes a HARQ process number (HARQ process number) field.

In an embodiment, the third target field set includes a second TPC command for scheduled PUSCH (Second TPC command for scheduled PUSCH) field.

In an embodiment, the third target field set includes an SRS resource indicator (SRS resource indicator) field.

In an embodiment, the third target field set includes an SRS resource set indicator (SRS resource set indicator) field.

In an embodiment, the third target field set includes a second SRS resource indicator (Second SRS resource indicator) field.

In an embodiment, the third target field set includes a precoding information and number of layers (Precoding information and number of layers) field.

In an embodiment, the third target field set includes a second precoding information (Second Precoding information) field.

In an embodiment, the third target field set includes an antenna port (Antenna ports) field.

In an embodiment, the third target field set includes a CSI request (CSI request) field.

In an embodiment, the third target field set includes an SRS request (SRS request) field.

In an embodiment, the third target field set includes an SRS offset indicator (SRS offset indicator) field.

In an embodiment, the third target field set includes a CBG transmission information (CBG transmission information (CBGTI)) field.

In an embodiment, the third target field set includes a PTRS-DMRS association (PTRS-DMRS association) field.

In an embodiment, the third target field set includes a second PTRS-DMRS association (Second PTRS-DMRS association) field.

In an embodiment, the third target field set includes a beta offset indicator (beta_offset indicator) field.

In an embodiment, the third target field set includes a DMRS sequence initialization (DMRS sequence initialization) field.

In an embodiment, the third target field set includes a UL-SCH indicator (UL-SCH indicator) field.

In an embodiment, the third target field set includes a ChannelAccess-CPext-CAPC field.

In an embodiment, the third target field set includes an open-loop power control parameter set indication (Open-loop power control parameter set indication) field.

In an embodiment, the third target field set includes an SCell dormancy indication (SCell dormancy indication) field.

In an embodiment, the third target field set includes a priority indicator (Priority indicator) field.

In an embodiment, the third target field set includes an invalid symbol pattern indicator (Invalid symbol pattern indicator) field.

In an embodiment, the third target field set includes a minimum applicable scheduling offset indicator (Minimum applicable scheduling offset indicator) field.

In an embodiment, the third target field set includes a PDCCH monitoring adaptation indication (PDCCH monitoring adaptation indication) field.

In an embodiment, a field in the third target field set indicates frequency domain resource assignment.

In an embodiment, a field in the third target field set indicates time domain resource assignment.

In an embodiment, a field in the third target field set indicates whether frequency hopping is performed.

In an embodiment, a field in the third target field set indicates an MCS (Modulation and coding scheme, modulation and coding scheme).

In an embodiment, a field in the third target field set indicates a HARQ (Hybrid automatic repeat request, hybrid automatic repeat request) process number.

In an embodiment, a field in the third target field set is used to determine transmit power of the PUSCH.

In an embodiment, a field in the third target field set indicates an SRS (Sounding reference signal, sounding reference signal) resource.

In an embodiment, a field in the third target field set indicates an SRS resource set.

In an embodiment, a field in the third target field set indicates at least one of precoding information or the number of transport layers.

In an embodiment, a field in the third target field set indicates an antenna port (Antenna ports).

In an embodiment, a field in the third target field set indicates related information of a CSI report.

In an embodiment, a field in the third target field set indicates CBG (Code block group, code block group) transmission information.

In an embodiment, a field in the third target field set indicates an association between a PTRS and a DMRS.

In an embodiment, a field in the third target field set indicates a beta offset (beta_offset) value.

In an embodiment, a value of a field in the third target field set is used to generate a DMRS (Demodulation reference signal, demodulation reference signal) sequence.

In an embodiment, a field in the third target field set indicates information about SCell dormancy.

In an embodiment, a field in the third target field set indicates a transmit waveform of the PUSCH.

In an embodiment, a field in the third target field set indicates whether to enable transform precoding (Transform precoding).

In an embodiment, a field in the third target field set is used to trigger an aperiodic (aperiodic) SRS resource set.

In an embodiment, a field in the third target field set indicates an available slot offset (available slot offset).

In an embodiment, a field in the third target field set indicates whether a UL-SCH is transmitted on the PUSCH.

In an embodiment, a field in the third target field set indicates an open-loop power control parameter set.

In an embodiment, a field in the third target field set indicates a priority.

In an embodiment, a field in the third target field set indicates an invalid symbol pattern. In an embodiment, a field in the third target field set indicates a minimum applicable scheduling offset.

In an embodiment, a field in the third target field set indicates skipping (skipping) of PDCCH monitoring.

In an embodiment, names of the plurality of pieces of RRC signaling are the same.

In an embodiment, each of the plurality of pieces of RRC signaling includes at least one information element (Information element, IE).

In an embodiment, each of the plurality of pieces of RRC signaling includes at least one field (field) in at least one IE (Information element, information element).

In an embodiment, each of the plurality of pieces of RRC signaling includes at least a part of ServingCellConfig.

In an embodiment, each of the plurality of pieces of RRC signaling includes at least a part of BWP-Uplink.

In an embodiment, each of the plurality of pieces of RRC signaling includes at least a part of BWP-UplinkCommon.

In an embodiment, each of the plurality of pieces of RRC signaling includes at least a part of BWP-UplinkDedicated.

In an embodiment, each of the plurality of pieces of RRC signaling includes at least a part of PUSCH-Config.

In an embodiment, each of the plurality of pieces of RRC signaling includes at least a part of PUSCH-ConfigCommon.

In an embodiment, each of the plurality of pieces of RRC signaling includes at least a part of PUSCH-ServingCellConfig.

In an embodiment, each of the plurality of pieces of RRC signaling belongs to PUSCH-Config.

In an embodiment, each of the plurality of pieces of RRC signaling belongs to PUSCH-ConfigCommon.

In an embodiment, each of the plurality of pieces of RRC signaling belongs to PUSCH-ServingCellConfig.

In an embodiment, each of the plurality of pieces of RRC signaling includes a pusch-AggregationFactor.

In an embodiment, each of the plurality of pieces of RRC signaling includes txConfig.

In an embodiment, each of the plurality of pieces of RRC signaling includes dmrs-UplinkForPUSCH-MappingTypeA.

In an embodiment, each of the plurality of pieces of RRC signaling includes dmrs-UplinkForPUSCH-MappingTypeB.

In an embodiment, each of the plurality of pieces of RRC signaling includes pusch-PowerControl.

In an embodiment, each of the plurality of pieces of RRC signaling includes frequencyHopping.

In an embodiment, each of the plurality of pieces of RRC signaling includes frequencyHoppingOffsetLists.

In an embodiment, each of the plurality of pieces of RRC signaling includes resourceAllocation.

In an embodiment, each of the plurality of pieces of RRC signaling includes pusch-TimeDomainAllocationList.

In an embodiment, each of the plurality of pieces of RRC signaling includes mcs-Table.

In an embodiment, each of the plurality of pieces of RRC signaling includes mcs-TableTransformPrecoder.

In an embodiment, each of the plurality of pieces of RRC signaling includes transformPrecoder.

In an embodiment, each of the plurality of pieces of RRC signaling includes codebookSubset.

In an embodiment, each of the plurality of pieces of RRC signaling includes maxRank.

In an embodiment, each of the plurality of pieces of RRC signaling includes rbg-Size.

In an embodiment, each of the plurality of pieces of RRC signaling includes uci-OnPUSCH.

In an embodiment, each of the plurality of pieces of RRC signaling includes tp-pi2BPSK.

In an embodiment, each of the plurality of pieces of RRC signaling is pusch-AggregationFactor.

In an embodiment, each of the plurality of pieces of RRC signaling is txConfig.

In an embodiment, each of the plurality of pieces of RRC signaling is dmrs-UplinkForPUSCH-MappingTypeA.

In an embodiment, each of the plurality of pieces of RRC signaling is dmrs-UplinkForPUSCH-MappingTypeB.

In an embodiment, each of the plurality of pieces of RRC signaling is pusch-PowerControl.

In an embodiment, each of the plurality of pieces of RRC signaling is frequencyHopping.

In an embodiment, each of the plurality of pieces of RRC signaling is frequencyHoppingOffsetLists.

In an embodiment, each of the plurality of pieces of RRC signaling is resourceAllocation.

In an embodiment, each of the plurality of pieces of RRC signaling is pusch-TimeDomainAllocationList.

In an embodiment, each of the plurality of pieces of RRC signaling is mcs-Table.

In an embodiment, each of the plurality of pieces of RRC signaling is mcs-TableTransformPrecoder.

In an embodiment, each of the plurality of pieces of RRC signaling is transformPrecoder.

In an embodiment, each of the plurality of pieces of RRC signaling is codebookSubset.

In an embodiment, each of the plurality of pieces of RRC signaling is maxRank.

In an embodiment, each of the plurality of pieces of RRC signaling is rbg-Size.

In an embodiment, each of the plurality of pieces of RRC signaling is uci-OnPUSCH.

In an embodiment, each of the plurality of pieces of RRC signaling is tp-pi2BPSK.

In an embodiment, a name of each of the plurality of pieces of RRC signaling includes pusch-AggregationFactor.

In an embodiment, the name of each of the plurality of pieces of RRC signaling includes pusch-AggregationFactor.

In an embodiment, the name of each of the plurality of pieces of RRC signaling includes txConfig.

In an embodiment, the name of each of the plurality of pieces of RRC signaling includes dmrs-UplinkForPUSCH-MappingTypeA.

In an embodiment, the name of each of the plurality of pieces of RRC signaling includes dmrs-UplinkForPUSCH-MappingTypeB.

In an embodiment, the name of each of the plurality of pieces of RRC signaling includes pusch-PowerControl.

In an embodiment, the name of each of the plurality of pieces of RRC signaling includes frequencyHopping.

In an embodiment, the name of each of the plurality of pieces of RRC signaling includes frequencyHoppingOffsetLists.

In an embodiment, the name of each of the plurality of pieces of RRC signaling includes resourceAllocation.

In an embodiment, the name of each of the plurality of pieces of RRC signaling includes pusch-TimeDomainAllocationList.

In an embodiment, the name of each of the plurality of pieces of RRC signaling includes mcs-Table.

In an embodiment, the name of each of the plurality of pieces of RRC signaling includes mcs-TableTransformPrecoder.

In an embodiment, the name of each of the plurality of pieces of RRC signaling includes transformPrecoder.

In an embodiment, the name of each of the plurality of pieces of RRC signaling includes codebookSubset.

In an embodiment, the name of each of the plurality of pieces of RRC signaling includes maxRank.

In an embodiment, the name of each of the plurality of pieces of RRC signaling includes rbg-Size.

In an embodiment, the name of each of the plurality of pieces of RRC signaling includes uci-OnPUSCH.

In an embodiment, the name of each of the plurality of pieces of RRC signaling includes tp-pi2BPSK.

In an embodiment, the name of each of the plurality of pieces of RRC signaling includes minimumSchedulingOffsetK2.

In an embodiment, the name of each of the plurality of pieces of RRC signaling includes ul-AccessConfigList.

In an embodiment, the name of each of the plurality of pieces of RRC signaling includes harq-ProcessNumberSize.

In an embodiment, the name of each of the plurality of pieces of RRC signaling includes dmrs-SequenceInitialization.

In an embodiment, the name of each of the plurality of pieces of RRC signaling includes numberOfBitsForRV.

In an embodiment, the name of each of the plurality of pieces of RRC signaling includes antennaPortsFieldPresence.

In an embodiment, the name of each of the plurality of pieces of RRC signaling includes invalidSymbolPatternIndicator.

In an embodiment, the name of each of the plurality of pieces of RRC signaling includes priorityIndicator.

In an embodiment, the name of each of the plurality of pieces of RRC signaling includes pusch-RepTypeIndicator.

In an embodiment, the name of each of the plurality of pieces of RRC signaling includes resourceAllocationType1Granularity.

In an embodiment, the name of each of the plurality of pieces of RRC signaling includes ul-FullPowerTransmission.

In an embodiment, the name of each of the plurality of pieces of RRC signaling includes numberOfInvalidSymbolsForDL-UL-Switching.

In an embodiment, the name of each of the plurality of pieces of RRC signaling includes betaOffsetsCrossPri0.

In an embodiment, the name of each of the plurality of pieces of RRC signaling includes betaOffsetsCrossPri1.

In an embodiment, the name of each of the plurality of pieces of RRC signaling includes mappingPattern.

In an embodiment, the name of each of the plurality of pieces of RRC signaling includes secondTPCField.

In an embodiment, the name of each of the plurality of pieces of RRC signaling includes sequenceOffsetForRV.

In an embodiment, the name of each of the plurality of pieces of RRC signaling includes availableSlotCounting.

In an embodiment, the name of each of the plurality of pieces of RRC signaling includes dmrs-BundlingPUSCH-Config.

In an embodiment, each of the plurality of pieces of RRC signaling is PUSCH-ConfigCommon.

In an embodiment, each of the plurality of pieces of RRC signaling is PUSCH-ServingCellConfig.

In an embodiment, each of the plurality of pieces of RRC signaling includes at least one of PUSCH-ConfigCommon and PUSCH-ServingCellConfig.

In an embodiment, each of the plurality of pieces of RRC signaling is PUSCH-Config.

In an embodiment, each of the plurality of pieces of RRC signaling includes PUSCH-Config.

In an embodiment, each of the plurality of pieces of RRC signaling includes configuration information of the PUSCH.

In an embodiment, at least one parameter of the first parameter set represents the number of repetitions for data (Number of repetitions for data).

In an embodiment, at least one parameter of the first parameter set represents a transmission scheme (Transmission scheme) of the PUSCH.

In an embodiment, the transmission scheme is one of codebook (codebook)-based transmission, non-codebook (non-codebook)-based transmission, or single-antenna port transmission.

In an embodiment, the transmission scheme is one of codebook (codebook)-based transmission or non-codebook (non-codebook)-based transmission.

In an embodiment, at least one parameter of the first parameter set represents DMRS configuration for PUSCH transmission using a PUSCH mapping type A.

In an embodiment, at least one parameter of the first parameter set represents DMRS configuration for PUSCH transmission using a PUSCH mapping type B.

In an embodiment, at least one parameter of the first parameter set represents related information about power control of the PUSCH.

In an embodiment, at least one parameter of the first parameter set represents a frequency hopping pattern.

In an embodiment, at least one parameter of the first parameter set represents a frequency hopping offset (frequency hopping offset(s)) set.

In an embodiment, at least one parameter of the first parameter set represents a resource allocation type.

In an embodiment, at least one parameter of the first parameter set represents a frequency domain resource allocation type.

In an embodiment, at least one parameter of the first parameter set represents a list of time domain allocations for timing of UL assignment to UL data (List of time domain allocations for timing of UL assignment to UL data).

In an embodiment, at least one parameter of the first parameter set represents an MCS table that is used for the PUSCH without a transformer precoder.

In an embodiment, at least one parameter of the first parameter set represents an MCS table that is used for the PUSCH with a transformer precoder.

In an embodiment, at least one parameter of the first parameter set represents whether transform precoding is enabled.

In an embodiment, at least one parameter of the first parameter set represents a specific choice for a transformer precoder (transformer precoder) of the PUSCH.

In an embodiment, at least one parameter of the first parameter set represents a subset of PMIs addressed by TPMI (Subset of PMIs addressed by TPMI).

In an embodiment, at least one parameter of the first parameter set represents a subset of PMIs addressed by TRIs (Subset of PMIs Addressed by TRIs).

In an embodiment, at least one parameter of the first parameter set represents a size of an RBG that is selected between configuration 1 and configuration 2 for the PUSCH.

In an embodiment, at least one parameter of the first parameter set represents a beta offset set.

In an embodiment, at least one parameter of the first parameter set represents whether pi/2-BPSK modulation with transform precoding is enabled.

In an embodiment, at least one parameter of the first parameter set is used to determine the number of repetitions for data (Number of repetitions for data).

In an embodiment, at least one parameter of the first parameter set is used to determine a transmission scheme (Transmission scheme) of the PUSCH.

In an embodiment, the transmission scheme is one of codebook (codebook)-based transmission, non-codebook (non-codebook)-based transmission, or single-antenna port transmission.

In an embodiment, the transmission scheme is one of codebook (codebook)-based transmission or non-codebook (non-codebook)-based transmission.

In an embodiment, at least one parameter of the first parameter set is used to determine DMRS configuration for PUSCH transmission using a PUSCH mapping type A.

In an embodiment, at least one parameter of the first parameter set is used to determine DMRS configuration for PUSCH transmission using a PUSCH mapping type B.

In an embodiment, at least one parameter of the first parameter set is used to determine power control of the PUSCH.

In an embodiment, at least one parameter of the first parameter set is used to determine a frequency hopping pattern.

In an embodiment, at least one parameter of the first parameter set is used to determine a frequency hopping offset (frequency hopping offset(s)) set.

In an embodiment, at least one parameter of the first parameter set is used to determine a resource allocation type.

In an embodiment, at least one parameter of the first parameter set is used to determine a frequency domain resource allocation type.

In an embodiment, at least one parameter of the first parameter set is used to determine a list of time domain allocations for timing of UL assignment to UL data (List of time domain allocations for timing of UL assignment to UL data).

In an embodiment, at least one parameter of the first parameter set is used to determine an MCS table that is used for the PUSCH without a transformer precoder.

In an embodiment, at least one parameter of the first parameter set is used to determine an MCS table that is used for the PUSCH with a transformer precoder.

In an embodiment, at least one parameter of the first parameter set is used to determine whether transform precoding is enabled.

In an embodiment, at least one parameter of the first parameter set is used to determine a specific choice for a transformer precoder (transformer precoder) of the PUSCH.

In an embodiment, at least one parameter of the first parameter set is used to determine a subset of PMIs addressed by TPMI (Subset of PMIs addressed by TPMI).

In an embodiment, at least one parameter of the first parameter set is used to determine a subset of PMIs addressed by TRIs (Subset of PMIs Addressed by TRIs).

In an embodiment, at least one parameter of the first parameter set is used to determine a size of an RBG that is selected between configuration 1 and configuration 2 for the PUSCH.

In an embodiment, at least one parameter of the first parameter set is used to determine a beta offset set.

In an embodiment, tat least one parameter of the first parameter set is used to determine whether pi/2-BPSK modulation with transform precoding is enabled.

In an embodiment, at least one parameter of the first parameter set indicates the number of repetitions for data (Number of repetitions for data).

In an embodiment, at least one parameter of the first parameter set indicates a transmission scheme (Transmission scheme) of the PUSCH.

In an embodiment, the transmission scheme is one of codebook (codebook)-based transmission, non-codebook (non-codebook)-based transmission, or single-antenna port transmission.

In an embodiment, the transmission scheme is one of codebook (codebook)-based transmission or non-codebook (non-codebook)-based transmission.

In an embodiment, at least one parameter of the first parameter set indicates DMRS configuration for PUSCH transmission using a PUSCH mapping type A.

In an embodiment, at least one parameter of the first parameter set indicates DMRS configuration for PUSCH transmission using a PUSCH mapping type B.

In an embodiment, at least one parameter of the first parameter set indicates power control of the PUSCH.

In an embodiment, at least one parameter of the first parameter set indicates a frequency hopping pattern.

In an embodiment, at least one parameter of the first parameter set indicates a frequency hopping offset (frequency hopping offset(s)) set.

In an embodiment, at least one parameter of the first parameter set indicates a resource allocation type.

In an embodiment, at least one parameter of the first parameter set indicates a frequency domain resource allocation type.

In an embodiment, at least one parameter of the first parameter set indicates a list of time domain allocations for timing of UL assignment to UL data (List of time domain allocations for timing of UL assignment to UL data).

In an embodiment, at least one parameter of the first parameter set indicates an MCS table that is used for the PUSCH without a transformer precoder.

In an embodiment, at least one parameter of the first parameter set indicates an MCS table that is used for the PUSCH with a transformer precoder.

In an embodiment, at least one parameter of the first parameter set indicates whether transform precoding is enabled.

In an embodiment, at least one parameter of the first parameter set indicates a specific choice for a transformer precoder (transformer precoder) of the PUSCH.

In an embodiment, at least one parameter of the first parameter set indicates a subset of PMIs addressed by TPMI (Subset of PMIs addressed by TPMI).

In an embodiment, at least one parameter of the first parameter set indicates a subset of PMIs addressed by TRIs (Subset of PMIs Addressed by TRIs).

In an embodiment, at least one parameter of the first parameter set indicates a size of an RBG that is selected between configuration 1 and configuration 2 for the PUSCH.

In an embodiment, at least one parameter of the first parameter set indicates a beta offset set.

In an embodiment, tat least one parameter of the first parameter set indicates whether pi/2-BPSK modulation with transform precoding is enabled.

In an embodiment, the first parameter set includes the number of repetitions for data (Number of repetitions for data).

In an embodiment, the first parameter set includes a transmission scheme (Transmission scheme) of the PUSCH.

In an embodiment, the transmission scheme is one of codebook (codebook)-based transmission, non-codebook (non-codebook)-based transmission, or single-antenna port transmission.

In an embodiment, the first parameter set includes DMRS configuration for PUSCH transmission using a PUSCH mapping type A.

In an embodiment, the first parameter set includes DMRS configuration for PUSCH transmission using a PUSCH mapping type B.

In an embodiment, the first parameter set includes related information about power control of the PUSCH.

In an embodiment, the first parameter set includes a frequency hopping pattern.

In an embodiment, the first parameter set includes a frequency hopping offset (frequency hopping offset(s)) set.

In an embodiment, the first parameter set includes a resource allocation type.

In an embodiment, the first parameter set includes a frequency domain resource allocation type.

In an embodiment, the first parameter set includes a list of time domain allocations for timing of UL assignment to UL data (List of time domain allocations for timing of UL assignment to UL data).

In an embodiment, the first parameter set includes an MCS table that is used for the PUSCH without a transformer precoder.

In an embodiment, the first parameter set includes an MCS table that is used for the PUSCH with a transformer precoder.

In an embodiment, the first parameter set includes information about whether transform precoding is enabled.

In an embodiment, the first parameter set includes a specific choice for a transformer precoder (transformer precoder) of the PUSCH.

In an embodiment, the first parameter set includes a subset of PMIs addressed by TPMI (Subset of PMIs addressed by TPMI).

In an embodiment, the first parameter set includes a subset of PMIs addressed by TRIs (Subset of PMIs Addressed by TRIs).

In an embodiment, the first parameter set includes a size of an RBG that is selected between configuration 1 and configuration 2 for the PUSCH.

In an embodiment, the first parameter set includes a beta offset set.

In an embodiment, the first parameter set includes information about whether pi/2-BPSK modulation with transform precoding is enabled.

In an embodiment, the first parameter set includes whether there is an antenna port (Antenna ports) field.

In an embodiment, the first parameter set includes whether to enable PUSCH repetitions counted based on an available slot.

In an embodiment, the first parameter set includes a set of beta offsets configured for HARQ-ACK (Hybrid automatic repeat request acknowledgment, hybrid automatic repeat request acknowledgment) multiplexing onto PUSCHs with different priorities.

In an embodiment, the first parameter set includes information about DMRS bundling (bundling) for the PUSCH.

In an embodiment, the first parameter set includes whether there is a DMRS sequence initialization (DMRS Sequence Initialization) field.

In an embodiment, the first parameter set includes a size of a HARQ process number (HARQ process number) field.

In an embodiment, the first parameter set includes an invalid symbol pattern (pattern) for a PUSCH transmission type B.

In an embodiment, the first parameter set includes whether to follow a cyclic mapping pattern (Cyclic mapping pattern) or a sequential mapping pattern (Sequential mapping pattern) when two SRS resource sets are configured for PUSCH transmission and a PUSCH transmission occasion (PUSCH transmission occasions) is associated with the two SRS resource sets.

In an embodiment, the first parameter set includes a list of minimum K2 values.

In an embodiment, the first parameter set includes a size of a redundancy version (Redundancy version) field.

In an embodiment, the first parameter set includes the number of symbols invalid to a PUSCH repetition type B after the last semi-static (semi-static) DL (Downlink, downlink) symbol.

In an embodiment, the first parameter set includes whether there is a priority indicator (priority indicator) field.

In an embodiment, the first parameter set includes whether to follow behavior of a PUSCH repetition type (repetition type) A or behavior of a PUSCH repetition type B.

In an embodiment, the first parameter set includes whether there is a second TPC field (second TPC field).

In an embodiment, the first parameter set includes an RV offset configured for a start RV (Redundancy version, redundancy version) of the first repetition (the first actual repetition (actual repetition) in the PUSCH repetition type B) corresponding to a second SRS resource set for the PUSCH.

In an embodiment, the first parameter set includes a combined list of a cyclic prefix extension, a channel access priority class (channel access priority class, CAPC), and a UL (Uplink, uplink) channel access type.

In an embodiment, the first parameter set includes a UL full power transmission mode (UL full power transmission mode).

In an embodiment, the first parameter set includes a scheduling granularity indicated by a start point and a length applicable to a resource allocation type 1.

In an embodiment, at least one parameter of the first parameter set indicates whether there is an antenna port (Antenna ports) field.

In an embodiment, at least one parameter of the first parameter set indicates whether to enable PUSCH repetitions counted based on an available slot.

In an embodiment, at least one parameter of the first parameter set indicates a set of beta offsets configured for HARQ-ACK multiplexing onto PUSCHs with different priorities.

In an embodiment, at least one parameter of the first parameter set indicates information about DMRS bundling (bundling) for the PUSCH.

In an embodiment, at least one parameter of the first parameter set indicates whether there is a DMRS sequence initialization (DMRS Sequence Initialization) field.

In an embodiment, at least one parameter of the first parameter set indicates a size of a HARQ process number (HARQ process number) field.

In an embodiment, at least one parameter of the first parameter set indicates an invalid symbol pattern (pattern) for a PUSCH transmission type B.

In an embodiment, at least one parameter of the first parameter set indicates whether to follow a cyclic mapping pattern (Cyclic mapping pattern) or a sequential mapping pattern (Sequential mapping pattern) when two SRS resource sets are configured for PUSCH transmission and a PUSCH transmission occasion (PUSCH transmission occasions) is associated with the two SRS resource sets.

In an embodiment, at least one parameter of the first parameter set indicates a list of minimum K2 values.

In an embodiment, at least one parameter of the first parameter set indicates a size of a redundancy version (Redundancy version) field.

In an embodiment, at least one parameter of the first parameter set indicates the number of symbols invalid to a PUSCH repetition type B after the last semi-static (semi-static) DL (Downlink, downlink) symbol.

In an embodiment, at least one parameter of the first parameter set indicates whether there is a priority indicator (priority indicator) field.

In an embodiment, at least one parameter of the first parameter set indicates whether to follow behavior of a PUSCH repetition type (repetition type) A or behavior of a PUSCH repetition type B.

In an embodiment, at least one parameter of the first parameter set indicates whether there is a second TPC field (second TPC field).

In an embodiment, at least one parameter of the first parameter set indicates an RV offset configured for a start RV (Redundancy version, redundancy version) of the first repetition (the first actual repetition (actual repetition) in the PUSCH repetition type B) corresponding to a second SRS resource set for the PUSCH.

In an embodiment, at least one parameter of the first parameter set indicates a combined list of a cyclic prefix extension, a channel access priority class (channel access priority class, CAPC), and a UL (Uplink, uplink) channel access type.

In an embodiment, at least one parameter of the first parameter set indicates a UL full power transmission mode (UL full power transmission mode).

In an embodiment, at least one parameter of the first parameter set indicates a scheduling granularity indicated by a start point and a length applicable to a resource allocation type 1.

In an embodiment, at least one parameter of the first parameter set is used to determine whether there is an antenna port (Antenna ports) field.

In an embodiment, at least one parameter of the first parameter set is used to determine whether to enable PUSCH repetitions counted based on an available slot.

In an embodiment, at least one parameter of the first parameter set is used to determine a set of beta offsets configured for HARQ-ACK multiplexing onto PUSCHs with different priorities.

In an embodiment, at least one parameter of the first parameter set is used to determine information about DMRS bundling (bundling) for the PUSCH.

In an embodiment, at least one parameter of the first parameter set is used to determine whether there is a DMRS sequence initialization (DMRS Sequence Initialization) field.

In an embodiment, at least one parameter of the first parameter set is used to determine a size of a HARQ process number (HARQ process number) field.

In an embodiment, at least one parameter of the first parameter set is used to determine an invalid symbol pattern (pattern) for a PUSCH transmission type B.

In an embodiment, at least one parameter of the first parameter set is used to determine whether to follow a cyclic mapping pattern (Cyclic mapping pattern) or a sequential mapping pattern (Sequential mapping pattern) when two SRS resource sets are configured for PUSCH transmission and a PUSCH transmission occasion (PUSCH transmission occasions) is associated with the two SRS resource sets.

In an embodiment, at least one parameter of the first parameter set is used to determine a list of minimum K2 values.

In an embodiment, at least one parameter of the first parameter set is used to determine a size of a redundancy version (Redundancy version) field.

In an embodiment, at least one parameter of the first parameter set is used to determine the number of symbols invalid to a PUSCH repetition type B after the last semi-static (semi-static) DL (Downlink, downlink) symbol.

In an embodiment, at least one parameter of the first parameter set is used to determine whether there is a priority indicator (priority indicator) field.

In an embodiment, at least one parameter of the first parameter set is used to determine whether to follow behavior of a PUSCH repetition type (repetition type) A or behavior of a PUSCH repetition type B.

In an embodiment, at least one parameter of the first parameter set is used to determine whether there is a second TPC field (second TPC field).

In an embodiment, at least one parameter of the first parameter set is used to determine an RV offset configured for a start RV (Redundancy version, redundancy version) of the first repetition (the first actual repetition (actual repetition) in the PUSCH repetition type B) corresponding to a second SRS resource set for the PUSCH.

In an embodiment, at least one parameter of the first parameter set is used to determine a combined list of a cyclic prefix extension, a channel access priority class (channel access priority class, CAPC), and a UL (Uplink, uplink) channel access type.

In an embodiment, at least one parameter of the first parameter set is used to determine a UL full power transmission mode (UL full power transmission mode).

In an embodiment, at least one parameter of the first parameter set is used to determine a scheduling granularity indicated by a start point and a length applicable to a resource allocation type 1.

In an embodiment, at least one parameter of the first parameter set represents whether there is an antenna port (Antenna ports) field.

In an embodiment, at least one parameter of the first parameter set represents whether to enable PUSCH repetitions counted based on an available slot.

In an embodiment, at least one parameter of the first parameter set represents a set of beta offsets configured for HARQ-ACK multiplexing onto PUSCHs with different priorities.

In an embodiment, at least one parameter of the first parameter set represents information about DMRS bundling (bundling) for the PUSCH.

In an embodiment, at least one parameter of the first parameter set represents whether there is a DMRS sequence initialization (DMRS Sequence Initialization) field.

In an embodiment, at least one parameter of the first parameter set represents a size of a HARQ process number (HARQ process number) field.

In an embodiment, at least one parameter of the first parameter set represents an invalid symbol pattern (pattern) for a PUSCH transmission type B.

In an embodiment, at least one parameter of the first parameter set represents whether to follow a cyclic mapping pattern (Cyclic mapping pattern) or a sequential mapping pattern (Sequential mapping pattern) when two SRS resource sets are configured for PUSCH transmission and a PUSCH transmission occasion (PUSCH transmission occasions) is associated with the two SRS resource sets.

In an embodiment, at least one parameter of the first parameter set represents a list of minimum K2 values.

In an embodiment, at least one parameter of the first parameter set represents a size of a redundancy version (Redundancy version) field.

In an embodiment, at least one parameter of the first parameter set represents the number of symbols invalid to a PUSCH repetition type B after the last semi-static (semi-static) DL (Downlink, downlink) symbol.

In an embodiment, at least one parameter of the first parameter set represents whether there is a priority indicator (priority indicator) field.

In an embodiment, at least one parameter of the first parameter set represents whether to follow behavior of a PUSCH repetition type (repetition type) A or behavior of a PUSCH repetition type B.

In an embodiment, at least one parameter of the first parameter set represents whether there is a second TPC field (second TPC field).

In an embodiment, at least one parameter of the first parameter set represents an RV offset configured for a start RV (Redundancy version, redundancy version) of the first repetition (the first actual repetition (actual repetition) in the PUSCH repetition type B) corresponding to a second SRS resource set for the PUSCH.

In an embodiment, at least one parameter of the first parameter set represents a combined list of a cyclic prefix extension, a channel access priority class (channel access priority class, CAPC), and a UL (Uplink, uplink) channel access type.

In an embodiment, at least one parameter of the first parameter set represents a UL full power transmission mode (UL full power transmission mode).

In an embodiment, at least one parameter of the first parameter set represents a scheduling granularity indicated by a start point and a length applicable to a resource allocation type 1.

In an embodiment, the number of the plurality of pieces of RRC signaling is equal to the number of cells included in the first cell set, and the plurality of pieces of RRC signaling are in one-to-one correspondence with the cells in the first cell set.

In an embodiment, the third target field set includes only one field.

In an embodiment, the third target field set includes a plurality of fields.

In an embodiment, a field in the third target field set in the target DCI includes at least one bit.

In an embodiment, a field in the third target field set in the target DCI includes a non-negative integer number of bits.

In an embodiment, there is no intersection set between the third target field set and the second target field set.

In an embodiment, there is no intersection set between the third target field set and the target field set.

In an embodiment, at least one field included in the third target field set in the target DCI belongs to the target field set in the target DCI.

In an embodiment, at least one field included in the third target field set in the target DCI does not belong to the target field set in the target DCI.

In an embodiment, there is no same field between the third target field set in the target DCI and the target field set in the target DCI.

In an embodiment, the third target field set in the target DCI is the target field set in the target DCI.

In an embodiment, indication of each field of the third target field set in the target DCI depends on at least one parameter of the first parameter set.

In an embodiment, the expression that the indication of the third target field set in the target DCI depends on the first parameter set includes: indicated content of at least one field of the third target field set in the target DCI depends on at least one parameter of the first parameter set.

In an embodiment, the expression that the indication of the third target field set in the target DCI depends on the first parameter set includes: an indication manner of at least one field of the third target field set in the target DCI depends on at least one parameter of the first parameter set.

In an embodiment, the expression that the indication of the third target field set in the target DCI depends on the first parameter set includes: a size of at least one field of the third target field set in the target DCI depends on at least one parameter of the first parameter set.

In an embodiment, the expression that the indication of the third target field set in the target DCI depends on the first parameter set includes: a table on which indication of at least one field of the third target field set in the target DCI is based depends on at least one parameter of the first parameter set.

In an embodiment, the expression that the indication of the third target field set in the target DCI depends on the first parameter set includes: a field in the third target field set in the target DCI indicates a value within a value range, and at least one parameter of the first parameter set is used to configure the value range.

In an embodiment, the expression that the indication of the third target field set in the target DCI depends on the first parameter set includes: content indicated by a field in the third target field set in the target DCI is indicated by a parameter in the first parameter set.

In an embodiment, the first parameter set includes only one parameter.

In an embodiment, the first parameter set includes a plurality of parameters.

In an embodiment, the expression that the indication of the third target field set in the target DCI depends on the first parameter set includes: a meaning of a bit in at least one field of the third target field set in the target DCI depends on at least one parameter of the first parameter set.

In an embodiment, the expression that the indication of the third target field set in the target DCI depends on the first parameter set includes: content indicated by a value of at least one field of the third target field set in the target DCI depends on at least one parameter of the first parameter set.

In an embodiment, the expression of depending on the first parameter set includes being indicated by at least one parameter of the first parameter set, or being jointly indicated by a plurality of parameters including at least one parameter of the first parameter set.

In an embodiment, the expression of depending on the first parameter set includes being determined based on at least one parameter of the first parameter set.

In an embodiment, the expression of depending on the first parameter set includes being determined based on configuration information represented by at least one parameter of the first parameter set.

In an embodiment, the expression of depending on the first parameter set includes being determined based on configuration information included in at least one parameter of the first parameter set.

In an embodiment, the expression of depending on the first parameter set includes being determined based on configuration information indicated by at least one parameter of the first parameter set.

In an embodiment, at least one parameter of the first parameter set represents a maximum number of CBGs of each TB.

In an embodiment, at least one parameter of the first parameter set represents whether to enable CBG-based transmission.

In an embodiment, at least one parameter of the first parameter set represents a maximum MIMO (Multiple-Input Multiple-Output, multiple-input multiple-output) layer for the PUSCH in all UL BWPs (Bandwidth part, bandwidth part) corresponding to the cell.

In an embodiment, at least one parameter of the first parameter set represents the number of HARQ processes used on the PUSCH of the cell.

In an embodiment, at least one parameter of the first parameter set represents whether to enable configuration of an advanced processing time capability 2 (advanced processing time capability 2) for the PUSCH.

In an embodiment, at least one parameter of the first parameter set represents whether to enable limited buffer rate-matching (Limited buffer rate-matching, LBRM).

In an embodiment, at least one parameter of the first parameter set represents a HARQ mode for a HARQ process ID.

In an embodiment, at least one parameter of the first parameter set represents whether to enable group hopping (group hopping) for RMRS transmission with transform precoding.

In an embodiment, at least one parameter of the first parameter set represents a power offset (offset) between msg3 and RACH (Random Access Channel(s), random access channel) preamble (preamble) transmission.

In an embodiment, at least one parameter of the first parameter set represents a P0 value for a PUSCH (other than msg3) with grant (grant).

In an embodiment, at least one parameter of the first parameter set is used to determine a maximum number of CBGs of each TB.

In an embodiment, at least one parameter of the first parameter set is used to determine whether to enable CBG-based transmission.

In an embodiment, at least one parameter of the first parameter set is used to determine a maximum MIMO (Multiple-Input Multiple-Output, multiple-input multiple-output) layer for the PUSCH in all UL BWPs (Bandwidth part, bandwidth part) corresponding to the cell.

In an embodiment, at least one parameter of the first parameter set is used to determine the number of HARQ processes used on the PUSCH of the cell.

In an embodiment, at least one parameter of the first parameter set is used to determine whether to enable configuration of an advanced processing time capability 2 (advanced processing time capability 2) for the PUSCH.

In an embodiment, at least one parameter of the first parameter set is used to determine whether to enable limited buffer rate-matching (Limited buffer rate-matching, LBRM).

In an embodiment, at least one parameter of the first parameter set is used to determine a HARQ mode for a HARQ process ID.

In an embodiment, at least one parameter of the first parameter set is used to determine whether to enable group hopping (group hopping) for RMRS transmission with transform precoding.

In an embodiment, at least one parameter of the first parameter set is used to determine a power offset (offset) between msg3 and RACH (Random Access Channel(s), random access channel) preamble (preamble) transmission.

In an embodiment, at least one parameter of the first parameter set is used to determine a P0 value for a PUSCH (other than msg3) with grant (grant).

In an embodiment, at least one parameter of the first parameter set indicates a maximum number of CBGs of each TB.

In an embodiment, at least one parameter of the first parameter set indicates whether to enable CBG-based transmission.

In an embodiment, at least one parameter of the first parameter set indicates a maximum MIMO (Multiple-Input Multiple-Output, multiple-input multiple-output) layer for the PUSCH in all UL BWPs (Bandwidth part, bandwidth part) corresponding to the cell.

In an embodiment, at least one parameter of the first parameter set indicates the number of HARQ processes used on the PUSCH of the cell.

In an embodiment, at least one parameter of the first parameter set indicates whether to enable configuration of an advanced processing time capability 2 (advanced processing time capability 2) for the PUSCH.

In an embodiment, at least one parameter of the first parameter set indicates whether to enable limited buffer rate-matching (Limited buffer rate-matching, LBRM).

In an embodiment, at least one parameter of the first parameter set indicates a HARQ mode for a HARQ process ID.

In an embodiment, at least one parameter of the first parameter set indicates whether to enable group hopping (group hopping) for RMRS transmission with transform precoding.

In an embodiment, at least one parameter of the first parameter set indicates a power offset (offset) between msg3 and RACH (Random Access Channel(s), random access channel) preamble (preamble) transmission.

In an embodiment, at least one parameter of the first parameter set indicates a P0 value for a PUSCH (other than msg3) with grant (grant).

In an embodiment, the first parameter set includes a maximum number of CBGs of each TB.

In an embodiment, the first parameter set includes whether to enable CBG-based transmission.

In an embodiment, the first parameter set includes a maximum MIMO (Multiple-Input Multiple-Output, multiple-input multiple-output) layer for the PUSCH in all UL BWPs (Bandwidth part, bandwidth part) corresponding to the cell.

In an embodiment, the first parameter set includes the number of HARQ processes used on the PUSCH of the cell.

In an embodiment, the first parameter set includes whether to enable configuration of an advanced processing time capability 2 (advanced processing time capability 2) for the PUSCH.

In an embodiment, the first parameter set includes whether to enable limited buffer rate-matching (Limited buffer rate-matching, LBRM).

In an embodiment, the first parameter set includes a HARQ mode for a HARQ process ID.

In an embodiment, the first parameter set includes whether to enable group hopping (group hopping) for RMRS transmission with transform precoding.

In an embodiment, the first parameter set includes a power offset (offset) between msg3 and RACH (Random Access Channel(s), random access channel) preamble (preamble) transmission.

In an embodiment, the first parameter set includes a P0 value for a PUSCH (other than msg3) with grant (grant).

In an embodiment, each of the plurality of pieces of RRC signaling is codeBlockGroup Transmission.

In an embodiment, each of the plurality of pieces of RRC signaling is rateMatching.

In an embodiment, each of the plurality of pieces of RRC signaling is xOverhead.

In an embodiment, each of the plurality of pieces of RRC signaling is maxMIMO-Layers.

In an embodiment, each of the plurality of pieces of RRC signaling is processingType2Enabled.

In an embodiment, each of the plurality of pieces of RRC signaling is nrofHARQ-ProcessesForPUSCH-r17.

In an embodiment, each of the plurality of pieces of RRC signaling is uplinkHARQ-mode-r17.

In an embodiment, each of the plurality of pieces of RRC signaling is groupHoppingEnabledTransformPrecoding.

In an embodiment, each of the plurality of pieces of RRC signaling is msg3-DeltaPreamble.

In an embodiment, each of the plurality of pieces of RRC signaling is p0-NominalWithGrant.

In an embodiment, the name of each of the plurality of pieces of RRC signaling includes codeBlockGroup Transmission.

In an embodiment, the name of each of the plurality of pieces of RRC signaling includes rateMatching.

In an embodiment, the name of each of the plurality of pieces of RRC signaling includes xOverhead.

In an embodiment, the name of each of the plurality of pieces of RRC signaling includes maxMIMO-Layers.

In an embodiment, the name of each of the plurality of pieces of RRC signaling includes processingType2Enabled.

In an embodiment, the name of each of the plurality of pieces of RRC signaling includes nrofHARQ-ProcessesForPUSCH.

In an embodiment, the name of each of the plurality of pieces of RRC signaling includes uplinkHARQ-mode.

In an embodiment, the name of each of the plurality of pieces of RRC signaling includes groupHoppingEnabledTransformPrecoding.

In an embodiment, the name of each of the plurality of pieces of RRC signaling includes msg3-DeltaPreamble.

In an embodiment, the name of each of the plurality of pieces of RRC signaling includes p0-NominalWithGrant.

In an embodiment, the name of each of the plurality of pieces of RRC signaling includes -r18.

In an embodiment, the name of each of the plurality of pieces of RRC signaling includes -r19.

In an embodiment, the name of each of the plurality of pieces of RRC signaling includes -r20.

In an embodiment, the expression that configuration of at least one of the plurality of pieces of RRC signaling is applied to the first parameter set includes: the configuration of the at least one of the plurality of pieces of RRC signaling is applied to each parameter of the first parameter set.

In an embodiment, the expression that configuration of at least one of the plurality of pieces of RRC signaling is applied to the first parameter set includes: the configuration of the at least one of the plurality of pieces of RRC signaling is used to determine the first parameter set.

In an embodiment, the expression that configuration of at least one of the plurality of pieces of RRC signaling is applied to the first parameter set includes: the configuration of the at least one of the plurality of pieces of RRC signaling indicates the first parameter set.

In an embodiment, the expression that configuration of at least one of the plurality of pieces of RRC signaling is applied to the first parameter set includes: the configuration of the at least one of the plurality of pieces of RRC signaling is used to determine each parameter of the first parameter set.

In an embodiment, the expression that configuration of at least one of the plurality of pieces of RRC signaling is applied to the first parameter set includes: the configuration of the at least one of the plurality of pieces of RRC signaling indicates each parameter of the first parameter set.

In an embodiment, the expression that configuration of at least one of the plurality of pieces of RRC signaling is applied to the first parameter set includes: for each parameter of the first parameter set, at least one field in the first RRC signaling is used to determine the parameter, or whether there is a field in the first RRC signaling is used to determine the parameter.

In an embodiment, the expression that configuration of at least one of the plurality of pieces of RRC signaling is applied to the first parameter set includes: for each parameter of the first parameter set. at least one field in the first RRC signaling indicates the parameter, or whether there is a field in the first RRC signaling indicates the parameter.

In an embodiment, when the number of cells included in the first cell set is 1 or greater than 1, the indication of the third target field set in the target DCI depends on the first parameter set, and the configuration of the first RRC signaling is applied to the first parameter set.

In an embodiment, the expression that the configuration of the first RRC signaling is applied to the first parameter set includes: the configuration of the first RRC signaling is applied to each parameter of the first parameter set.

In an embodiment, the expression that the configuration of the first RRC signaling is applied to the first parameter set includes: the configuration of the first RRC signaling is used to determine the first parameter set.

In an embodiment, the expression that the configuration of the first RRC signaling is applied to the first parameter set includes: the configuration of the first RRC signaling indicates the first parameter set.

In an embodiment, the expression that the configuration of the first RRC signaling is applied to the first parameter set includes: the configuration of the first RRC signaling is used to determine each parameter of the first parameter set.

In an embodiment, the expression that the configuration of the first RRC signaling is applied to the first parameter set includes: the configuration of the first RRC signaling indicates each parameter of the first parameter set.

In an embodiment, the expression that the configuration of the first RRC signaling is applied to the first parameter set includes: for each parameter of the first parameter set, at least one field in the first RRC signaling is used to determine the parameter, or whether there is a field in the first RRC signaling is used to determine the parameter.

In an embodiment, the expression that the configuration of the first RRC signaling is applied to the first parameter set includes: for each parameter of the first parameter set, at least one field in the first RRC signaling indicates the parameter, or whether there is a field in the first RRC signaling indicates the parameter.

### Embodiment 11

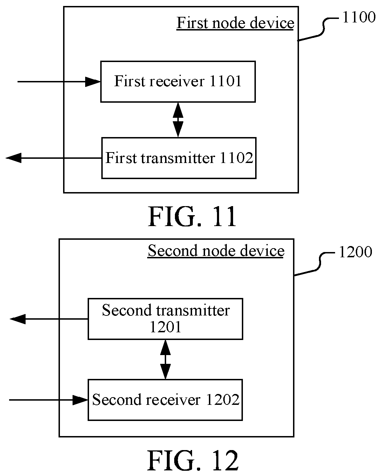

Embodiment 11 illustrates a structural block diagram of a processing apparatus in a first node device, as shown in FIG. 11. In FIG. 11, the processing apparatus 1100 of the first node device includes a first receiver 1101 and a first transmitter 1102.

In an embodiment, the first node device 1100 is a base station.

In an embodiment, the first node device 1100 is a user equipment.

In an embodiment, the first node device 1100 is a relay node.

In an embodiment, the first node device 1100 is an in-vehicle communication device.

In an embodiment, the first node device 1100 is a user equipment supporting V2X communication.

In an embodiment, the first node device 1100 is a relay node supporting V2X communication.

In an embodiment, the first node device 1100 is a user equipment supporting an operation in a high-frequency spectrum.

In an embodiment, the first node device 1100 is a user equipment supporting an operation in a shared spectrum.

In an embodiment, the first node device 1100 is a user equipment supporting an XR service.

In an embodiment, the first node device 1100 is a user equipment supporting scheduling of PUSCHs in a plurality of cells by one piece of DCI.

In an embodiment, the first receiver 1101 includes at least one of the antenna 452, the receiver 454, the multi-antenna receive processor 458, the receive processor 456, the controller/processor 459, the memory 460, and the data source 467 that are shown in FIG. 4 of this application.

In an embodiment, the first receiver 1101 includes at least the first five of the antenna 452, the receiver 454, the multi-antenna receive processor 458, the receive processor 456, the controller/processor 459, the memory 460, and the data source 467 that are shown in FIG. 4 of this application.

In an embodiment, the first receiver 1101 includes at least the first four of the antenna 452, the receiver 454, the multi-antenna receive processor 458, the receive processor 456, the controller/processor 459, the memory 460, and the data source 467 that are shown in FIG. 4 of this application.

In an embodiment, the first receiver 1101 includes at least the first three of the antenna 452, the receiver 454, the multi-antenna receive processor 458, the receive processor 456, the controller/processor 459, the memory 460, and the data source 467 that are shown in FIG. 4 of this application.

In an embodiment, the first receiver 1101 includes at least the first two of the antenna 452, the receiver 454, the multi-antenna receive processor 458, the receive processor 456, the controller/processor 459, the memory 460, and the data source 467 that are shown in FIG. 4 of this application.

In an embodiment, the first transmitter 1102 includes at least one of the antenna 452, the transmitter 454, the multi-antenna transmit processor 457, the transmit processor 468, the controller/processor 459, the memory 460, and the data source 467 that are shown in FIG. 4 of this application.

In an embodiment, the first transmitter 1102 includes at least the first five of the antenna 452, the transmitter 454, the multi-antenna transmit processor 457, the transmit processor 468, the controller/processor 459, the memory 460, and the data source 467 that are shown in FIG. 4 of this application.

In an embodiment, the first transmitter 1102 includes at least the first four of the antenna 452, the transmitter 454, the multi-antenna transmit processor 457, the transmit processor 468, the controller/processor 459, the memory 460, and the data source 467 that are shown in FIG. 4 of this application.

In an embodiment, the first transmitter 1102 includes at least the first three of the antenna 452, the transmitter 454, the multi-antenna transmit processor 457, the transmit processor 468, the controller/processor 459, the memory 460, and the data source 467 that are shown in FIG. 4 of this application.

In an embodiment, the first transmitter 1102 includes at least first two of the antenna 452, the transmitter 454, the multi-antenna transmit processor 457, the transmit processor 468, the controller/processor 459, the memory 460, and the data source 467 that are shown in FIG. 4 of this application.

In an embodiment, the first receiver 1101 is configured to receive a target RRC signaling set, and receive target DCI; and the first transmitter 1102 is configured to send a PUSCH in each cell of a first cell set. The target DCI is used to schedule the PUSCH sent in each cell of the first cell set. The target RRC signaling set includes first RRC signaling, the first RRC signaling is configured for a target cell, and the target cell is a cell of the first cell set. Whether the target DCI includes a target field set is related to the number of cells included in the first cell set. When the number of cells included in the first cell set is 1, whether the target DCI includes the target field set depends on the configuration of the first RRC signaling. When the number of cells included in the first cell set is greater than 1, whether the target DCI includes the target field set does not depend on the configuration of the first RRC signaling.

In an embodiment, the first RRC signaling is PUSCH-Config.

In an embodiment, the first RRC signaling is PUSCH-ConfigCommon.

In an embodiment, the first RRC signaling is PUSCH-ServingCellConfig.

In an embodiment, the number of cells included in the first cell set is greater than 1. The target DCI does not include the target field set.

In an embodiment, the number of cells included in the first cell set is greater than 1. The target DCI includes the target field set.

In an embodiment, the number of cells included in the first cell set is greater than 1. The target RRC signaling set includes second RRC signaling. The second RRC signaling is not configured for the target cell. Whether the target DCI includes the target field set depends on configuration of the second RRC signaling.

In an embodiment, the second RRC signaling is configured for a first reference cell, the first reference cell is a cell of the first cell set other than the target cell, and a second field in the target DCI is used to determine the first reference cell.

In an embodiment, the number of cells included in the first cell set is greater than 1. The target RRC signaling set includes a target RRC signaling subset, all signaling in the target RRC signaling subset is configured for the target cell, and the first RRC signaling is signaling of the target RRC signaling subset. Whether the target DCI includes the target field set depends on configuration of a piece of RRC signaling in the target RRC signaling subset other than the first RRC signaling.

In an embodiment, when the number of cells included in the first cell set is equal to 1 or greater than 1, whether the target DCI includes a second target field set depends on the configuration of the first RRC signaling.

In an embodiment, when the number of cells included in the first cell set is 1 or greater than 1, indication of a third target field set in the target DCI depends on a first parameter set, and the configuration of the first RRC signaling is applied to the first parameter set.

In an embodiment, the number of cells included in the first cell set is greater than 1. The target RRC signaling set includes a target RRC signaling subset, all signaling in the target RRC signaling subset is configured for the target cell, and the first RRC signaling is signaling of the target RRC signaling subset. Whether the target DCI includes the target field set depends on configuration of a piece of RRC signaling in the target RRC signaling subset other than the first RRC signaling.

In an embodiment, the number of cells included in the first cell set is greater than 1. The indication of the third target field set in the target DCI depends on the first parameter set. The target RRC signaling set includes a plurality of pieces of RRC signaling, and the first RRC signaling is one of the plurality of pieces of RRC signaling. The plurality of pieces of RRC signaling are respectively configured for a plurality of cells in the first cell set. Configuration of at least one of the plurality of pieces of RRC signaling is applied to the first parameter set, and the configuration of the plurality of pieces of RRC signaling for the first parameter set is expected to be the same.

### Embodiment 12

Embodiment 12 illustrates a structural block diagram of a processing apparatus in a second node device, as shown in FIG. 12. In FIG. 12, the processing apparatus 1200 of the second node device includes a second transmitter 1201 and a second receiver 1202.

In an embodiment, the second node device 1200 is a user equipment.

In an embodiment, the second node device 1200 is a base station.

In an embodiment, the second node device 1200 is a satellite device.

In an embodiment, the second node device 1200 is a relay node.

In an embodiment, the second node device 1200 is an in-vehicle communication device.

In an embodiment, the second node device 1200 is a user equipment supporting V2X communication.

In an embodiment, the second node device 1200 is a device supporting an operation in a high-frequency spectrum.

In an embodiment, the second node device 1200 is a device supporting an operation in a shared spectrum.

In an embodiment, the second node device 1200 is a device supporting an XR service.

In an embodiment, the second node device 1200 is a device supporting scheduling of PUSCHs in a plurality of cells by one piece of DCI.

In an embodiment, the second node device 1200 is one of a test apparatus, a test device, and a test meter.

In an embodiment, the second transmitter 1201 includes at least one of the antenna 420, the transmitter 418, the multi-antenna transmit processor 471, the transmit processor 416, the controller/processor 475, and the memory 476 that are shown in FIG. 4 of this application.

In an embodiment, the second transmitter 1201 includes at least the first five of the antenna 420, the transmitter 418, the multi-antenna transmit processor 471, the transmit processor 416, the controller/processor 475, and the memory 476 that are shown in FIG. 4 of this application.

In an embodiment, the second transmitter 1201 includes at least first four of the antenna 420, the transmitter 418, the multi-antenna transmit processor 471, the transmit processor 416, the controller/processor 475, and the memory 476 that are shown in FIG. 4 of this application.

In an embodiment, the second transmitter 1201 includes at least first three of the antenna 420, the transmitter 418, the multi-antenna transmit processor 471, the transmit processor 416, the controller/processor 475, and the memory 476 that are shown in FIG. 4 of this application.

In an embodiment, the second transmitter 1201 includes at least a first two of the antenna 420, the transmitter 418, the multi-antenna transmit processor 471, the transmit processor 416, the controller/processor 475, and the memory 476 that are shown in FIG. 4 of this application.

In an embodiment, the second receiver 1202 includes at least one of the antenna 420, the transmitter 418, the multi-antenna receive processor 472, the receive processor 470, the controller/processor 475, and the memory 476 that are shown in FIG. 4 of this application.

In an embodiment, the second receiver 1202 includes at least the first five of the antenna 420, the transmitter 418, the multi-antenna receive processor 472, the receive processor 470, the controller/processor 475, and the memory 476 that are shown in FIG. 4 of this application.

In an embodiment, the second receiver 1202 includes at least first four of the antenna 420, the transmitter 418, the multi-antenna receive processor 472, the receive processor 470, the controller/processor 475, and the memory 476 that are shown in FIG. 4 of this application.

In an embodiment, the second receiver 1202 includes at least first three of the antenna 420, the transmitter 418, the multi-antenna receive processor 472, the receive processor 470, the controller/processor 475, and the memory 476 that are shown in FIG. 4 of this application.

In an embodiment, the second receiver 1202 includes at least first two of the antenna 420, the transmitter 418, the multi-antenna receive processor 472, the receive processor 470, the controller/processor 475, and the memory 476 that are shown in FIG. 4 of this application.

In an embodiment, the second transmitter 1201 is configured to send a target RRC signaling set, and send target DCI; and the second receiver 1202 is configured to receive a PUSCH in each cell of a first cell set. The target DCI is used to schedule the PUSCH in each cell of the first cell set. The target RRC signaling set includes first RRC signaling, the first RRC signaling is configured for a target cell, and the target cell is a cell of the first cell set. Whether the target DCI includes a target field set is related to the number of cells included in the first cell set. When the number of cells included in the first cell set is 1, whether the target DCI includes the target field set depends on the configuration of the first RRC signaling. When the number of cells included in the first cell set is greater than 1, whether the target DCI includes the target field set does not depend on the configuration of the first RRC signaling.

In an embodiment, the first RRC signaling is PUSCH-Config.

In an embodiment, the first RRC signaling is PUSCH-ConfigCommon.

In an embodiment, the first RRC signaling is PUSCH-ServingCellConfig.

In an embodiment, the number of cells included in the first cell set is greater than 1. The target DCI does not include the target field set.

In an embodiment, the number of cells included in the first cell set is greater than 1. The target DCI includes the target field set.

In an embodiment, the number of cells included in the first cell set is greater than 1. The target RRC signaling set includes second RRC signaling. The second RRC signaling is not configured for the target cell. Whether the target DCI includes the target field set depends on configuration of the second RRC signaling.

In an embodiment, the second RRC signaling is configured for a first reference cell, the first reference cell is a cell of the first cell set other than the target cell, and a second field in the target DCI is used to determine the first reference cell.

In an embodiment, the number of cells included in the first cell set is greater than 1. The target RRC signaling set includes a target RRC signaling subset, all signaling in the target RRC signaling subset is configured for the target cell, and the first RRC signaling is signaling of the target RRC signaling subset. Whether the target DCI includes the target field set depends on configuration of a piece of RRC signaling in the target RRC signaling subset other than the first RRC signaling.

In an embodiment, when the number of cells included in the first cell set is equal to 1 or greater than 1, whether the target DCI includes a second target field set depends on the configuration of the first RRC signaling.

In an embodiment, when the number of cells included in the first cell set is 1 or greater than 1, indication of a third target field set in the target DCI depends on a first parameter set, and the configuration of the first RRC signaling is applied to the first parameter set.

In an embodiment, the number of cells included in the first cell set is greater than 1. The target RRC signaling set includes a target RRC signaling subset, all signaling in the target RRC signaling subset is configured for the target cell, and the first RRC signaling is signaling of the target RRC signaling subset. Whether the target DCI includes the target field set depends on configuration of a piece of RRC signaling in the target RRC signaling subset other than the first RRC signaling.

In an embodiment, the number of cells included in the first cell set is greater than 1. The indication of the third target field set in the target DCI depends on the first parameter set. The target RRC signaling set includes a plurality of pieces of RRC signaling, and the first RRC signaling is one of the plurality of pieces of RRC signaling. The plurality of pieces of RRC signaling are respectively configured for a plurality of cells in the first cell set. Configuration of at least one of the plurality of pieces of RRC signaling is applied to the first parameter set, and the configuration of the plurality of pieces of RRC signaling for the first parameter set is expected to be the same.

A person of ordinary skill in the art may understand that all or a part of the steps in the foregoing methods may be completed by a program instructing relevant hardware, and the program may be stored in a computer-readable storage medium, such as a read-only memory, a magnetic disk, or an optical disc. Optionally, all or a part of the steps in the foregoing embodiments may alternatively be implemented by using one or more integrated circuits. Correspondingly, the modules and units in the foregoing embodiments may be implemented in a form of hardware or software functional modules. This application is not limited to any specific form of combination of software and hardware. The first node device in this application includes, but is not limited to, a wireless communication device such as a mobile phone, a tablet computer, a notebook computer, a network adapter, a low-power-consumption device, an eMTC device, an NB-IoT device, an in-vehicle communication device, an aircraft, an airplane, an uncrewed aerial vehicle, or a remote control plane. The second node device in this application includes, but is not limited to, a wireless communication device such as a mobile phone, a tablet computer, a notebook computer, a network adapter, a low-power-consumption device, an eMTC device, an NB-IoT device, an in-vehicle communication device, an aircraft, an airplane, an uncrewed aerial vehicle, or a remote control plane. The user equipment or UE or terminal in this application includes, but is not limited to, a wireless communication device such as a mobile phone, a tablet computer, a notebook computer, a network adapter, a low-power-consumption device, an eMTC device, an NB-IoT device, an in-vehicle communication device, an aircraft, an airplane, an uncrewed aerial vehicle, or a remote control plane. The base station device or base station or network side device in this application includes, but is not limited to, a device such as a macrocellular base station, a microcellular base station, a home base station, a relay base station, an eNB, a gNB, a transmission reception point TRP, a GNSS, a relay satellite, a satellite base station, an air base station, a test apparatus, test device, or a test meter.

A person skilled in the art should understand that the present invention may be implemented in other specified forms without departing from the core or basic characteristics thereof. Therefore, the currently disclosed embodiments should be considered as descriptive rather than restrictive in all respects. The scope of the present invention is subject to the appended claims rather than the foregoing descriptions, and all modifications within equivalent meanings and ranges thereof are considered to be encompassed therein.

## Claims

1. A first node used in wireless communication, comprising:
a first receiver, configured to receive a target RRC signaling set, and receive target DCI; and
a first transmitter, configured to send a PUSCH in each cell of a first cell set, wherein
the target DCI is used to schedule the PUSCH sent in each cell of the first cell set; the target RRC signaling set comprises first RRC signaling, the first RRC signaling is configured for a target cell, and the target cell is a cell of the first cell set; and whether the target DCI comprises a target field set is related to the number of cells comprised in the first cell set, wherein when the number of cells comprised in the first cell set is 1, whether the target DCI comprises the target field set depends on the configuration of the first RRC signaling; or when the number of cells comprised in the first cell set is greater than 1, whether the target DCI comprises the target field set does not depend on the configuration of the first RRC signaling.

2. The first node according to claim 1, wherein the first RRC signaling is PUSCH-Config.

3. The first node according to claim 1, wherein the first RRC signaling is one of PUSCH-ConfigCommon or PUSCH-ServingCellConfig.

4. The first node according to any one of claims 1 to 3, wherein the number of cells comprised in the first cell set is greater than 1; and the target DCI does not comprise the target field set.

5. The first node according to any one of claims 1 to 4, wherein the number of cells comprised in the first cell set is greater than 1; the target RRC signaling set comprises second RRC signaling; the second RRC signaling is not configured for the target cell; and whether the target DCI comprises the target field set depends on configuration of the second RRC signaling.

6. The first node according to claim 5, wherein the second RRC signaling is configured for a first reference cell, the first reference cell is a cell of the first cell set other than the target cell, and a second field in the target DCI is used to determine the first reference cell.

7. The first node according to any one of claims 1 to 6, wherein the number of cells comprised in the first cell set is greater than 1; the target RRC signaling set comprises a target RRC signaling subset, all signaling in the target RRC signaling subset is configured for the target cell, and the first RRC signaling is signaling of the target RRC signaling subset; and whether the target DCI comprises the target field set depends on configuration of a piece of RRC signaling in the target RRC signaling subset other than the first RRC signaling.

8. A second node used in wireless communication, comprising:
a second transmitter, configured to send a target RRC signaling set, and send target DCI; and
a second receiver, configured to receive a PUSCH in each cell of a first cell set, wherein
the target DCI is used to schedule the PUSCH in each cell of the first cell set; the target RRC signaling set comprises first RRC signaling, the first RRC signaling is configured for a target cell, and the target cell is a cell of the first cell set; and whether the target DCI comprises a target field set is related to the number of cells comprised in the first cell set, wherein when the number of cells comprised in the first cell set is 1, whether the target DCI comprises the target field set depends on the configuration of the first RRC signaling; or when the number of cells comprised in the first cell set is greater than 1, whether the target DCI comprises the target field set does not depend on the configuration of the first RRC signaling.

9. A method for a first node used in wireless communication, comprising:
receiving a target RRC signaling set, and receiving target DCI; and
sending a PUSCH in each cell of a first cell set, wherein
the target DCI is used to schedule the PUSCH sent in each cell of the first cell set; the target RRC signaling set comprises first RRC signaling, the first RRC signaling is configured for a target cell, and the target cell is a cell of the first cell set; and whether the target DCI comprises a target field set is related to the number of cells comprised in the first cell set, wherein when the number of cells comprised in the first cell set is 1, whether the target DCI comprises the target field set depends on the configuration of the first RRC signaling; or when the number of cells comprised in the first cell set is greater than 1, whether the target DCI comprises the target field set does not depend on the configuration of the first RRC signaling.

10. A method for a second node used in wireless communication, comprising:
sending a target RRC signaling set, and sending target DCI; and
receiving a PUSCH in each cell of a first cell set, wherein
the target DCI is used to schedule the PUSCH in each cell of the first cell set; the target RRC signaling set comprises first RRC signaling, the first RRC signaling is configured for a target cell, and the target cell is a cell of the first cell set; and whether the target DCI comprises a target field set is related to the number of cells comprised in the first cell set, wherein when the number of cells comprised in the first cell set is 1, whether the target DCI comprises the target field set depends on the configuration of the first RRC signaling; or when the number of cells comprised in the first cell set is greater than 1, whether the target DCI comprises the target field set does not depend on the configuration of the first RRC signaling.
